# EUROPEAN PATENT APPLICATION

(11) **EP 4 539 015 A1**
(43) Date of publication of application: **16.04.2025**
(21) Application number: 23830384.6
(22) Date of filing: 29.06.2023
(51) Int. Cl.: G08G 1/14

(54) **PARKING POSITION DETERMINATION METHOD AND DEVICE**

(30) Priority: 01.07.2022 CN 202210769849
(71) Applicant: Shenzhen Yinwang Intelligent Technologies Co., Ltd., Shenzhen, Guangdong 518129 (CN)
(72) Inventor: JIN, Zhou, Shenzhen, Guangdong 518129 (CN)
(74) Representative: Gill Jennings & Every LLP
(86) International application number: PCT/CN2023/103667
(87) International publication number: WO 2024/002215

(57) **Abstract**

A parking location determining method and apparatus are provided. The method includes: when a vehicle enters a parking lot, obtaining motion status information and/or ambient environment information of the vehicle in a motion process of the vehicle; and determining, based on the motion status information and/or the ambient environment information of the vehicle, an area in which the vehicle is located in the parking lot. The method may be applied to a new energy vehicle or an intelligent vehicle. When the vehicle enters the parking lot, the motion status information and/or the ambient environment information of the vehicle can be obtained based on a location of the vehicle, and then the area in which the vehicle is located in the parking lot is determined. This can avoid a case in which the location of the vehicle cannot be determined because a building structure of the parking lot, an ambient object, or the like blocks a GNSS signal, so that a user can learn of a parking location of the vehicle insensibly, and vehicle search experience of the user can be improved.

## Description

This application claims priority to Chinese Patent Application No. 202210769849.X, filed with the China National Intellectual Property Administration on July 1, 2022 and entitled "PARKING LOCATION DETERMINING METHOD AND APPARATUS", which is incorporated herein by reference in its entirety.

### TECHNICAL FIELD

Embodiments of this application relate to the field of vehicle technologies, and more specifically, to a parking location determining method and apparatus.

### BACKGROUND

Currently, with continuous growth of a quantity of vehicles, people have an increasingly strong demand for finding a vehicle in a parking lot. Especially for a large parking lot, because terrain of the large parking lot is complex, and signal strength of a global positioning system (global positioning system, GPS) of some indoor parking lots is weak, a location of a vehicle cannot be accurately located, and a user usually can only manually take a photo for recording to assist in vehicle finding. However, the user often forgets to take a photo, and consequently cannot quickly and accurately find the parking location of the vehicle.

### SUMMARY

Embodiments of this application provide a parking location determining method and apparatus. When a vehicle enters a parking lot, information about an area in which the vehicle is located in the parking lot can be obtained based on a location of the vehicle, to determine a parking location of the vehicle. This helps improve vehicle search experience of a user.

According to a first aspect, a parking location determining method is provided. The method includes: when a vehicle enters a parking lot, obtaining motion status information and/or ambient environment information of the vehicle in a motion process of the vehicle; and determining, based on the motion status information and/or the ambient environment information of the vehicle, an area in which the vehicle is located in the parking lot.

For example, after the vehicle enters the parking lot until the vehicle completes parking in a parking space, in other words, in a process from entering the parking lot to search for the parking space by the vehicle to completing parking (also referred to as parking) by the vehicle, the vehicle may pass through one or more parking floors and/or one or more parking zones. In the process, an area in which the vehicle is located in the parking lot may be determined based on a location of the vehicle and the motion status information and/or the ambient environment information of the vehicle.

For example, the motion status information of the vehicle may include pose information of the vehicle, for example, pitch angle information of the vehicle and location information of the vehicle. For another example, the location information of the vehicle may be a location of the vehicle determined based on a global navigation satellite system (global navigation satellite system, GNSS) signal. For example, the ambient environment information may include original environment data captured by a sensing sensor on a vehicle, for example, point cloud information captured by a radar, and image information captured by a camera, and may also include data obtained by performing filtering, noise reduction, feature extraction, and the like on the original environment data.

In this embodiment of this application, when the vehicle enters the parking lot, the motion status information and/or the ambient environment information of the vehicle can be obtained based on the location of the vehicle, and then the area in which the vehicle is located in the parking lot is determined. This can avoid a case in which the location of the vehicle cannot be determined because a building structure of the parking lot, an ambient object, or the like blocks the GNSS signal, so that a user can learn of a parking location of the vehicle insensibly, and vehicle search experience of the user can be improved.

With reference to the first aspect, in some implementations of the first aspect, the method may further include: obtaining the GNSS signal; and determining a parking location positioning mode based on signal quality of the GNSS signal, where the parking location positioning mode may include a first positioning mode or a second positioning mode; and during working in the first positioning mode, the parking location of the vehicle is determined based on the GNSS signal; and the determining, based on the motion status information and/or the ambient environment information of the vehicle, an area in which the vehicle is located in the parking lot includes: when it is determined that the parking positioning mode is the second positioning mode, determining, based on the motion status information and/or the ambient environment information of the vehicle, the area in which the vehicle is located in the parking lot.

For example, in a motion process of the vehicle, the area in which the vehicle is located in the parking lot may be determined based on the motion status information and/or the ambient environment information of the vehicle. In this way, when the vehicle is parked, a parking floor on which, a parking zone in which, and a parking space in which the vehicle is located may be determined, in other words, at least one of the parking floor, the parking zone, and the parking space of the vehicle may be determined based on the motion status information and/or the ambient environment information of the vehicle.

For example, the signal quality of the GNSS signal may be indicated by signal strength, a GNSS signal status, or the like. For example, when the signal strength of the obtained GNSS signal is greater than or equal to a preset threshold (for example, -124 dBm or -120 dBm), the location of the vehicle may be determined based on the GNSS signal.

In this embodiment of this application, the signal quality of the GNSS signal is determined, and then the parking location positioning mode can be flexibly determined based on different scenarios. This helps implement requirements for parking positioning solutions in different scenarios, so that when the parking location is located in a scenario like an outdoor parking lot in which the GNSS signal is good, the parking location may be determined with low resource consumption, and the user can quickly find the vehicle based on the map and the parking location determined based on the GNSS signal. In addition, when the parking location is located in a scenario like an indoor parking lot in which the GNSS signal is poor, the parking floor, the parking area, the parking space, and the like are determined, so that the user can quickly find the vehicle. This improves user experience.

With reference to the first aspect, in some implementations of the first aspect, the parking lot includes an inter-floor passage, and the determining, based on the motion status information and/or the ambient environment information of the vehicle, an area in which the vehicle is located in the parking lot may include: determining, based on the ambient environment information, a first intersection through which the vehicle passes, where the first intersection may include an intersection between the inter-floor passage and a floor connected to the inter-floor passage; and determining, based on the first intersection through which the vehicle passes, the parking floor on which the vehicle is located in the parking lot, where the parking floor is a floor on which the vehicle is located when the vehicle is in a parking pose.

For example, the first intersection may include the intersection between the inter-floor passage and the floor connected to the inter-floor passage. In other words, the first intersection may be an entrance/exit of the inter-floor passage. For example, when the vehicle travels in the inter-floor passage, the exit of the inter-floor passage in a traveling direction of the vehicle may be determined as the first intersection. For another example, when the vehicle travels on any floor, the entrance of the inter-floor passage into which the vehicle travels may be determined as the first intersection.

For example, a road feature and/or a passage feature may be determined based on the ambient environment information, and the first intersection is determined based on the road feature and/or the passage feature. For example, an intersection may be detected based on an image obtained by a camera sensor, and whether the intersection is the first intersection may be determined based on the pitch angle information of the vehicle. For another example, when the vehicle travels in the passage, a side wall of the passage at the exit may be recognized based on data captured by a radar sensor and/or a camera sensor, and then the first intersection may be determined. For another example, in a process from traveling into the parking lot by the vehicle to traveling into the target parking space by the vehicle, a plurality of intersections through which the vehicle passes in a traveling process may be detected in real time, and the first intersection may be determined from the plurality of intersections based on the pitch angle information of the vehicle and time periods in which the vehicle passes through the plurality of intersections. It should be understood that the foregoing method for determining the first intersection is merely an example. This is not limited in embodiments of this application.

For example, a relative change of a floor may be determined based on the first intersection, and a floor location at which the vehicle is currently located may be determined.

In this embodiment of this application, the parking floor is determined by determining a quantity of first intersections through which the vehicle passes, so that impact of a building structure of the indoor parking lot and the like on recognizing the parking floor can be reduced. The method is applicable to a wider scenario. In this way, accuracy of the determined parking floor can be improved.

With reference to the first aspect, in some implementations of the first aspect, the ambient environment information includes an image of a first passage, the first passage includes the inter-floor passage through which the vehicle passes, and the determining, based on the motion status information and/or the ambient environment information of the vehicle, an area in which the vehicle is located in the parking lot may include: determining a passage guidance sign based on the image of the first passage; and determining the parking floor based on the passage guidance sign.

For example, the passage guidance sign may indicate a passage mode in the inter-floor passage. For example, one or more signs may be obtained through recognition based on the image of the first passage. For example, the passage guidance sign may be ">>>" or "→". For another example, the passage guidance sign may be "To the basement level 1" or ">>>To the basement level 1>>>".

In some possible implementations, a floor keyword may be determined based on the passage guidance sign. For example, the floor keyword may be "floor", "B", or the like. When it is determined that the passage guidance sign (for example, "To the basement level 1", "To B1", or "xxx floor") includes the floor keyword, a floor sign may be determined based on the keyword. For another example, after confidence of the passage guidance sign is determined, for example, a passage guidance sign including only a symbol may be screened out, and then a floor sign may be determined based on the floor keyword. For another example, when the vehicle passes through a plurality of inter-floor passages, a sign of the parking floor may be determined based on a time sequence of obtained images of the plurality of inter-floor passages.

In some possible implementations, a location of the passage guidance sign may be determined based on the image of the first passage, and a floor sign may be determined based on the location of the passage guidance sign. For example, in a scenario in which the passage guidance sign is located on a road surface of the inter-floor passage, only a passage guidance sign on a lane in which the vehicle is located may be obtained. For another example, when the passage guidance sign is located on a side wall of the inter-floor passage, only a sign on a passage inner wall on a front passenger side of the vehicle may be obtained.

In this embodiment of this application, the floor sign is determined based on the location of the passage guidance sign. This can avoid misjudgment of the floor sign in a case of a bidirectional traveling passage, and improve accuracy of recognizing the parking floor. Further, the parking floor is determined based on the first intersection and the passage guidance sign. In this way, information in the inter-floor passage and information about the entrance/exit of the inter-floor passage can be fully used, so that accuracy of the determined parking floor is improved.

Because there is large space in the parking floor, and there may be a large quantity of signs, it may be difficult to accurately recognizing the sign of the parking floor. However, in this embodiment of this application, the passage guidance sign is determined based on the image of the first passage, and the parking floor is determined based on the passage guidance sign. This can reduce difficulty in screening the sign of the parking floor, and can also avoid impact of a building structure of the parking lot on recognizing the parking floor, so that accuracy of determining the parking floor can be improved.

With reference to the first aspect, in some implementations of the first aspect, the method may further include: starting a second sensor when it is determined that the vehicle is located in the inter-floor passage; and controlling the second sensor to capture the ambient environment information.

For example, the second sensor may include one or more sensors of a same type or different types. For example, the second sensor may include a plurality of camera sensors mounted at different locations of the vehicle. For another example, the second sensor may include one or more mounted camera sensors and one or more radar sensors.

In this embodiment of this application, when it is determined that the vehicle is located in the inter-floor passage, the second sensor is started and controlled to capture the ambient environment information. This can reduce resource consumption of the second sensor, and to some extent, increase an endurable mileage of the vehicle like a vehicle driven by a battery.

With reference to the first aspect, in some implementations of the first aspect, the motion status information of the vehicle includes pitch angle information of the vehicle within first duration, and the determining, based on the motion status information and/or the ambient environment information of the vehicle, an area in which the vehicle is located in the parking lot may include: determining, based on the pitch angle information of the vehicle within the first duration, a quantity of inter-floor passages through which the vehicle passes, where a start moment of the first duration is earlier than or equal to a moment at which the vehicle travels into the 1^{st} inter-floor passage, and an end moment of the first duration is equal to or later than a moment at which the vehicle travels onto the parking floor; and determining the parking floor based on the quantity of inter-floor passages through which the vehicle passes.

In this embodiment of this application, the parking floor is determined based on the pitch angle information of the vehicle. Because obtaining of the pitch angle information may not depend on the radar sensor or the camera sensor, the method is applicable to a vehicle with a small quantity of sensing sensors and a vehicle with low configuration. In addition, resource consumption of the radar sensor, the camera sensor, and the like in a process of determining the parking location can be reduced. For an electric vehicle, a new energy vehicle, and the like, power consumption of the vehicle can be reduced, and an endurance mileage of the vehicle can be increased.

With reference to the first aspect, in some implementations of the first aspect, the determining, based on the motion status information and/or the ambient environment information of the vehicle, an area in which the vehicle is located in the parking lot includes: detecting a marker in a parking zone based on the ambient environment information; and determining the parking zone based on an image of the marker.

For example, the parking zone may be a parking area in the parking lot, like "Area A", "H-17", "B-17", "H-10-2", or "Area xx".

For example, the marker may be a parking lot column, an inner wall of the parking lot, a sign, a hung or posted sign, or the like. For example, the parking lot column may be detected based on data captured by the camera sensor and the radar sensor. When the parking lot column is detected, a sign of the parking zone may be obtained based on an image of the parking lot column, or the like.

There may be a plurality of types of sign information in an environment of the parking lot, and the environment is complex. Therefore, accuracy may be low when information like the sign of the parking zone is obtained through screening based on image information of the parking lot. In this embodiment of this application, marker detection is performed, and the sign of the parking zone is obtained based on the marker, so that a range of recognizing the sign of the parking zone can be reduced. This can reduce interference from invalid information, and improve accuracy of the obtained sign of the parking zone.

In some possible implementations, the marker in the parking zone may be a column.

In this embodiment of this application, columns in the parking lot are distributed regularly with high density, and there is a high probability that the sign of the parking zone is arranged on the column. In this way, when the column is detected, the parking zone is determined by obtaining an image of the column. This can reduce impact of an irrelevant sign on recognizing the parking zone, to improve accuracy of determining the parking zone, and can reduce overheads in a process of recognizing the parking zone. Further, when the sign of the parking zone cannot be recognized, the parking area may be determined based on the marker. This helps the user learn of the parking area in which the vehicle is located without taking a photo of the parking area by using a terminal device like a mobile phone, so that the user can find the vehicle.

With reference to the first aspect, in some implementations of the first aspect, the ambient environment information includes a first parking space image, the first parking space image includes a first parking space, the first parking space includes a parking space in which the vehicle is located when the vehicle is in the parking pose, and the determining, based on the motion status information and/or the ambient environment information of the vehicle, an area in which the vehicle is located in the parking lot includes: determining a sign of the first parking space based on the first parking space image.

For example, in a motion process of the vehicle, the vehicle may not be located in the first parking space. In this case, the first parking space is equivalent to a parking space into which the vehicle expects to travel. Therefore, the first parking space may also be referred to as a target parking space, and the first parking space image may include a part or all of the first parking space. For example, the first parking space image may include three parking spaces, including all areas of one parking space and some areas of two parking spaces, and the three parking spaces include the target parking space. For another example, the first parking space image may include a partial area of the first parking space. It should be understood that the foregoing description of the first parking space image is merely an example. This is not limited in embodiments of this application.

In some possible implementations, the first parking space image may include an image obtained by performing image processing on images captured by a plurality of camera sensors. For example, the first parking space image may be an image obtained by performing image stitching processing on images captured by a plurality of cameras, or may be an image obtained by an around view monitor system, or may be an image obtained by using a transparent chassis function. It should be understood that the foregoing description of the first parking space image is merely an example for ease of description. This is not limited in embodiments of this application.

In some possible implementations, the method may further include: obtaining parking space indication information, where the parking space indication information indicates an area in which the first parking space is located; and the determining a sign of the first parking space based on the first parking space image includes: determining the sign of the first parking space based on the parking space indication information and the first parking space image.

For example, image information of the first parking space at a plurality of moments may be obtained, a plurality of pieces of sign information may be determined based on the image information of the first parking space at the plurality of moments, and the sign of the first parking space may be obtained based on the plurality of pieces of sign information. For example, the sign of the first parking space may be determined based on confidence of the plurality of signs.

In some possible implementations, the plurality of pieces of sign information may include at least two parking space incomplete signs, and the parking space incomplete sign may include a part of the sign of the first parking space. A plurality of parking space incomplete signs in the at least two parking space incomplete signs may be concatenated and fused, to obtain the sign of the first parking space. For example, the parking space incomplete signs may include "A10" and "106". In this case, it may be determined, by performing concatenation and fusion on the parking space incomplete signs, that the sign of the first parking space is "A106".

In some possible implementations, the sign of the first parking space may be determined based on confidence of the sign information. For example, sign information like "Fire passage", "A106", "Dedicated parking space", and "→" may be recognized based on the first parking space image. It may be considered that confidence of a sign like "Fire passage" or "Dedicated parking space" including only a word is low, and it may be considered that confidence of a sign including only a symbol like "→" is low. In this case, the sign of the first parking space may be determined based on the confidence of the sign information.

In this embodiment of this application, the parking space in which the vehicle is located may be determined by determining the sign of the first parking space. Further, accuracy of the determined sign of the first parking space can be improved based on the parking space indication information.

With reference to the first aspect, in some implementations of the first aspect, the sign of the first parking space includes an area keyword, and the method may further include: determining the parking zone based on the image of the marker and the area keyword.

For example, the area keyword may be a keyword included in both the sign of the parking space and a sign of the parking area. For example, if the vehicle is located in an area A in the parking area, and the sign of the first parking space is A104, it may be considered that the area keyword is A. For another example, if the sign of the first parking space is W104, and a sign of a parking space adjacent to the first parking space is W103, because the two signs include a same keyword W, the keyword W may be used as the area keyword. It should be understood that the foregoing description of the area keyword is merely an example. This is not limited in embodiments of this application.

In this embodiment of this application, the sign of the first parking space is used, and when the sign includes the area keyword, accuracy of recognizing the sign of the parking area can be improved based on the area keyword and the image of the marker in the parking area. This can improve accuracy of recognizing the parking area.

With reference to the first aspect, in some implementations of the first aspect, the obtaining motion status information and/or ambient environment information of the vehicle includes: obtaining a first instruction, where the first instruction indicates that the user of the vehicle has a parking intention; and obtaining the motion status information and/or the ambient environment information of the vehicle based on the first instruction.

For example, the first instruction may be one or more of instructions such as a voice instruction, a touch instruction, a button instruction, and a gesture instruction. For example, in voice interaction, when a voice instruction like "I want to park", "Automated parking", or "Drive into a parking space" delivered by the user is detected, the motion status information and/or the ambient environment information of the vehicle may be obtained. Further, the vehicle having an assisted parking function may control, based on a detected idle target parking space, the vehicle to travel into the idle target parking space, and obtain information about the target parking space (for example, a sign, an image, and the like of the target parking space). For another example, the motion status information and/or the ambient environment information of the vehicle may be obtained, for example, image information of an ambient idle parking space is obtained, based on an indication of the user for a parking space (for example, a parking space indicated by the user by using a physical or a virtual button, or a parking space indicated by the user by using a voice instruction). For another example, the user may indicate, by using a mid-air gesture, to trigger an automated parking function. After receiving the mid-air gesture, the vehicle determines that the user has the parking intention, and obtains the motion status information and/or the ambient environment information of the vehicle based on the mid-air gesture.

With reference to the first aspect, in some implementations of the first aspect, the obtaining motion status information and/or ambient environment information of the vehicle includes: obtaining the motion status information and/or the ambient environment information of the vehicle when it is detected that the vehicle enters a parking state.

For example, whether the vehicle enters the parking state may be determined based on a control signal of the vehicle. For example, when the vehicle is located in the parking lot, if it is detected that a gear of the vehicle is adjusted to a reverse gear, it may be considered that the vehicle enters the parking state, and then information about an idle target parking space around the vehicle may be obtained. For another example, when the vehicle is located in the parking lot, if it is detected that there is an acting force on a brake pedal or an accelerator pedal and a vehicle speed is controlled to fall within a preset vehicle speed (for example, 3 km/h), it may be considered that the vehicle enters the parking state, then information about an idle target parking space around the vehicle may be obtained, and information about the parking zone in which the vehicle is located may also be obtained. For another example, a parking function of the vehicle may alternatively be implemented by an autonomous driving system or an advanced assisted driving system. After it is detected that the vehicle enables automated parking and assisted parking (or referred to as automated parking and assisted parking) functions, or after it is detected that the user indicates to enable automated parking and assisted parking functions, it is considered that the vehicle enters the parking state, and then information about an idle target parking space around the vehicle may be obtained. For another example, when it is detected that the vehicle is in the parking state, a vehicle-mounted sensor may be controlled to adjust a range of the vehicle-mounted sensor, to capture information about the target parking space. For example, the vehicle-mounted sensor may have an adjustable support, and a sensing range of the vehicle-mounted sensor may be adjusted by adjusting a posture of the support. The control signal of the vehicle may be a control signal of the vehicle, for example, a controller area network (controller area network, CAN) signal or an Ethernet signal.

In this embodiment of this application, when it is determined that the user has the parking intention, the motion status information and/or the ambient environment data of the vehicle are/is obtained. In this way, a parking occasion can be recognized. This can reduce invalid information in the obtained environment data, improve accuracy of the determined parking location, and also reduce resource overheads used for determining the parking location.

For example, the obtaining the ambient environment information of the vehicle when it is detected that the vehicle enters a parking state may include: when it is detected that the vehicle enters the parking state, controlling a first sensor to be started, and controlling the first sensor to capture the ambient environment information.

Similarly, the obtaining the ambient environment information based on the first instruction may include: when the first instruction is detected, controlling the first sensor to be started, and controlling the first sensor to capture the ambient environment information.

For example, the first sensor may include one or more sensors of a same type or different types. For example, the first sensor may include a plurality of camera sensors mounted at different locations of the vehicle. For another example, the first sensor may include one or more mounted camera sensors and one or more radar sensors. It should be understood that the first sensor and the second sensor are merely used for differentiation. To be specific, a sensor enabled when the parking intention of the user is detected may be the same as or different from a sensor enabled when it is determined that the vehicle is located in the inter-floor passage.

In this embodiment of this application, when it is determined that the user has the parking intention, the sensor is controlled to capture the ambient environment information. This can reduce resource overheads of the first sensor configured to capture the ambient environment information, and reduce invalid information in obtained data, so that accuracy of recognizing the parking area, the first parking space, and the parking floor is improved.

With reference to the first aspect, in some implementations of the first aspect, the method may further include: sending a first message, where the first message indicates at least one of the parking area, the first parking space, and the parking floor.

For example, the first message may be sent after the parking location is determined. For example, during working in the first positioning mode, the first message may indicate the parking location determined based on the GNSS signal. For another example, during working in the second positioning mode, the first message may indicate at least one of the parking area, the first parking space, and the parking floor. For another example, the first message may indicate, by using longitude and latitude information and altitude information that indicate the parking location or in another manner, the parking location determined based on the GNSS signal.

For example, the vehicle may send the first message. Correspondingly, the terminal device like the mobile phone may receive the first message, to learn of the parking location of the vehicle.

In this embodiment of this application, the first message may be sent to indicate the parking location to the terminal device like the mobile phone. In this way, in a scenario like an indoor parking lot, the user can learn of the parking location of the vehicle without taking a photo of the parking location of the vehicle by using the terminal device like the mobile phone. This can improve user experience. Alternatively, in a scenario like an outdoor parking lot in which a GPS signal is good, the terminal device like the mobile phone may determine the parking location based on the GPS signal. This helps the user perform navigation to find the vehicle based on the location and the map, to improve user experience.

For example, the terminal device like the mobile phone may display the parking location information of the vehicle when receiving the first message, or may display the parking location of the vehicle when the user opens an application, or may display the parking location of the vehicle on a specific interface of the mobile phone (for example, a leftmost screen or a smart assistant page of the mobile phone).

In some possible implementations, the first message may be an encrypted message.

For example, the first message may be encrypted in a manner like symmetric encryption or asymmetric encryption.

In this embodiment of this application, the first message is encrypted, so that data security in communication is ensured.

With reference to the first aspect, in some implementations of the first aspect, the sending a first message may include: sending the first message when no user is detected in a cockpit of the vehicle.

For example, whether there is a user in the cockpit may be determined based on data captured by a seat pressure sensor, a camera sensor in the cockpit, and the like.

In this embodiment of this application, when it is determined that there is no user in the cockpit of the vehicle, the first message is sent, so that a frequency of sending the first message can be reduced, and then traffic used in communication is reduced.

In some possible implementations, the first message may be sent when it is determined that the vehicle completes parking. For example, the first message may be sent when it is determined that the vehicle is powered off, or it is detected that the vehicle is turned off, or it is detected that a parking brake is in a working state, or the like.

In some possible implementations, a parking location request message may be received, and the first information may be sent based on the parking location request message. For example, the terminal device like the mobile phone may send the parking location request message. The first message may be sent after the parking location request message is received. Correspondingly, the terminal device like the mobile phone may obtain the first message.

In some possible implementations, the parking location request information may carry identity information of a requester, and the sending the first message based on the parking location request information may include: determining location indication information based on the identity information of the requester; and sending the first message based on the location indication information.

For example, a permission of the requester may be determined based on the identity information of the requester. For example, when the user is an unauthorized user, the first prompt information may not be sent. For another example, the user is an authorized user, for example, when it is determined that the requester is a vehicle owner, the first prompt information may include an image and a sign of the parking space, an image and a sign of the parking zone, and an image and a sign of the parking floor. For another example, when the requester has only some permissions, content included in the first message may be determined based on the permissions of the requester. To be specific, the first message sent based on the identity and the permissions of the requester may include different content, and the content included in the first message may be preset, or may be determined based on content requested by the requester.

With reference to the first aspect, in some implementations of the first aspect, the determining a parking location positioning mode based on signal quality of the GNSS signal may include: when the signal quality of the GNSS signal is greater than or equal to a first threshold, determining that the parking location positioning mode is the first positioning mode; or when the signal quality of the GNSS signal is less than or equal to the first threshold, determining that the parking location positioning mode is the second positioning mode.

For example, the signal quality of the GNSS signal may be indicated by signal strength, a quantity of serving satellites, or the like. For example, when the signal strength indicates the signal quality of the GNSS signal, for example, the first threshold may be -130 dBm, -125 dBm, or the like, or when the signal strength of the GNSS signal may be greater than or equal to 125 dBm (or -123 dBm), and duration is greater than or equal to 5 seconds (or 3 seconds), it is considered that the signal quality of the GNSS signal is greater than or equal to the first threshold. For another example, when a quantity of satellites above a field of view of a current antenna is not less than a preset quantity (for example, 5 or 6), it may be considered that the signal quality of the GNSS signal is greater than or equal to the first threshold. It should be understood that the foregoing description of the first threshold is merely an example, and the first threshold may alternatively be determined in another manner. This is not limited in embodiments of this application.

With reference to the first aspect, in some implementations of the first aspect, the method may further include: obtaining a first status parameter, where the first status parameter includes at least one of a distance between the vehicle and an entrance of the parking lot, a vehicle speed of the vehicle, and the signal quality of the GNSS signal; performing parking lot marker detection when the first status parameter meets a preset condition; and when a parking lot marker is detected, determining that the vehicle is located in the parking lot.

For example, the first status parameter may be a combination of parameters such as the distance between the vehicle and the entrance of the parking lot, the vehicle speed, and the signal quality of the GNSS signal; or the first status parameter may be a parameter other than parameters such as the distance between the vehicle and the entrance of the parking lot, the vehicle speed, and the signal quality of the GNSS signal. Correspondingly, the preset condition may be related to a parameter included in the first status parameter. For example, the first status parameter may alternatively be longitude and latitude information. An area in which the parking lot is located may be learned of based on the map, and whether the vehicle is located around the parking lot may be determined based on longitude and latitude of the vehicle.

In this embodiment of this application, when the first status parameter meets the preset condition, the environment data is obtained to perform parking lot marker detection. In this way, in a process of determining whether the vehicle is located in the parking lot area, dependence on the sensor to capture the environment data can be reduced, and working time of the sensor can be reduced. This reduces power consumption of the sensor, and also helps the vehicle enable a corresponding functional module after it is determined that the vehicle is located in the parking lot area.

According to a second aspect, a vehicle location determining apparatus is provided. The apparatus includes: an obtaining module, configured to: when a vehicle enters a parking lot, obtain motion status information and/or ambient environment information of the vehicle in a motion process of the vehicle; and a processing module, configured to determine, based on the motion status information and/or the ambient environment information of the vehicle, an area in which the vehicle is located in the parking lot

With reference to the second aspect, in some implementations of the second aspect, the obtaining module may be configured to obtain a GNSS signal. The processing module may be configured to determine a parking location positioning mode based on signal quality of the GNSS signal, where the parking location positioning mode may include a first positioning mode or a second positioning mode; and during working in the first positioning mode, a parking location of the vehicle is determined based on the GNSS signal. The processing module may be specifically configured to: when it is determined that the parking location positioning mode is the second positioning mode, determine, based on the motion status information and/or the ambient environment information of the vehicle, the area in which the vehicle is located in the parking lot.

For example, at least one of a parking floor, a parking zone, and a parking space of the vehicle may be determined based on the motion status information and/or the ambient environment information of the vehicle.

With reference to the second aspect, in some implementations of the second aspect, the processing module may be specifically configured to: determine, based on the ambient environment information, a first intersection through which the vehicle passes, where the first intersection may include an intersection between an inter-floor passage and a floor connected to the inter-floor passage; and determine, based on the first intersection through which the vehicle passes, the parking floor on which the vehicle is located in the parking lot, where the parking floor is a floor on which the vehicle is located when the vehicle is in a parking pose.

With reference to the second aspect, in some implementations of the second aspect, the obtaining module may be specifically configured to obtain an image of a first passage, where the first passage may include the inter-floor passage through which the vehicle passes. The processing module may be specifically configured to: determine a passage guidance sign based on the image of the first passage; and determine the parking floor based on the passage guidance sign.

With reference to the second aspect, in some implementations of the second aspect, the processing module may be further configured to: start a second sensor when it is determined that the vehicle is located in the inter-floor passage; and control the second sensor to capture the ambient environment information.

For example, that the processing module is configured to: start the second sensor, and control the second sensor to capture the ambient environment information may be directly controlling the second sensor to be started and capture the ambient environment information, or may be controlling, by using another apparatus, the second sensor to be started and capture the ambient environment information. When the second sensor is in an on state, the second sensor may be controlled to continue to be in the on state and capture the ambient environment information. This is not limited in embodiments of this application.

With reference to the second aspect, in some implementations of the second aspect, the obtaining module may be specifically configured to obtain pitch angle information of the vehicle within first duration, where a start moment of the first duration is earlier than or equal to a moment at which the vehicle travels into the 1^{st} inter-floor passage, and an end moment of the first duration is equal to or later than a moment at which the vehicle travels onto the parking floor. The processing module may be specifically configured to determine, based on the pitch angle information of the vehicle within the first duration, a quantity of inter-floor passages through which the vehicle passes; and determine the parking floor based on the quantity of inter-floor passages through which the vehicle passes.

With reference to the second aspect, in some implementations of the second aspect, the parking location positioning mode is the second positioning mode, and the processing module may be specifically configured to: detect a marker in a parking zone based on the ambient environment information, where the marker may include a column; and determine the parking zone based on an image of the marker.

With reference to the second aspect, in some implementations of the second aspect, the obtaining module may be specifically configured to: obtain a first parking space image, where the first parking space image includes a first parking space, and the first parking space includes a parking space in which a vehicle is located when the vehicle is in the parking pose. The processing module may be specifically configured to determine a sign of the first parking space based on the first parking space image.

With reference to the second aspect, in some implementations of the second aspect, the sign of the first parking space includes an area keyword, and the processing module may be specifically configured to determine the parking zone based on the image of the marker and the area keyword.

With reference to the second aspect, in some implementations of the second aspect, the obtaining module may be further configured to obtain a first instruction, where the first instruction indicates that a user of the vehicle has a parking intention. The obtaining module may be specifically configured to obtain the motion status information and/or the ambient environment information of the vehicle based on the first instruction.

With reference to the second aspect, in some implementations of the second aspect, the obtaining module may be specifically configured to obtain the motion status information and/or the ambient environment information of the vehicle when it is detected that the vehicle enters a parking state.

For example, the processing module may be further configured to detect whether the vehicle enters the parking state, for example, may detect, based on a control signal of the vehicle, whether the vehicle enters the parking state.

With reference to the second aspect, in some implementations of the second aspect, the apparatus may further include a sending module. The sending module may be configured to send a first message, where the first message may indicate at least one of the parking zone, the first parking space, and the parking floor.

For example, the sending module may be configured to send the first message after it is determined the parking location of the vehicle. For example, during working in the first positioning mode, the first message may indicate the parking location determined based on the GNSS signal. For another example, during working in the second positioning mode, the first message may indicate at least one of the parking zone, the first parking space, and the parking floor.

With reference to the second aspect, in some implementations of the second aspect, the first message may be an encrypted message.

With reference to the second aspect, in some implementations of the second aspect, the sending module may be specifically configured to send the first message when no user is detected in a cockpit of the vehicle.

In some possible implementations, the first message may be sent when it is detected that the vehicle completes parking.

In some possible implementations, the apparatus may further include a receiving module. The receiving module may be configured to receive parking location request information, where the parking location request information may be used to request the parking location of the vehicle. The sending module may be specifically configured to send the first message based on the parking location request information.

In some possible implementations, the parking location request information carries identity information of a requester, and the sending module may be specifically configured to send the first message based on the identity information of the requester.

With reference to the second aspect, in some implementations of the second aspect, the processing module may be specifically configured to: when the signal quality of the GNSS signal is greater than or equal to a first threshold, determine that the parking location positioning mode is the first positioning mode; or when the signal quality of the GNSS signal is less than or equal to the first threshold, determine that the parking location positioning mode is the second positioning mode.

With reference to the second aspect, in some implementations of the second aspect, the obtaining module may be further configured to obtain a first status parameter, where the first status parameter may include at least one of a distance between the vehicle and an entrance of the parking lot, a vehicle speed, and the signal quality of the GNSS signal. The processing module may be further configured to: perform parking lot marker detection when the first status parameter meets a preset condition; and when a parking lot marker is detected, determine that the vehicle is located in a parking lot area.

According to a third aspect, a method for determining a parking floor is provided. The method includes: obtaining ambient environment information; determining, based on the ambient environment information, a first intersection through which a vehicle passes; and determining the parking floor based on the first intersection through which the vehicle passes.

For example, based on the ambient environment information, the first intersection through which the vehicle passes before the vehicle is in a parking pose may be determined, or the first intersection through which the vehicle passes before a parking operation may be determined.

In this embodiment of this application, the parking floor is determined by determining a quantity of first intersections through which the vehicle passes, so that impact of a building structure of the indoor parking lot and the like on recognizing the parking floor can be reduced. The method is applicable to a wider scenario. In this way, accuracy of the determined parking floor can be improved.

With reference to the third aspect, in some implementations of the third aspect, the determining the parking floor based on the first intersection through which the vehicle passes may include: determining a relative change of a floor based on the determined first intersection; and determining the parking floor based on the relative change of the floor.

For example, the relative change of the floor on which the vehicle is located before the vehicle travels onto the parking floor may be determined based on the determined first intersection, and the parking floor may be determined based on the relative change of the floor.

With reference to the third aspect, in some implementations of the third aspect, the method may further include: starting a second sensor when it is determined that the vehicle is located in an inter-floor passage; and controlling the second sensor to capture the ambient environment information, where the ambient environment information may be used to determine the first intersection.

For example, it may be determined, based on pitch angle information of the vehicle, that the vehicle is located in the inter-floor passage.

In this embodiment of this application, when it is determined that the vehicle is located in the inter-floor passage, the second sensor is started and controlled to capture the ambient environment information. This can reduce resource consumption of the second sensor, and to some extent, increase an endurable mileage of the vehicle like a vehicle driven by a battery.

With reference to the third aspect, in some implementations of the third aspect, the method may further include: sending a parking floor indication message after the parking floor is determined, where the parking floor indication message may indicate the parking floor.

In this embodiment of this application, the parking floor indication message is sent after the parking floor is determined, so that the user can learn of the parking floor without taking a photo of the parking floor by using a terminal device like a mobile phone or a tablet computer. This can improve user experience.

According to a fourth aspect, another method for determining a parking floor is provided. The method includes: obtaining an image of a first passage, where the first passage may include an inter-floor passage through which a vehicle passes; determining a passage guidance sign based on the image of the first passage; and determining the parking floor based on the passage guidance sign.

Because there is large space in the parking floor, and there may be a large quantity of signs, it may be difficult to accurately recognizing the sign of the parking floor. However, in this embodiment of this application, the passage guidance sign is determined based on the image of the first passage, and the parking floor is determined based on the passage guidance sign. This can reduce difficulty in screening the sign of the parking floor, and can also avoid impact of a building structure of the parking lot on recognizing the parking floor, so that accuracy of determining the parking floor can be improved.

With reference to the fourth aspect, in some implementations of the fourth aspect, the method may further include: starting a second sensor when it is determined that the vehicle is located in the inter-floor passage; and controlling the second sensor to capture ambient environment information, where the ambient environment information may be used to determine a first intersection.

With reference to the fourth aspect, in some implementations of the fourth aspect, the method may further include: sending a parking floor indication message after the parking floor is determined, where the parking floor indication message may indicate the parking floor.

In some possible implementations, when it is determined that the passage guidance sign includes a floor keyword, a floor sign may be determined based on the passage guidance sign.

In some possible implementations, a location of the passage guidance sign may be determined based on the image of the first passage, and the floor sign may be determined based on the location of the passage guidance sign. For example, in a scenario in which the passage guidance sign is located on a road surface of the inter-floor passage, only a passage guidance sign on a lane in which the vehicle is located may be obtained. For another example, when the passage guidance sign is located on a side wall of the inter-floor passage, only a sign on a passage inner wall on a front passenger side of the vehicle may be obtained.

In this embodiment of this application, the floor sign is determined based on the location of the passage guidance sign. This can avoid misjudgment of the floor sign in a case of a bidirectional traveling passage, and improve accuracy of recognizing the parking floor.

According to a fifth aspect, another method for determining a parking floor is provided. The method includes: obtaining pitch angle information within first duration, where a start moment of the first duration may be earlier than or equal to a moment at which a vehicle travels into the 1^{st} inter-floor passage, and an end moment of the first duration may be equal to or later than a moment at which the vehicle travels onto the parking floor; and determining the parking floor based on the pitch angle information within the first duration.

For example, the pitch angle information of the vehicle may be obtained in real time before the vehicle is in a parking pose. For example, data captured by a sensor like an IMU may be obtained in real time, and real-time pitch angle data is determined based on the data.

For example, the moment at which the vehicle travels into the 1^{st} inter-floor passage may be determined based on the real-time pitch angle information of the vehicle, and a moment at which the vehicle travels out of the inter-floor passage for the last time before the vehicle is in the parking pose may also be determined. In this way, the first duration may be determined. For example, when an apparatus that performs the method needs to obtain the pitch angle information from another apparatus, the another apparatus may provide the pitch angle information of the vehicle within the duration for the apparatus after determining the first duration. This can reduce a data amount of communication between the apparatus and the another apparatus.

With reference to the fifth aspect, in some implementations of the fifth aspect, the determining the parking floor based on the pitch angle information within the first duration may include: determining, based on the pitch angle information within the first duration, a quantity of inter-floor passages through which the vehicle passes; and determining the parking floor based on the quantity of inter-floor passages through which the vehicle passes. For example, a relative change of a floor may be determined based on the pitch angle information within the duration. For example, when a pitch angle of the vehicle is greater than or equal to an angle threshold, it may be determined that the vehicle is located in the inter-floor passage, and then the relative change of the floor may be determined based on the quantity of inter-floor passages through which the vehicle passes. For another example, a passage through which the vehicle passes in an uphill phase may be determined as the passage through which the vehicle passes in a positive direction, the quantity of inter-floor passages through which the vehicle passes may be denoted as +1, a passage through which the vehicle passes in a downhill phase may be determined as the passage through which the vehicle passes in a negative direction, and the quantity of inter-floor passages through which the vehicle passes may be denoted as -1, to determine the parking floor. For another example, a quantity of times that an absolute value of a change value of a pitch angle of the vehicle is greater than or equal to an angle change threshold may be determined, and then the parking floor may be determined based on the change of the pitch angle.

In this embodiment of this application, the parking floor is determined based on the pitch angle information of the vehicle. Because obtaining of the pitch angle information may not depend on a radar sensor or a camera sensor, the method is applicable to a vehicle with low configuration. In addition, resource consumption of the radar sensor, the camera sensor, and the like in a process of determining the parking location can be reduced. For an electric vehicle, a new energy vehicle, and the like, power consumption of the vehicle can be reduced, and an endurance mileage of the vehicle can be increased.

According to a sixth aspect, a method for determining that a vehicle is located in a parking lot area is provided. The method includes: obtaining a first status parameter; performing parking lot marker detection when the first status parameter is less than or equal to a first threshold; and when a parking lot marker is detected, determining that the vehicle is located in the parking lot area.

With reference to the sixth aspect, in some implementations of the sixth aspect, the first status parameter may include at least one of a distance between the vehicle and an entrance of a parking lot, a vehicle speed, and signal quality of a GNSS signal.

For example, the parking lot marker may be an object that does not move in the parking lot, like a parking lot barrier gate, a parking lot toll booth, a parking space, a parking lot guidance sign, or a parking lot indication sign.

In this embodiment of this application, when the first status parameter is less than or equal to the first threshold, parking lot marker detection is performed, and then whether the vehicle is located in the parking lot area is determined accordingly. This can reduce dependence on the sensor to capture the environment data, and reduce working time of the sensor, to reduce power consumption of the sensor. Correspondingly, power consumption of the sensor is reduced, so that fuel consumption of a conventional fuel vehicle or the like can be reduced to some extent, and an endurance mileage of an electric vehicle or the like can be increased to some extent.

According to a seventh aspect, a sensor startup method is provided. The method may include: obtaining a voice instruction or user operation information; and detecting the parking voice instruction based on the voice instruction, and starting one or more sensing sensors when the parking voice instruction is detected; or detecting a first operation based on the user operation information, and starting one or more sensors when the first operation is detected.

For example, the one or more sensors may be one or more types of sensors. This is not limited in embodiments of this application. Further, data captured by the one or more sensors may be used for a function related to a parking scenario. For example, after it is detected that a user taps an "Assisted parking" virtual button on a central display screen, one or more cameras on the vehicle, for example, a camera of an around view monitor system, may be started, and the camera is controlled to capture data, to obtain environment data. In this way, a parking area, a target parking space, and/or the like in which the vehicle is located are/is recognized. Further, a radar may be started, to control, based on the data captured by the plurality of sensors, the vehicle to travel into the target parking space.

In this embodiment of this application, because a parking-related function may be related to use of a sensor, the sensor is started when it is determined that the user has a parking intention, and the sensor may be triggered only in a parking phase. This can reduce overheads of the sensor, and avoid interference in the function from data captured by the sensor in a non-parking phase.

According to an eighth aspect, a method for recognizing a sign of a parking space is provided. The method may include: obtaining a first parking space image; and determining a sign of a target parking space based on the first parking space image.

For example, the first parking space image may include at least one parking space including the target parking space. For example, images of the parking space at a plurality of moments may be obtained, and the images at the plurality of moments may include the target parking space. For example, a video image captured by a camera sensor within first duration may be obtained, and the video may include the images of the parking space at the plurality of moments. This can avoid a recognition error caused by an incomplete sign in a single image, and improve accuracy of the recognized sign. It should be understood that the foregoing description of the first parking space image is merely an example for ease of description. This is not limited in embodiments of this application.

With reference to the eighth aspect, in some implementations of the eighth aspect, the method further includes: obtaining parking space indication information, where the parking space indication information may indicate an area in which the target parking space is located; and determining the sign of the target parking space based on the parking space indication information and the first parking space image.

With reference to the eighth aspect, in some implementations of the eighth aspect, the method further includes: determining a first proportion based on the first parking space image, where the first proportion indicates a proportion of the target parking space in the first parking space image; and the determining a sign of a target parking space based on the first parking space image includes: determining the sign of the target parking space based on the first parking space image and the first proportion.

With reference to the eighth aspect, in some implementations of the eighth aspect, the determining a sign of a target parking space based on the first parking space image includes: determining one or more parking space information texts based on the first parking space image; and determining the sign of the target parking space based on confidence of at least one of the one or more parking space information texts.

With reference to the eighth aspect, in some implementations of the eighth aspect, a vehicle includes a vehicle-mounted display. The method further includes: controlling the vehicle-mounted display to display an image of the target parking space.

With reference to the eighth aspect, in some implementations of the eighth aspect, the method further includes: sending a first message, where the first message indicates the target parking space.

In this embodiment of this application, the sign of the target parking space may be determined based on the image of the target parking space. This helps the user learn of the sign of the parking space without taking a photo of the parking space by using a terminal device like a mobile phone, so that the user learns of the location of the vehicle based on the information, and then the user can search for the vehicle.

According to a ninth aspect, an interaction method for indicating a parking location is provided. The method may include: obtaining vehicle location information, where the vehicle location information may indicate the parking location; and displaying a first interface, where the first interface may indicate the parking location.

For example, the vehicle location information may indicate at least one of a target parking space, a parking area, a parking floor, and first longitude and latitude information. For example, a terminal device like a mobile phone may obtain target parking space indication information indicating the target parking space, and may obtain parking area indication information indicating the parking area. The obtained vehicle location information may indicate both the target parking space and the parking area. In other words, the target parking space indication information and the parking area indication information may be a same message. Alternatively, a terminal device like a mobile phone may obtain an image of an ambient environment of a vehicle, and present the image of the ambient environment, so that a user may learn of an area in which the vehicle is located. It should be understood that the foregoing manner of indicating the target parking space and the parking area is merely an example for ease of description. This is not limited in embodiments of this application.

In this embodiment of this application, after obtaining the vehicle location information, the terminal device displays, on the first interface, content related to the parking location, so that the user can learn of the parking location, and the user can search for the vehicle. This can improve user experience.

According to a tenth aspect, an apparatus for determining a parking floor is provided. The apparatus includes: an obtaining module, configured to obtain ambient environment information; and a processing module, configured to: determine, based on the ambient environment information, a first intersection through which a vehicle passes; and determine the parking floor based on the first intersection through which the vehicle passes.

With reference to the tenth aspect, in some implementations of the tenth aspect, the processing module may be specifically configured to: determine a relative change of a floor based on the first intersection through which the vehicle passes; and determine the parking floor based on the relative change of the floor.

With reference to the tenth aspect, in some implementations of the tenth aspect, the processing module may be further configured to: starting a second sensor when it is determined that the vehicle is located in an inter-floor passage; and controlling the second sensor to capture the ambient environment information, where the ambient environment information may be used to determine the first intersection.

With reference to the tenth aspect, in some implementations of the tenth aspect, the apparatus may further include: a sending module, configured to send a parking floor indication message after the parking floor is determined, where the parking floor indication message may indicate the parking floor.

According to an eleventh aspect, an apparatus for determining a parking floor is provided. The apparatus includes: an obtaining module, configured to obtain an image of a first passage, where the first passage may include an inter-floor passage through which a vehicle passes; and a processing module, configured to determine a passage guidance sign based on the image of the first passage; and determine the parking floor based on the passage guidance sign.

With reference to the eleventh aspect, in some implementations of the eleventh aspect, the processing module may be further configured to: starting a second sensor when it is determined that the vehicle is located in the inter-floor passage; and controlling the second sensor to capture ambient environment information, where the ambient environment information may be used to determine a first intersection.

With reference to the eleventh aspect, in some implementations of the eleventh aspect, the apparatus may further include: a sending module, configured to send a parking floor indication message after the parking floor is determined, where the parking floor indication message may indicate the parking floor.

According to a twelfth aspect, an apparatus for determining a parking floor is provided. The apparatus includes: an obtaining module, configured to obtain pitch angle information within first duration, where a start moment of the first duration may be earlier than or equal to a moment at which a vehicle travels into the 1^{st} inter-floor passage, and an end moment of the first duration may be equal to or later than a moment at which the vehicle travels onto the parking floor; and a processing module, configured to determine the parking floor based on the pitch angle information within the first duration.

With reference to the twelfth aspect, in some implementations of the twelfth aspect, the processing module may be specifically configured to determine, based on the pitch angle information within the first duration, a quantity of inter-floor passages through which the vehicle passes; and determine the parking floor based on the quantity of inter-floor passages through which the vehicle passes.

According to a thirteenth aspect, an apparatus for determining that a vehicle is located in a parking lot area is provided. The apparatus may include: an obtaining module, configured to obtain a first status parameter; and a processing module, configured to perform parking lot marker detection when the first status parameter is less than or equal to a first threshold; and further configured to: when a parking lot marker is detected, determine that the vehicle is located in the parking lot area.

With reference to the thirteenth aspect, in some implementations of the thirteenth aspect, the first status parameter may include at least one of a distance between the vehicle and an entrance of a parking lot, a vehicle speed, and signal quality of a GNSS signal.

According to a fourteenth aspect, a sensor startup apparatus is provided. The apparatus may include: an obtaining module, configured to obtain a voice instruction or user operation information; and a processing module, configured to: detect a parking voice instruction based on the voice instruction, and start one or more sensing sensors when the parking voice instruction is detected; or detect a first operation based on the user operation information, where the first operation indicates that a user has a parking intention, and start one or more sensing sensors when the first operation is detected.

With reference to the fourteenth aspect, in some implementations of the fourteenth aspect, the obtaining module may be further configured to obtain data captured by the one or more sensing sensors. The processing module may be further configured to determine, based on the data captured by the sensing sensors, a parking environment of a vehicle.

According to a fifteenth aspect, an apparatus for recognizing a sign of a parking space is provided. The apparatus may include: an obtaining module, configured to obtain a first parking space image; and a processing module, configured to determine a sign of a target parking space based on the first parking space image.

With reference to the fifteenth aspect, in some implementations of the fifteenth aspect, the obtaining module may be further configured to obtain parking space indication information, where the parking space indication information may indicate an area in which the target parking space is located. The processing module may be specifically configured to determine the sign of the target parking space based on the parking space indication information and the first parking space image.

With reference to the fifteenth aspect, in some implementations of the ninth aspect, the processing module may be further configured to determine a first proportion based on the first parking space image, where the first proportion may indicate a proportion of the target parking space in the first parking space image. The processing module may be specifically configured to determine the sign of the target parking space based on the first parking space image and the first proportion.

With reference to the fifteenth aspect, in some implementations of the fifteenth aspect, the processing module may be specifically configured to: determine one or more parking space information texts based on the first parking space image; and determine the sign of the target parking space based on confidence of the parking space information text.

With reference to the fifteenth aspect, in some implementations of the fifteenth aspect, a vehicle may include a vehicle-mounted display. The processing module may be further configured to control the vehicle-mounted display to display an image of the target parking space.

With reference to the fifteenth aspect, in some implementations of the fifteenth aspect, the apparatus may further include a sending module. The sending module may be configured to send a first message, where the first message may indicate the target parking space.

In some possible implementations, the apparatus in any one of the second aspect, and the tenth aspect to the sixteenth aspect, and the possible implementations of any one of the second aspect, and the tenth aspect to the sixteenth aspect may be an apparatus like a vehicle-mounted chip, a vehicle-mounted apparatus (for example, an in-vehicle infotainment or an on-board computer), or a vehicle. The vehicle in embodiments of this application may be understood as a transportation means, and the solutions provided in embodiments of this application may alternatively be applied to another transportation means or apparatus.

According to a sixteenth aspect, an interaction apparatus for indicating a parking location is provided. The apparatus may include: an obtaining module, configured to obtain vehicle location information; and a display module, configured to display a first interface, where the first interface may indicate the parking location.

With reference to the sixteenth aspect, in some implementations of the sixteenth aspect, the interaction apparatus may be one or more of apparatuses such as a computer, a smartphone, a tablet computer, a personal digital assistant (personal digital assistant, PDA), a wearable device, a smart speaker, a cloud service device, and a television.

According to a seventeenth aspect, an apparatus is provided. The apparatus may include a processor and a memory. The memory is configured to store program instructions. The processor is configured to invoke the program instructions to perform the method according to any one of the first aspect, and the third aspect to the ninth aspect, and the possible implementations of the first aspect, and the third aspect to the ninth aspect.

According to an eighteenth aspect, a computer-readable medium is provided. The computer-readable medium stores program code to be executed by a device, and the program code is used to perform the method according to any one of the first aspect, and the third aspect to the ninth aspect, and the possible implementations of the first aspect, and the third aspect to the ninth aspect.

According to a nineteenth aspect, a computer program product including instructions is provided. When the computer program product runs on a computer, the computer is enabled to perform the method according to any one of the first aspect, and the third aspect to the ninth aspect, and the possible implementations of the first aspect, and the third aspect to the ninth aspect.

According to a twentieth aspect, a system is provided. The system may include a vehicle and an electronic device. The vehicle may include the apparatus according to any one of the second aspect, and the tenth aspect to the sixteenth aspect, and the possible implementations of any one of the second aspect, and the tenth aspect to the sixteenth aspect. The vehicle may be configured to send a first message, where the first message may indicate parking location information of the vehicle. The electronic device may be configured to: receive the first message, and control, based on the first message, display of a parking location of the vehicle.

With reference to the twentieth aspect, in some implementations of the twentieth aspect, the electronic device may be further configured to send parking location request information, where the parking location request information is used to request the parking location information of the vehicle. The vehicle may be further configured to receive the parking location request information. The vehicle may be specifically configured to send the first message based on the parking location request information.

Embodiments of this application provide a parking location determining method and an apparatus. When a vehicle enters a parking lot, motion status information and/or ambient environment information of the vehicle can be obtained based on a location of the vehicle, and then an area in which the vehicle is located in the parking lot is determined. This can avoid a case in which the location of the vehicle cannot be determined because a building structure of the parking lot, an ambient object, or the like blocks a GNSS signal, so that a user can learn of the parking location of the vehicle insensibly, and vehicle search experience of the user can be improved. A parking location positioning mode can be flexibly determined based on signal quality of the GNSS signal. This helps implement requirements for parking positioning solutions in different scenarios. A parking floor is determined based on a quantity of first intersections through which the vehicle passes, so that impact of a building structure of an indoor parking lot and the like on recognizing the parking floor can be reduced. The method is applicable to a wider scenario. In this way, accuracy of the determined parking floor can be improved. The parking floor can be determined based on a passage guidance sign, so that difficulty in recognizing a sign of the parking floor can be reduced, and impact of a building structure of the parking lot on recognizing the parking floor can be avoided. This can improve accuracy of determining the parking floor. The parking floor of the vehicle can be determined based on pitch angle information of the vehicle. The method is applicable to a vehicle with a small quantity of sensing sensors and a vehicle with low configuration. Because obtaining of the pitch angle information does not depend on capturing of external environment information, resource consumption of the sensor can be reduced. A parking zone can be determined based on an image of a marker in the parking zone, so that interference in parking zone recognition from a sign located on another object can be reduced, accuracy of determining the parking zone can be improved, and overheads in a process of recognizing the parking zone can also be reduced. The parking zone is determined based on an area keyword and a sign of a first parking space, so that accuracy of the determined parking zone can be improved. When it is determined that the user has a parking intention, the motion status information and/or the ambient environment data of the vehicle are/is obtained. In this way, a parking occasion can be recognized. This can reduce invalid information in the obtained environment data, improve accuracy of the determined parking location, and also reduce resource overheads used for determining the parking location. A first message can be sent, so that a terminal device like a mobile phone can learn of the area in which the vehicle is located, and then the user can learn of the parking location of the vehicle without taking a photo of the parking location of the vehicle by using the terminal device like the mobile phone. This can improve user experience. When it is determined that there is no user in a cockpit of the vehicle, the first message is sent, so that a frequency of sending the first message can be reduced, and then traffic used in communication is reduced. A parking lot marker is recognized when the first status parameter meets a preset condition, so that in a process of determining whether the vehicle enters the parking lot, dependency on the sensing sensor can be reduced, power consumption of the sensor can be reduced, and a corresponding function can be enabled after it is determined that the vehicle is located in the parking lot area.

### BRIEF DESCRIPTION OF DRAWINGS

FIG. 1 is a functional block diagram of a vehicle 100 according to an embodiment of this application;
FIG. 2 is a diagram of a vehicle sensor and an arrangement location according to an embodiment of this application;
FIG. 3 is a diagram of a scenario in which a vehicle enters a parking lot according to an embodiment of this application;
FIG. 4 is a diagram of a vehicle parking scenario according to an embodiment of this application;
FIG. 5 is a diagram of a type of a floor passage according to an embodiment of this application;
FIG. 6 is a diagram of a vehicle parking scenario according to an embodiment of this application;
FIG. 7 is a diagram of a location relationship between a parking space and a sign of the parking space according to an embodiment of this application;
FIG. 8 is a diagram of another vehicle parking scenario according to an embodiment of this application;
FIG. 9 is a diagram of a column according to an embodiment of this application;
FIG. 10 is a diagram of an inter-floor passage scenario according to an embodiment of this application;
FIG. 11 is a diagram of an architecture of a system for intelligent vehicle positioning according to an embodiment of this application;
FIG. 12 is a schematic flowchart of a method for determining a parking floor according to an embodiment of this application;
FIG. 13 is a diagram of pitch angle information of a vehicle according to an embodiment of this application;
FIG. 14 is a schematic flowchart of another method for determining a parking floor according to an embodiment of this application;
FIG. 15 is a schematic flowchart of another method for determining a parking floor according to an embodiment of this application;
FIG. 16 is a diagram of a scenario of a connection between an inter-floor passage and a floor according to an embodiment of this application;
FIG. 17 is a schematic flowchart of a method for determining that a transportation means travels into a parking lot according to an embodiment of this application;
FIG. 18 is a schematic flowchart of a sensor startup method according to an embodiment of this application;
FIG. 19 is a schematic flowchart of a method for recognizing a sign of a parking space according to an embodiment of this application;
FIG. 20 is a diagram of an image of a parking space according to an embodiment of this application;
FIG. 21 is a diagram of an interaction interface according to an embodiment of this application;
FIG. 22 is a schematic flowchart of a method for recognizing a parking area according to an embodiment of this application;
FIG. 23 is a diagram of another interaction interface according to an embodiment of this application;
FIG. 24 is a schematic flowchart of an interaction method for indicating a parking location according to an embodiment of this application;
FIG. 25 is a diagram of an interaction interface according to an embodiment of this application;
FIG. 26(a) to FIG. 26(c) show a group of graphical user interfaces according to an embodiment of this application;
FIG. 27(a) and FIG. 27(b) show another group of graphical user interfaces according to an embodiment of this application;
FIG. 28 is a schematic flowchart of a method for recognizing a parking area according to an embodiment of this application;
FIG. 29 is a schematic flowchart of a parking location determining method according to an embodiment of this application;
FIG. 30 is a diagram of a structure of an apparatus for determining that a vehicle is located in a parking lot area according to an embodiment of this application;
FIG. 31 is a diagram of a structure of a sensor startup apparatus according to an embodiment of this application;
FIG. 32 is a diagram of a structure of an apparatus for recognizing a sign of a parking space according to an embodiment of this application;
FIG. 33 is a diagram of a structure of an apparatus for recognizing a parking area according to an embodiment of this application;
FIG. 34 is a diagram of a structure of an interaction apparatus for indicating a parking location according to an embodiment of this application;
FIG. 35 is a diagram of a structure of a vehicle location determining apparatus according to an embodiment of this application;
FIG. 36 is a schematic flowchart of an apparatus for determining a parking floor according to an embodiment of this application;
FIG. 37 is a diagram of another apparatus for determining a parking floor according to an embodiment of this application;
FIG. 38 is a diagram of an example structure of an apparatus according to an embodiment of this application; and
FIG. 39 is a diagram of a system according to an embodiment of this application.

### DESCRIPTION OF EMBODIMENTS

The following describes technical solutions of embodiments in this application with reference to accompanying drawings.

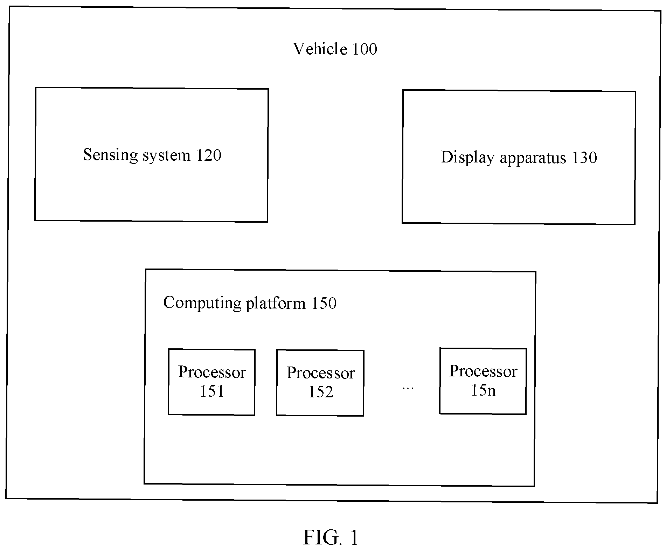

For example, FIG. 1 is a functional block diagram of a vehicle 100 according to an embodiment of this application. The vehicle 100 may include a sensing system 120, a display apparatus 130, and a computing platform 150. The sensing system 120 may include several types of sensors that sense information about an ambient environment of the vehicle 100. For example, the sensing system 120 may include a positioning system. The positioning system may be a global navigation satellite system, for example, one or more of a GPS, a BeiDou system or another positioning system, an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

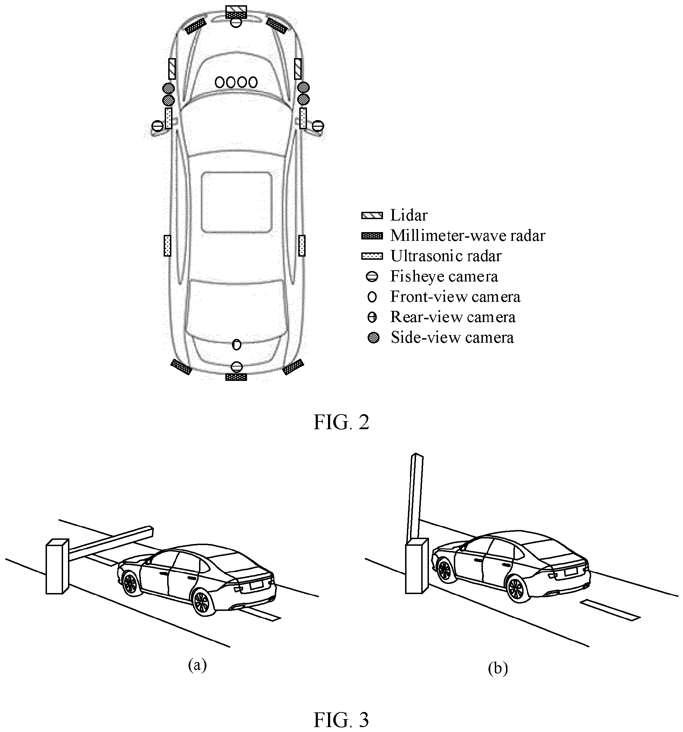

For example, FIG. 2 is a diagram of a vehicle sensor and an arrangement location according to an embodiment of this application.

For example, the vehicle may include a plurality of sensors such as a radar sensor and a camera sensor. The radar sensor may be a lidar, a millimeter-wave radar, an ultrasonic radar, or the like. The camera sensor may be a front-view camera, a rear-view camera, a side-view camera, a fisheye camera, or the like. FIG. 2 shows some common sensor types and mounting locations of the sensors. However, types, quantities, and locations of the vehicle sensors are not limited in embodiments of this application.

The lidar (light detection and ranging, Lidar) is a radar that performs detection by using a laser beam. Due to advantages of high coherence, directivity, and monochromaticity of a laser, the lidar can implement a long-distance and high-precision ranging function. The lidar may extend a single-point ranging result to two-dimensional ranging result in a scanning manner or multielement array detection manner, to form a distance image, so that the lidar is configured to recognize an accurate location and a shape of an object. For example, as shown in FIG. 2, the vehicle may include three lidars that respectively face a forward direction, a left direction, and a right direction.

The millimeter-wave radar is a radar that performs detection by using a millimeter wave. Compared with optical beams such as infrared and laser beams, the millimeter wave has a strong capability of penetrating fog, smoke, and dust. Therefore, the millimeter-wave radar has an all-weather feature. In addition, a short wavelength is easy to obtain features such as a detail feature and clear contour imaging of a target, and can be used for target classification and recognition. The millimeter-wave radar may be configured to recognize a distance and a speed of an object. For example, as shown in FIG. 2, the vehicle may include six millimeter-wave radars, including one millimeter-wave radar facing a forward direction, one millimeter-wave radar facing a backward direction, and four millimeter-wave radars facing a lateral direction.

The ultrasonic radar is a radar that performs detection by using an ultrasonic wave. An ultrasonic ranging sensor has a great advantage in short-distance measurement. For example, as shown in FIG. 2, the vehicle may include a plurality of ultrasonic radars.

For example, the vehicle may be provided with one or more types of cameras such as a long-focus camera, a wide-angle camera, a monocular camera, a binocular camera, a fisheye camera, and a linear camera. For example, as shown in FIG. 2, the front-view camera may include a long-focus camera, a wide-angle camera, a monocular camera, a binocular camera, a fisheye camera, a linear camera, or the like.

It should be understood that the foregoing description of types, quantities, and arrangement locations of the sensors is merely an example for ease of description. This is not limited in embodiments of this application.

For ease of explanation and description, for example, FIG. 3 is a diagram of a scenario in which a vehicle enters a parking lot according to an embodiment of this application. For example, an entrance of the parking lot may include a barrier gate, and the barrier gate may control road accessibility. For example, as shown in (a) in FIG. 3, when the barrier gate is in a closed state, a road is closed, the vehicle may fail to pass normally, and the vehicle may decelerate or stop in front of the barrier gate until the barrier gate is opened. When the barrier gate is in an open state, as shown in (b) in FIG. 3, the vehicle may normally pass through the road controlled by the barrier gate, for example, enter a place like a parking lot.

It should be understood that the foregoing description of the barrier gate is merely an example for ease of description. It should be understood that the barrier gate may alternatively be in another form other than that shown in FIG. 3. This is not limited in embodiments of this application.

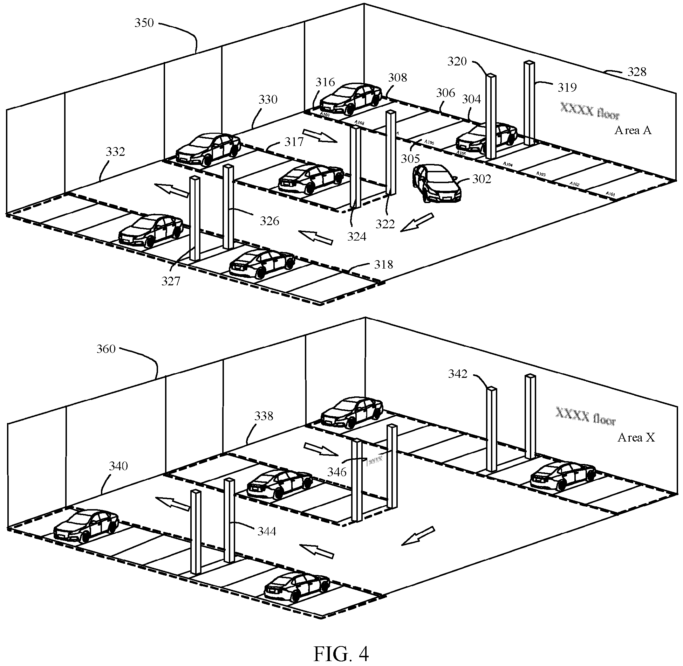

For ease of explanation and description, for example, FIG. 4 is a diagram of a vehicle parking scenario according to an embodiment of this application. As shown in FIG. 4, the parking lot may include a plurality of floors. For example, a floor 350 and a floor 360 may be any two of the plurality of floors in the parking lot. One floor may include a plurality of parking spaces, and one or more of the parking spaces are occupied, for example, a parking space 308. An idle parking space may be used for parking another vehicle. For example, a to-be-parked vehicle 302 may travel and stop in a parking space 304, a parking space 306, or the like. A parking space may be marked with a sign. For example, a sign 305 may be a sign of the parking space 304, in other words, the sign of the parking space 304 may be "A106". One floor may include a plurality of areas used for parking. For example, the floor 350 may include an area 316, an area 317, an area 318, and the like. The plurality of areas may belong to a same parking area. For example, the area 316 to the area 318 may belong to an area indicated by a sign "Area A" of the parking area. Alternatively, the plurality of areas may belong to a plurality of parking areas. For example, the area 316 may belong to an area indicated by a sign "Area A" of the parking area, and the area 317 may belong to an area indicated by a sign "Area B" of the parking area. One floor may include a plurality of markers, for example, columns 319, 320, 322, 324, 326, 327, 342, 344, and the like may be columns between floors. The column may include floor information and/or a sign of a parking area. For example, the column 319 may be marked with the sign "Area A" of the parking area, the column 344 may be marked with "Area E", "Basement level 1", and the like. The parking lot may further include another sign. For example, an arrow on a ground shown in FIG. 4 may indicate a traveling direction. For another example, as shown in FIG. 4, the parking lot may include a signboard 346. The signboard 346 may be in a hanging state, and the signboard 346 may be marked with a sign (for example, a parking zone sign, a floor sign, or a fire sign). The floor may include an enclosed or semi-enclosed inner wall, and the inner wall may also include a sign of a floor, a sign of a parking area, and/or the like, for example, an inner wall 328. It should be understood that the foregoing description of the vehicle parking scenario is merely an example for ease of description. For example, the parking lot may include more or fewer floors, for example, an indoor parking lot including only the floor 350, or an outdoor parking lot.

It should be understood that the foregoing description of the vehicle parking scenario is merely an example for ease of description. This is not limited in embodiments of this application.

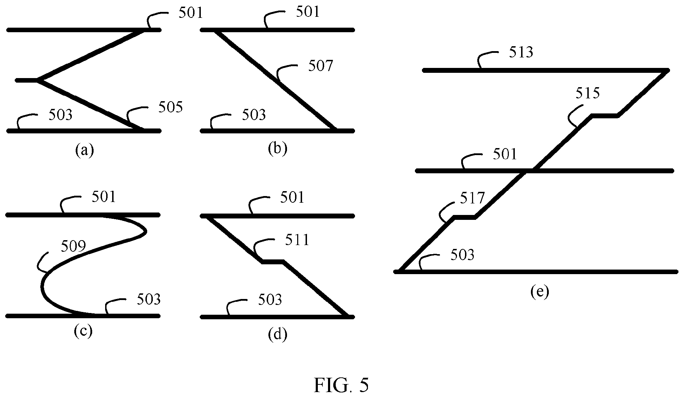

For ease of explanation and description, for example, FIG. 5 is a diagram of a type of a floor passage according to this embodiment of this application. (a), (b), (c), (d), and (e) in FIG. 5 respectively show several different types of inter-floor driving passages. As shown in (a) in FIG. 5, in a process in which a vehicle travels from a floor 503 to a floor 501 through a passage 505, a traveling direction of the vehicle may change. As shown in (b) in FIG. 5, in a process in which the vehicle travels from a floor 505 to the floor 501 through a passage 507, a traveling direction of the vehicle may not change. (c) to (e) in FIG. 5 are similar.

For ease of explanation and description, the following describes FIG. 5 with reference to FIG. 4. For example, the floor 350 and the floor 360 in FIG. 4 may be two adjacent floors, and the floor 350 is higher than the floor 360. As shown in FIG. 5, the floor 501 may be the floor 350 in FIG. 4, and the floor 503 may be the floor 360. The passage 505, the passage 507, a passage 509, a passage 511, and the like each may be a passage that is connected to two adjacent floors. The vehicle may travel from one floor to another floor through a passage. When traveling onto a floor through an inter-floor passage, the vehicle may pass through an intersection. For another example, there may be another floor in addition to the floor 350 and the floor 360. A connection passage between a plurality of floors may be shown in (e) in FIG. 5; or may be a combination of passages shown in (a) to (d) in FIG. 5; or may be a passage in another form.

It should be understood that the type of the passage shown in FIG. 5 is merely an example for ease of description, and there may alternatively be another type of passage. This is not limited in embodiments of this application.

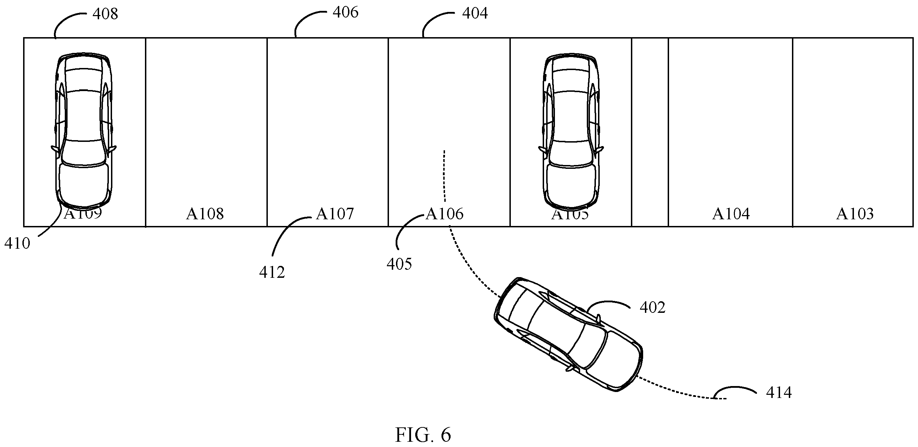

For ease of explanation and description, for example, FIG. 6 is a diagram of a vehicle parking scenario according to an embodiment of this application. As shown in FIG. 6, the scenario may include a plurality of parking spaces. One or more of the parking spaces are occupied, for example, a parking space 408. An idle parking space may be used for parking another vehicle, for example, a parking space 404 and a parking space 406. The parking space may be marked with a sign. For example, a sign 412 may be a sign of the parking space 406, in other words, the sign of the parking space 406 may be "A107". A sign of another parking space is similar. As shown in FIG. 6, a dashed line 414 may be a traveling trajectory of a vehicle 402, or may be a planned parking route, or may be a combination of a traveling trajectory and a planned parking route. The vehicle 402 may finally travel and stop in the parking space 404 based on the trajectory. In an actual parking process, when the vehicle completely travels into a range of a parking space area, for example, a vehicle 410 stops in the parking space 408. Due to a space limitation, a length and a width of the parking space may be close to a length and a width of the vehicle. Therefore, even if the vehicle has a plurality of cameras that can capture an ambient environment, because mounting locations and/or photographing ranges of the cameras are limited, as shown in FIG. 6, the vehicle 410 that has stopped in the parking space 408 may fail to capture an image of the parking space 408, and may fail to obtain a sign "A109" of the parking space. If the vehicle needs to obtain the sign of the parking space by using a sensor on the vehicle, the vehicle may need to be located outside the parking space. For example, when the vehicle 402 is partially or completely located outside the parking space 404 in a process of parking the vehicle 402, the vehicle 402 may capture an image of the parking space by using a camera sensor on the vehicle 402, and obtain a sign "A105" of the parking space.

It should be understood that the foregoing description of the sign of the parking space is merely an example for ease of description. A sign of a parking space may alternatively be in another form. For example, the sign may be in a form of pure digit (for example, "0347"), or may be a combination of a letter, a symbol, and a digit (for example, "A-232").

In some possible implementations, the parking scenario shown in FIG. 4 may be combined with the parking scenario shown in FIG. 6. For example, FIG. 6 may be a top view of a partial area on the floor 350 shown in FIG. 4. Correspondingly, the vehicle 402 in FIG. 6 may be the vehicle 302 in FIG. 4, and the parking space 404 in FIG. 6 may be the parking space 304 in FIG. 4.

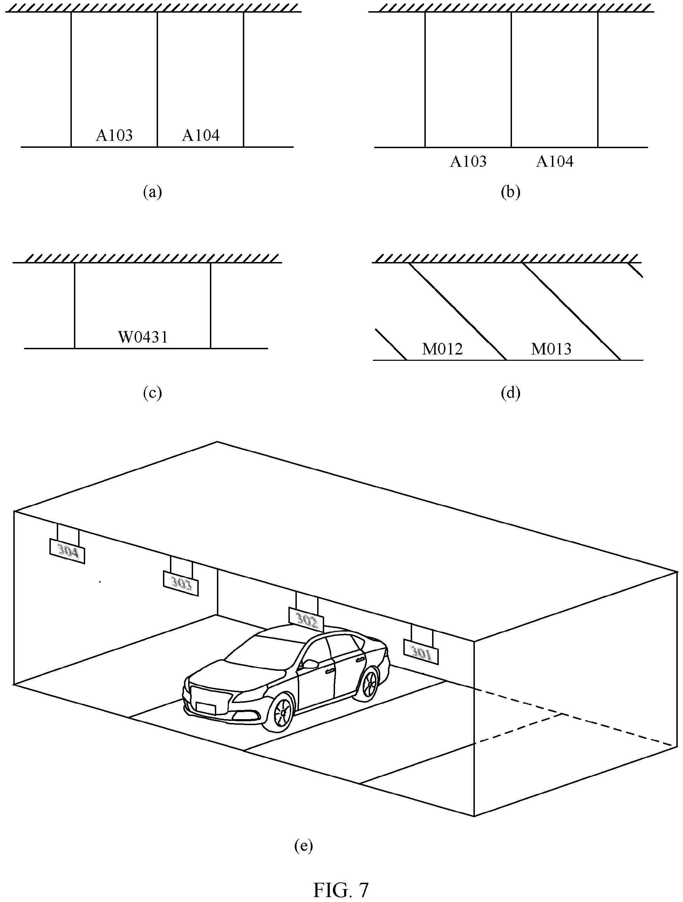

For example, FIG. 7 is a diagram of a location relationship between a parking space and a sign of the parking space according to an embodiment of this application. (a), (b), and (e) in FIG. 7 are perpendicular parking spaces, (c) in FIG. 7 is a parallel parking space, and (d) in FIG. 7 is an angle parking space.

For example, a sign of a parking space may be located within an area included in the parking space, or may be located outside an area included in the parking space, or may be located above an area included in the parking space. For example, as shown in (a), (c), and (d) in FIG. 7, a sign of a parking space may be located within an area included in the parking space. As shown in (b) in FIG. 7, a sign of a parking space may be located outside an area included in the parking space. As shown in (e) in FIG. 7, a sign of a parking space may alternatively be located above an area included in the parking space. In other words, the sign of the parking space may be indicated in a three-dimensional space annotation manner. It should be understood that the foregoing description of the location relationship between the parking space and the sign of the parking space is merely an example for ease of description. This is not limited in embodiments of this application.

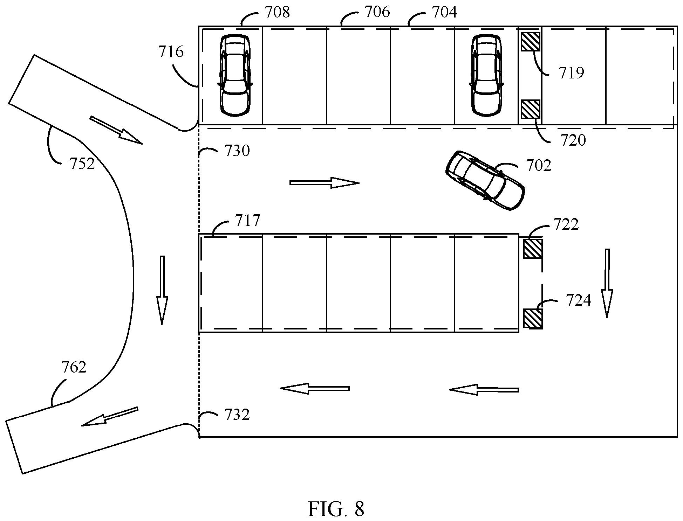

For ease of understanding and description, for example, FIG. 8 is a diagram of another vehicle parking scenario according to an embodiment of this application. An arrow may indicate a traveling direction. A vehicle 702 is a vehicle that is to be parked or is being parked. The parking lot may include a plurality of areas used for parking, for example, an area 716 and an area 717 that are shown by dashed lines. The area 716 may include a plurality of parking spaces such as a parking space 704, a parking space 706, and a parking space 708. The parking space 704 may be a parking space in which the vehicle is finally parked (not shown in FIG. 7), and the parking space 706 is an idle parking space adjacent to the parking space 704. The area 717 may also include a plurality of parking spaces. Obstacles 719 and 720 may be columns. The column may include a sign of a parking area in which the area 716 is located. Obstacles 722 and 724 may also be columns, and the column may include a sign of a parking area in which the area 717 is located. The area 716 and the area 717 may belong to a same parking area, that is, may belong to a parking area indicated by a sign of the same parking area. For example, both the area 716 and the area 717 belong to a parking area "Area H", and the columns 720 and 722 may include the sign "Area H". Alternatively, the area 716 and the area 717 may belong to different parking areas, and the different parking areas may be distinguished by using signs of the different parking areas. For example, the area 716 may belong to a parking area "Area H", and the area 717 may belong to a parking area "Area G". In this scenario, an inner wall (not shown in FIG. 8) of the parking lot may be included. A sign of a parking area may also be marked on the inner wall, for example, a sign of a parking area like "Area A" may be marked on the inner wall. A parking space in FIG. 8 may be marked with a number of the parking space, for example, a number of the parking space 704 may be "A106" (not shown in FIG. 8). A dashed line 730 may be an area entrance, and a dashed line 732 may be an area exit. The entrance 730 may be connected to a road 752, and the exit 732 may be connected to a road 762.

For example, FIG. 3, FIG. 4, FIG. 5, and FIG. 6 may be combined with FIG. 8. For example, FIG. 8 may be a top view of a partial area on the floor 350 shown in FIG. 4. The vehicle 702 in FIG. 8 may be the vehicle 302 in FIG. 4. The parking spaces 704, 706, and 708 in FIG. 8 may respectively correspond to the parking spaces 304, 306, and 308 in FIG. 4, or may correspond to the parking spaces 404, 406, and 408 in FIG. 6. The road 752 and the road 762 in FIG. 8 may be a part of the inter-floor passages 505, 507, 509, and the like shown in FIG. 5, or may be a part of a road on which the entrance/exit of the parking lot shown in FIG. 3 is located.

It should be understood that the foregoing description of the parking scenario is merely an example for ease of description. This is not limited in embodiments of this application.

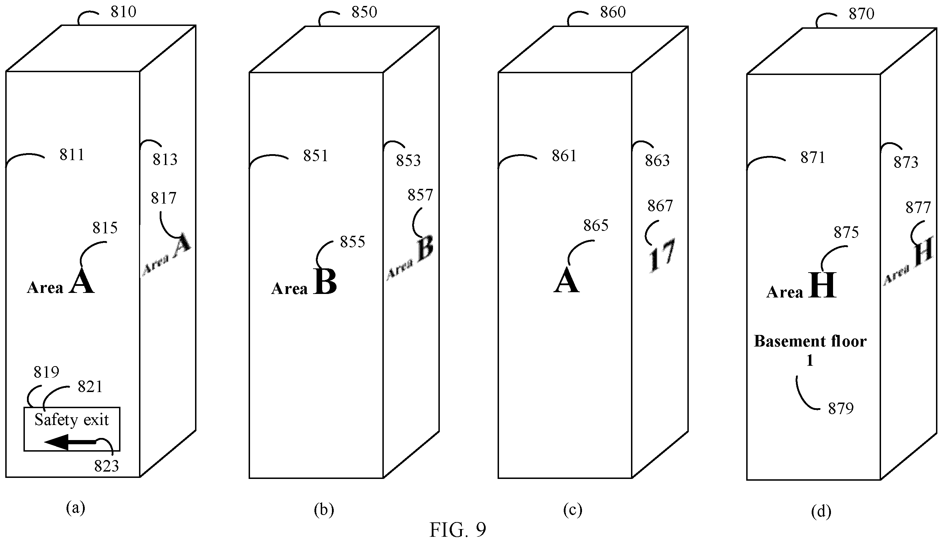

For example, for ease of explanation and description, FIG. 9 is a diagram of a column according to an embodiment of this application. (a) in FIG. 9 shows a column 810. The column 810 may include a sign of a parking area. A plane 811 includes a sign 815, and a plane 813 includes a sign 817. The sign 815 and/or the sign 817 may indicate the parking area. For example, a column 850 may be the column 720 in FIG. 8, and the sign 815 and/or the sign 817 may be a sign of the parking area in which the area 716 is located. Similarly, (b) in FIG. 9 shows a column 850, and (c) in FIG. 9 shows a column 860. For example, the column 850 may be the column 722 or 724 in FIG. 8, and a sign 855 and/or a sign 857 of the column may be a sign of a parking area in which the area 717 is located. The column 860 may be any one of a plurality of columns shown in FIG. 4, FIG. 6, or FIG. 8.

For example, a parking area may include a plurality of levels, and a plurality of areas at a same level may be distinguished by using signs. For example, the column 860 shown in (c) in FIG. 9 may include a sign 865 "A" and a sign 867 "17", and the column may be the column 720 in FIG. 8. A parking area indicated by the sign 867 is a part of a parking area indicated by the sign 865. For example, the parking area indicated by the sign 865 is a parking area including the area 716 and the area 718. In other words, the area 716 and the area 718 may be at a same level. A sign of the area 716 may be "17" or "A17", and a sign of the area 718 may be "18" or "A18". A sign of a parking area in which the parking space 704 is located may be "A", "17", or "A17". The sign 867 may alternatively be located on a same plane as the sign 865.

For example, the column may alternatively have another sign. For example, as shown in (a) in FIG. 9, a security exit indication apparatus 819 may be mounted on a plane 811 of the column 850, and the apparatus 819 may include a sign 821 indicating a secure passage and a sign 823 indicating a traveling direction. For another example, as shown in (d) in FIG. 9, the column 860 may include a floor sign 879, and the sign may indicate a floor on which the column is located.

It should be understood that the foregoing description of the sign of the parking area is merely an example. This is not limited in embodiments of this application.

It should be understood that the foregoing description of the column is merely an example for ease of description. The column may alternatively be in another shape, for example, in a cylindrical shape.

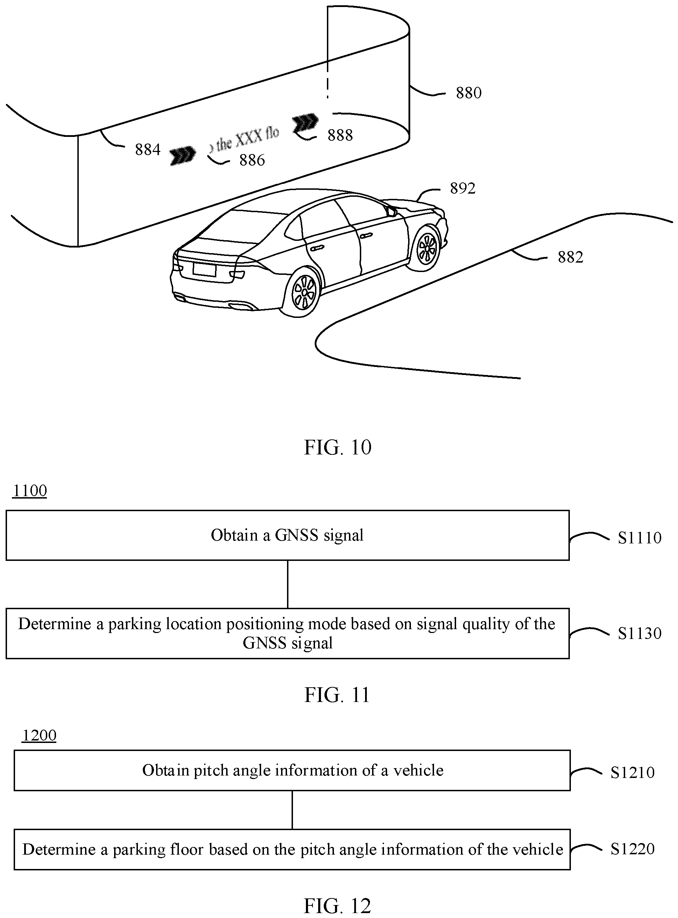

For example, FIG. 10 is a diagram of an inter-floor passage scenario according to an embodiment of this application. A ground 882 may be a ground of a passage 880, and a wall 884 may be a side wall on any side of the passage 880. The side wall 884 of the passage may include a sign 886, a sign 888, and the like. The sign 886 may indicate a floor that a vehicle is to reach, and the sign 888 may indicate a traveling direction of the vehicle that is indicated by the passage. For example, when the vehicle travels in the direction indicated by the sign 888, after the vehicle travels out of the passage, the vehicle reaches the floor indicated by the sign 886.

For example, the inter-floor passage may be a unidirectional traveling passage, or may be a bidirectional traveling passage. For example, when the inter-floor passage is a bidirectional traveling passage, for example, the side wall of the passage may include two indicated traveling directions and/or corresponding floors that are to be reached in the indicated directions. The floor that the vehicle is to reach may be determined based on a traveling direction of the vehicle.

It should be understood that the foregoing example of the inter-floor passage is merely an example for ease of description. This is not limited in embodiments of this application.

In some possible scenarios, FIG. 3, FIG. 5, and FIG. 8 may be combined with the scenario shown in FIG. 10. For example, the passage 880 shown in FIG. 10 may be the passage 505, the passage 507, or the like shown in FIG. 5, or may correspond to the road 752, the road 762, or the like shown in FIG. 8. For another example, the vehicle may travel from the floor 350 to the floor 360 through the passage 880.

For example, FIG. 11 is a diagram of an architecture of a system for intelligent vehicle positioning according to an embodiment of this application. The method may include some or all of the following steps.

S1110: Obtain a GNSS signal.

For example, a vehicle may obtain the GNSS signal from a global navigation satellite system, and may determine a current location based on the GNSS signal. For example, the location of the vehicle may be determined based on a received GPS signal, BeiDou signal, and the like, for example, the information may include longitude and latitude information, altitude information, and the like. Further, the location of the vehicle may be determined through fusion processing based on data captured by an IMU.

S1130: Determine a parking location positioning mode based on signal quality of the GNSS signal.

For example, the signal quality of the GNSS signal may be evaluated by using one or more parameters. For example, signal strength may indicate the signal quality of the GNSS signal, or a GNSS status may indicate the signal quality of the signal. This is not limited in embodiments of this application.

The positioning mode may include a precise positioning mode or an inference positioning mode. In the precise positioning mode, a parking location may be determined based on the GNSS signal. In the inference positioning mode, a parking location may be determined based on status information and/or ambient environment information of the vehicle. For example, at least one of parking floor information, parking area information, and a parking space may be determined based on the status information and/or the ambient environment information of the vehicle. The precise positioning mode may also be referred to as a first positioning mode, and the inference positioning mode may also be referred to as a second positioning mode.

For example, in a scenario like an open road or an outdoor parking lot, because an ambient environment does not block a GNSS signal, signal quality of the GNSS signal is good. For example, in this scenario, the signal quality of the GNSS signal may be greater than or equal to a first threshold. In this way, the parking location of the vehicle may be determined based on the GNSS signal. For example, when the signal strength indicates the signal quality of the GNSS signal, for example, the first threshold may be -130 dBm; or if a quantity of satellites above a field of view of a current antenna is not less than 5, it may be considered that the GNSS signal is valid, and the location of the vehicle may be determined based on the GNSS signal. For another example, when the signal strength indicates the signal quality of the GNSS signal, for example, when the signal strength of the GNSS signal is greater than or equal to -125 dBm within consecutive duration (for example, 5 seconds), it may be considered that the signal quality of the GNSS signal is greater than or equal to the first threshold, that is, the first threshold may alternatively be a combination of a signal strength threshold and duration.

It should be understood that the foregoing description of the first threshold is merely an example. This is not limited in embodiments of this application.

For example, when the signal quality of the GNSS signal is greater than or equal to the first threshold, it may be determined that the parking location positioning mode is the first positioning mode; or when the signal quality of the GNSS signal is less than or equal to the first threshold, it may be determined that the parking location positioning mode is the second positioning mode.

In some possible implementations, the GNSS signal may be updated at a specific frequency. During vehicle parking, the parking location may be determined based on the GNSS signal. For example, the GNSS signal is updated once per second. In a process of parking the vehicle, for example, the vehicle is in a parking state when receiving the GNSS signal. When the vehicle does not receive an updated GNSS signal after the vehicle is in a parking pose, longitude and latitude information of the vehicle at the parking location may be determined based on the latest obtained GNSS signal and speed and/or acceleration information of the vehicle. For example, longitude and latitude of a location of the vehicle in a parking posture and the like may be determined based on the longitude and latitude information in the latest obtained GNSS signal and data captured by the IMU, to determine the parking location. For another example, when an update frequency of the GNSS signal is greater than or equal to a preset threshold, longitude and latitude information may be obtained by using the GNSS signal from the process of parking the vehicle to a moment at which the vehicle is in a parking pose. Because the vehicle may be parked at a low vehicle speed, a latest GNSS signal obtained before the vehicle is in the parking pose may also indicate the parking location of the vehicle. For another example, in some scenarios, the GNSS signal may be temporarily blocked during vehicle traveling, and then an update frequency of the obtained GNSS signal may be affected. When the update frequency of the obtained GNSS signal is greater than or equal to a preset threshold (for example, 0.5 Hz), and the signal quality of the GNSS signal is greater than or equal to the first threshold, if it is determined that the vehicle travels into a target parking space, it is detected that a user pulls up a handbrake, the vehicle is powered off, or the like, the parking location of the vehicle may be determined based on the obtained latest GNSS signal. In this way, impact of blocking the GNSS signal for short time is ignored.

In some possible implementations, after the parking location is determined, a first message may be sent, where the first message may indicate the parking location. For example, when during working in a first mode, the first message may indicate the parking location determined based on the GNSS signal; or during working in the second positioning mode, the first message may indicate at least one of a parking floor, a parking area, and the parking floor. Correspondingly, a terminal device (for example, a mobile phone) and/or a cloud server may obtain the first message, to learn of the parking location. For example, the first message may indicate, by indicating first longitude and latitude information, the parking location determined based on the GNSS signal, where the first longitude and latitude information may indicate longitude and latitude of the parking location. For another example, the first message may alternatively indicate, by indicating first latitude and longitude information and first altitude information, the parking location determined based on the GNSS signal, where the first altitude information may indicate an altitude of the parking location.

It should be understood that the first message may be obtained from the vehicle, or the first message may be obtained by using a network device or another device. This is not limited in embodiments of this application.

In some possible implementations, when the signal quality of the obtained GNSS signal is greater than or equal to the first threshold, the vehicle may determine the vehicle stop location by using the first positioning mode. Although positioning and/or navigation can be performed by using a map based on information in the GNSS signal, a user may not intuitively learn of the location of the vehicle based on the information. In this case, in a process of parking the vehicle, when a parking operation (for example, a vehicle gear is adjusted to a reverse gear) is detected, an image of a target parking space may be obtained, and then a sign of the target parking space is determined accordingly. Further, after the sign of the target parking space is determined, target parking space indication information may be sent. Correspondingly, the terminal device and/or the cloud server may obtain the target parking space indication information, to learn of the sign of the target parking space.

For ease of explanation and description, during working in the first positioning mode, in a subsequent embodiment of this application, the longitude and latitude information indicating the parking location of the vehicle is referred to as the first longitude and latitude information.

For example, when the vehicle is located in an environment like in an indoor parking lot or under a viaduct, because an ambient object, an ambient building, or the like blocks the GNSS signal, signal quality of the GNSS signal in this scenario may be poor, that is, the signal quality of the GNSS signal may be less than the first threshold. Consequently, vehicle positioning may not be implemented based on the GNSS signal with poor signal quality, or there is a large error in vehicle positioning. In this case, the parking location of the vehicle may be determined based on at least one of the parking floor information, the parking area information, and the parking space of the vehicle in a parking state. For example, for an indoor parking lot with only one floor, the parking location may be indicated by a parking area and/or a parking space in which the vehicle is located. For another example, for a parking lot including a plurality of parking floors, the parking location may be indicated by a parking floor, a parking area, and a parking space. For another example, when there is no division of parking areas in a parking lot including a plurality of parking floors, the parking location may be indicated by a parking floor and a parking space. For another example, when a parking space has no sign, the parking location may be indicated by a parking floor and a parking area.

In some possible implementations, after the parking location is determined, a first message may be sent. During working in the first positioning mode, the first message may indicate first latitude and longitude information; or during working in the second positioning mode, the first message may indicate at least one of a parking area, a target parking space, and a parking floor.

In this embodiment of this application, the signal quality of the GNSS signal is determined, and then the parking location positioning mode can be flexibly determined based on different scenarios. This helps implement requirements for parking positioning solutions in different scenarios, so that when the parking location is located in a scenario like an outdoor parking lot in which the GNSS signal is good, the parking location may be determined with low resource consumption, and the user can quickly find the vehicle based on the map. In addition, when the parking location is located in a scenario like an indoor parking lot in which the GNSS signal is good, the parking floor, the parking area, the parking space, and the like may be indicated, so that the user can quickly find the vehicle. This improves user experience.

For example, the parking floor information of the vehicle in the parking state may be determined based on a motion status parameter of the vehicle within first duration before the parking state. For ease of explanation and description, the following provides descriptions with reference to FIG. 4 and FIG. 5. For example, in a parking scenario shown in FIG. 4, because a building blocks a GNSS signal, after the vehicle 302 travels into the parking lot, signal quality of the GNSS signal obtained by the vehicle 302 is poor, and a location of the vehicle cannot be determined based on the GNSS signal. In this case, after it is determined that the vehicle enters the indoor parking lot, a traveling track of the vehicle may be determined based on the motion status information of the vehicle in a period from a moment at which the vehicle enters the parking lot to a moment at which the vehicle is in a parking pose, for example, based on an acceleration parameter and/or an angular acceleration parameter that are/is obtained by the IMU. For example, after entering the parking lot, the vehicle travels from the floor 503 shown in FIG. 5 to the floor 501 through the passage 505, and stops in the parking space 304 shown in FIG. 4 on the floor 501. The vehicle may determine an uphill/downhill height of the vehicle based on the traveling track of the vehicle, determine, based on a GPS signal obtained before the vehicle enters the parking lot, a reference floor on which an entrance of the parking lot is located, and determine a relative change value of a floor based on the uphill/downhill height of the vehicle, to determine a floor on which the vehicle is located.

It should be understood that the foregoing manner of determining the floor on which the vehicle is located is merely an example.

In an actual scenario, a floor height between floors may vary greatly for different parking lots. Consequently, a large error may occur if the parking floor is determined based on the uphill/downhill height of the vehicle. In view of this, an embodiment of this application provides a method for determining a parking floor, to determine the parking floor based on a change of a pitch angle of a vehicle. This can avoid a recognition error caused by different building structures of a parking lot, and improve accuracy of the determined parking floor.

For example, FIG. 12 is a schematic flowchart of a method for determining a parking floor according to an embodiment of this application. The method 1200 may include the following steps.

S1210: Obtain pitch angle information of a vehicle.

For example, the pitch angle information of the vehicle may be obtained in real time before the vehicle is parked. For example, data captured by a sensor like an IMU may be obtained in real time, and real-time pitch angle data is determined based on the data. For example, for a manner of obtaining the pitch angle information, refer to a related technology. For brevity, details are not described herein again.

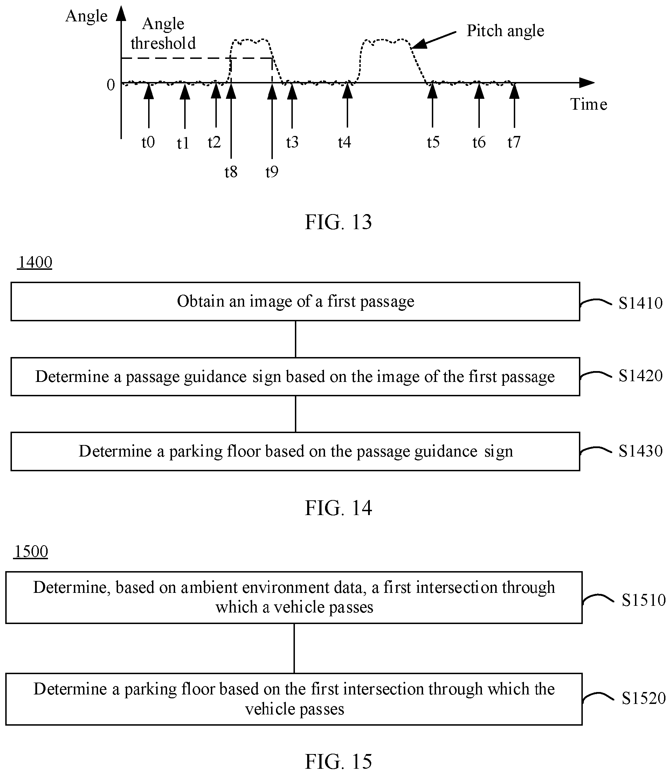

For example, for ease of explanation and description, FIG. 13 is a diagram of pitch angle information of the vehicle according to an embodiment of this application. The following describes FIG. 13 with reference to FIG. 3 to FIG. 10. A dashed line may indicate a change of a pitch angle with time. For example, at a moment 0, the vehicle is located outside a parking lot area. At a moment t0, the vehicle travels into a parking lot, for example, the vehicle passes through a barrier gate. At a moment t1, because a building blocks a GNSS signal, the GNSS signal obtained by the vehicle is less than or equal to a first threshold. At a moment t2, the vehicle travels into the passage shown in FIG. 10. For example, the passage may be the passage 507. At a moment t3, the vehicle travels out of the passage and travels onto the floor 360 through an entrance 338. At a moment t4, the vehicle travels out of the floor 360 through an exit 340 and travels into an inter-floor passage. At a moment t5, the vehicle travels onto the floor 350. At a moment t6, a location of the vehicle is, for example, a location of the vehicle 302. In this case, the user may enable an assisted parking function or an automated parking function, or adjust a gear to a reverse gear, and then the vehicle travels into the target parking space 304. At a moment t7, the vehicle is in a parking pose. Between a moment t8 and a moment t9, a pitch angle is greater than an angle threshold. In other words, an absolute value of the pitch angle is greater than the angle threshold. It should be understood that the foregoing description of FIG. 13 is merely an example. This is not limited in embodiments of this application.

For example, pitch angle information of the vehicle within first duration may be obtained. For example, when it is detected that the vehicle enters the parking lot, the pitch angle information of the vehicle may start to be obtained. For example, a start moment of the first duration may be the moment t0 in FIG. 13, and then the pitch angle information after the moment t0 in FIG. 13 may be obtained. For another example, when it is determined that the signal quality of the GNSS signal is less than or equal to the first threshold, the pitch angle information of the vehicle may start to be obtained in real time. For example, a start moment of the first duration may be the moment t1 in FIG. 13, and then the pitch angle information after the moment t1 in FIG. 13 and the like may be obtained. For another example, when it is determined that the vehicle travels into the parking lot and the GNSS signal is less than or equal to the first threshold, a sensing sensor may be started, and ambient environment information captured by the sensing sensor may be obtained. When it is determined that the vehicle is to travel into the 1^{st} inter-floor passage, the pitch angle information of the vehicle may start to be obtained. For example, a start moment of the first duration may be the moment t2 in FIG. 13, and then pitch angle information after the moment t2 in FIG. 13 may be obtained. For another example, pitch angle information of the vehicle before a moment at which the vehicle travels into the target parking space may be obtained. For example, an end moment of the first duration may be the moment t7 in FIG. 13. For another example, an end moment of the first duration may be the moment t6, the moment t5, or the like in FIG. 13.

For example, a moment at which the vehicle travels into the 1^{st} inter-floor passage may be determined based on the real-time pitch angle information of the vehicle, and a moment at which the vehicle travels out of the inter-floor passage for the last time before the vehicle is in the parking pose may also be determined. In this way, the first duration may be determined. For example, when an apparatus that performs the method needs to obtain the pitch angle information from another apparatus, the another apparatus may provide the pitch angle information of the vehicle within the duration for the apparatus after determining the first duration. This can reduce a data amount of communication between the apparatus and the another apparatus.

It should be understood that the foregoing description of the first duration is merely an example. This is not limited in embodiments of this application.

S1220: Determine a parking floor based on the pitch angle information of the vehicle.

For example, a quantity of inter-floor passages through which the vehicle passes may be determined based on the pitch angle information of the vehicle. For example, as shown in FIG. 13, when the pitch angle of the vehicle is greater than or equal to the angle threshold (for example, 15 degrees or 18 degrees), it may be considered, based on the obtained pitch angle information of the vehicle, that the vehicle is located in an inter-floor passage. For example, it may be determined that the vehicle is located in the inter-floor passage between the moment t2 and the moment t3. In this way, the quantity of inter-floor passages through which the vehicle passes may be determined based on the pitch angle information of the vehicle, to determine a relative change value of a floor. For another example, when the pitch angle is a positive value, it may be considered that the vehicle travels uphill; or when the pitch angle information is a negative value, it may be considered that the vehicle travels downhill. For example, when the vehicle travels from the floor 501 to the floor 503 through the passage 507 shown in FIG. 5, the pitch angle is the negative value; or when the vehicle travels from the floor 503 to the floor 501 through the passage 507 again, the pitch angle is the positive value. In the entire process, it may be considered that the quantity of inter-floor passages through which the vehicle passes is zero. For another example, when the pitch angle of the vehicle is greater than or equal to the angle threshold, and duration is greater than or equal to a preset time threshold (for example, 3s), it may be considered that the vehicle travels into an inter-floor passage. For example, as shown in FIG. 13. If duration between t2 and t3 is less than or equal to the time threshold, it may be considered that the vehicle does not travel into the inter-floor passage. This can reduce interference from an apparatus like a ground speed bump, and improve accuracy of the determined floor.

For example, the parking floor may be determined based on the quantity of inter-floor passages through which the vehicle passes. For example, a relative change of a floor may be determined based on the quantity of inter-floor passages through which the vehicle passes. Further, the parking floor may be determined based on a reference floor. For example, a floor on which the vehicle is located before the vehicle travels into the parking lot may be determined as the reference floor. The reference floor may be determined based on location information indicated in the GNSS signal, and the reference floor may be determined in another manner. In this way, the parking floor may be determined based on the relative change of the floor. It should be understood that, for a method for determining the reference floor, reference may be made to a related technology or the like.

It should be understood that the foregoing method for determining the parking floor is merely an example for ease of description. This is not limited in embodiments of this application.

In this embodiment of this application, the parking floor is determined based on the pitch angle information of the vehicle. Because obtaining of the pitch angle information may not depend on a radar sensor or a camera sensor, the method is applicable to a vehicle with low configuration. In addition, resource consumption of the radar sensor, the camera sensor, and the like in a process of determining the parking location can be reduced. For an electric vehicle, a new energy vehicle, and the like, power consumption of the vehicle can be reduced, and an endurance mileage of the vehicle can be increased.

In an actual scenario, there may be a plurality of forms of inter-floor passages, and a large error may occur if the parking floor is determined based on only the pitch angle information of the vehicle, for example, when the vehicle passes through the inter-floor passages shown in (a) and (d) in FIG. 5, and the vehicle travels from the floor 513 to the floor 503 through the passage shown in (e) in FIG. 5. In addition, because there is large space in the parking floor, and there may be a large quantity of signs, a sign of the parking floor may not be obtained through screening based on an image of the parking floor. In view of this, an embodiment of this application provides another method for determining a parking floor. A sign of the floor connected to a passage may be determined based on an image of the inter-floor passage through which a vehicle passes, so that the parking floor may be determined. According to the method, a parking floor recognition error caused by different passage types can be avoided, and difficulty in screening the sign of the parking floor can be reduced. This can improve accuracy of recognizing the parking floor.

For example, FIG. 14 is a schematic flowchart of another method for determining a parking floor according to an embodiment of this application. The method may include the following steps.

S1410: Obtain an image of a first passage.

For example, the first passage may include an inter-floor passage through which a vehicle passes. For example, when it is determined, based on data captured by a sensing sensor, for example, based on an image captured by a camera sensor and data captured by a radar sensor, that the vehicle may obtain the image of the passage when traveling into the passage. For another example, it may be determined, based on motion status information of the vehicle such as pitch angle information of the vehicle and longitudinal acceleration information of the vehicle, that the vehicle travels into the inter-floor passage, and then a camera sensor may be started to capture the image of the passage. For example, a side-view camera on the vehicle may be started and controlled to capture an image of a wall of the inter-floor passage. For another example, an image of a road surface of the inter-floor passage may be obtained by using a front-view camera, a rear-view camera, and an around view monitor system. For another example, an image of a passage inner wall located on a front passenger side of the vehicle may be obtained by using a camera sensor on a front passenger side.

It should be understood that the foregoing manner of obtaining the image of the first passage is merely an example for ease of description. This is not limited in this application.

S1420: Determine a passage guidance sign based on the image of the first passage.

For example, the passage may include the passage guidance sign. For example, the passage guidance sign may be located on an inner wall of the passage. As shown in FIG. 10, the inner wall of the inter-floor passage may include a sign 886 and a sign 888. Recognized characters of the signs are respectively ">>>" and "To the XXX floor" based on the image of the first passage through optical character recognition or in another manner. For another example, the passage sign may alternatively be located on a ground of the passage.

S1430: Determine a parking floor based on the passage guidance sign.

For example, a floor keyword may be determined based on the passage guidance sign, and then a sign of the parking floor may be determined. For example, the passage guidance sign may be ">>>To the basement level 1»>", "→To B1→", or "Fire passage→". When it is determined that the passage guidance sign includes the floor keyword (for example, "floor" or "B"), and the passage guidance sign matches a traveling direction of the vehicle, a sign of a floor onto which the vehicle is to travel may be determined. For another example, because there is a low probability that the vehicle reverses in the inter-floor passage, a location of the passage guidance sign may be determined based on the first image, and the sign of the floor is determined based on the floor keyword. For example, a passage guidance sign located on the passage inner wall on the front passenger side of the vehicle may be determined based on the image of the first passage, and a sign of a floor onto which the vehicle is to travel may be determined by recognizing the floor keyword in the passage guidance sign. For another example, when the vehicle passes through a plurality of inter-floor passages before traveling into the target parking space, signs of a plurality of floors may be determined based on images of the plurality of passages. For example, the sign of the parking floor may be determined based on a change of a pitch angle of the vehicle and a time sequence of obtaining the signs of the plurality of floors.

It should be understood that the foregoing method for determining the parking floor is merely an example for ease of description. This is not limited in embodiments of this application.

In this embodiment of this application, the sign of the parking floor is determined based on the passage guidance sign of the inter-floor passage through which the vehicle passes, so that accuracy of the determined parking floor can be improved.

In an actual scenario, some inter-floor passages may not include a passage guidance sign, or an included passage guidance sign may not include a floor keyword. In view of this, an embodiment of this application provides another method for determining a parking floor. The parking floor is determined by determining a quantity of first intersections through which a vehicle passes. The method is applicable to a wider scenario. In this way, accuracy of the determined parking floor can be improved.

For example, FIG. 15 is a schematic flowchart of another method for determining a parking floor according to an embodiment of this application. The method may include the following steps.

S1510: Determine, based on ambient environment information, a first intersection through which a vehicle passes.

For example, a first floor may be a floor connected to an inter-floor passage in a traveling direction of the vehicle when the vehicle travels through the inter-floor passage, and the first intersection may be an intersection at which the floor is connected to the passage. In other words, the first intersection may be an exit of the inter-floor passage. In some possible implementations, the first intersection may alternatively be an entrance of the inter-floor passage.

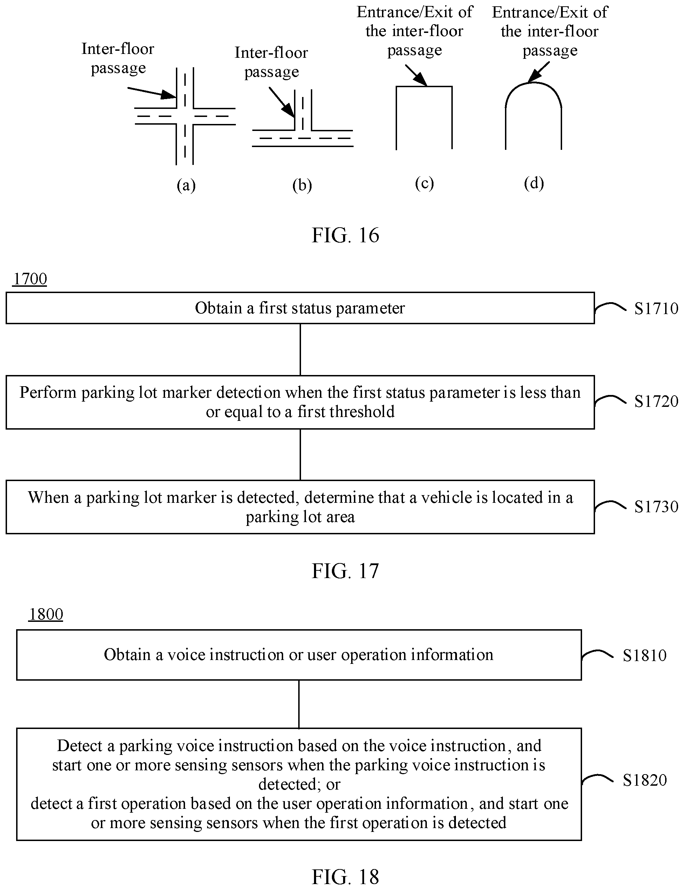

For example, for ease of understanding and description, FIG. 16 is a diagram of a scenario of a connection between an inter-floor passage and a floor according to an embodiment of this application; (a) in FIG. 16 shows a top view of an intersection between the inter-floor passage and the floor. When a vehicle travels out of the passage, the intersection may be a crossroad. (b) in FIG. 16 shows a top view of another intersection between the inter-floor passage and the floor. When the vehicle travels out of the passage, the intersection may be a T-shaped intersection, and the passage may alternatively be located in another direction of the T-shaped intersection. In addition to a road surface shown in the top view, the inter-floor passage shown in (a) and (b) in FIG. 16 may include a wall having a side surface, or may include a wall having no side surface. (c) in FIG. 16 shows a front view of an entrance/exit of an inter-floor passage, and a cross section of the passage may be of a square shape. (d) in FIG. 16 shows a front view of an entrance/exit of another inter-floor passage, and a cross section of the passage may be of an arch shape. A solid line part in each of (c) and (d) in FIG. 16 may also be understood as a shape of a contour of an inner wall of the inter-floor passage.

For example, the first intersection may be determined based on the ambient environment information captured by a sensing sensor. For example, when traveling in the inter-floor passage, the vehicle may determine an entrance/exit of the passage on a side of a traveling direction of the vehicle based on data captured by a radar sensor, a camera sensor, and the like, for example, as shown in (c) and (d) in FIG. 16, to determine the first intersection. For another example, when traveling in the inter-floor passage, the vehicle may obtain the ambient environment information by using a camera sensor. When an intersection feature is detected, for example, as shown in (a) and (b) in FIG. 16, the first intersection may be determined. For another example, in a process from traveling into a parking lot by the vehicle to traveling into a target parking space by the vehicle, the vehicle may detect, in real time, a plurality of intersections through which the vehicle passes in a traveling process, and record a time period in which the vehicle passes through the plurality of intersections. For example, as shown in (a) in FIG. 5, when the vehicle travels from the floor 501 to the floor 503 through the passage 511, a time period within which a pitch angle change value is greater than or equal to an angle threshold (for example, 15 degrees) may be determined based on pitch angle information of the vehicle. When the time period may match a time period in which the vehicle passes through an intersection, the intersection may be determined as an intersection related to the inter-floor passage. For example, the first intersection is the exit of the passage. Further, an intersection through which the vehicle passes when the vehicle travels into the passage is screened out from the intersection related to the inter-floor passage, and then the first intersection may be determined.

It should be understood that, for a manner of recognizing an intersection and a manner of recognizing the entrance/exit of the passage, reference may be made to a related technology.

S1520: Determined a parking floor based on the first intersection through which the vehicle passes.

For example, a relative change of a floor may be determined based on the determined first intersection. For example, the first intersection through which the vehicle passes after traveling uphill may be defined as a first intersection through which the vehicle passes in a positive direction, and the first intersection through which the vehicle passes after traveling downhill may be defined as a first intersection through which the vehicle passes in a negative direction, or the first intersection may be defined in another manner. In this way, the first intersection through which the vehicle passes within first duration may be determined, and then the relative change of the floor is determined. For another example, information about a moment at which the vehicle passes through the first intersection may be determined based on the recognized first intersection. For example, a moment at which the vehicle passes through the entrance/exit of the passage may also be determined based on the pitch angle information of the vehicle. In this case, the moment at which the vehicle passes through the first intersection may match the moment at which the vehicle passes through the entrance/exit of the passage, and then the relative change of the floor is determined.

It should be understood that the foregoing method for determining the parking floor is merely an example for ease of description. This is not limited in embodiments of this application.

In some possible implementations, when it is determined that the vehicle is located in the inter-floor passage, a second sensor may be started, and the second sensor may be controlled to capture the ambient environment information. The ambient environment information may be used to determine the first intersection. For example, it may be determined, based on motion status information of the vehicle such as the pitch angle information of the vehicle and longitudinal acceleration information of the vehicle, that the vehicle is located in the inter-floor passage. When it is determined that the vehicle is located in the inter-floor passage, the camera sensor and/or the radar sensor are/is started. For example, the camera sensor and/or the radar sensor that are/is configured to capture environment information on the side of the traveling direction of the vehicle may be started, and the one or more sensors are controlled to capture the ambient environment information. In this way, the first intersection may be determined. This can reduce resource consumption of the sensing sensor like the camera sensor or the radar sensor.

In some possible implementations, after the parking floor is determined, a parking floor indication message may be sent. The parking floor indication message may indicate the parking floor. For example, the parking floor indication message is sent, so that a user can learn of the parking floor on a terminal device like a mobile phone. For example, the parking floor indication message may be sent when it is detected that the user adjusts a gear to a parking gear, pulls up a handbrake, determines a sign of a parking space on an interaction interface, leaves the vehicle, turns off the vehicle, or the like. For example, the parking floor indication message may be directly sent to the terminal device connected to the vehicle through Bluetooth, or may be sent to the terminal device through a network device or the like. For another example, the parking floor indication message may be sent to a server through a network, and the server sends the message to a terminal device that logs in to/is associated with a same account as the vehicle, so that the user can learn of the parking floor by using the terminal device like the mobile phone. In this way, the user can learn of the parking floor without taking a photo of the parking floor by using the terminal device like the mobile phone or a tablet computer. This improves user experience. For another example, after the parking floor indication message is received, the user may make a response to the information. For example, when the user gives a positive acknowledgement, information about the parking floor may be stored in the terminal device like the mobile phone or the corresponding server. It should be understood that the foregoing description of the parking floor indication message is merely an example. This is not limited in embodiments of this application.

In this embodiment of this application, the parking floor is determined by determining the quantity of first intersections through which the vehicle passes, so that impact of a building structure of an indoor parking lot and the like on recognizing the parking floor can be reduced. The method is applicable to a wider scenario. In this way, accuracy of the determined parking floor can be improved.

As described above, after the vehicle currently travels into the parking lot like a large parking lot, because terrain and an environment of the parking lot are complex, and GPS signal strength of some parking lots is weak, a location of the vehicle cannot be accurately located. In this case, the user usually needs to record the location of the vehicle by manually taking a photo. As a result, user experience is poor. However, some functions related to a parking scenario, for example, searching for an idle parking space and assisted parking, usually need to be triggered by the user manually or by using a voice, and a related requirement in the scenario cannot be directly provided for the user, resulting in poor user experience. Further, when autonomous driving is performed, or the user remotely operates a vehicle, if the functions related to the parking scenario are still triggered by the user manually or by using a voice, user experience is further reduced. An embodiment of this application provides a method for determining that a vehicle is located in a parking lot area, to determine, based on a status parameter of the vehicle and a detection result of a parking lot marker, whether the vehicle is located in the parking lot area. This helps intelligently trigger a function related to a parking scenario, and helps improve user experience.

For example, FIG. 17 is a schematic flowchart of a method for determining that a transportation means travels into a parking lot according to an embodiment of this application. The method 1700 may include the following steps.

S1710: Obtain a first status parameter.

For example, the first status parameter may include at least one of signal quality of a GNSS signal, a vehicle speed, and a distance between a vehicle and an entrance of a parking lot.

For example, the first status parameter may include the signal quality of the GNSS signal. For example, in a process of entering an indoor parking lot like a basement parking lot or a multistory garage, because an external environment blocks the GNSS signal, signal strength of the GNSS signal in this scenario may be poor, and vehicle positioning may not be implemented based on the GNSS signal with poor signal quality, or there is a large error in vehicle positioning. Even if a terminal device (for example, a mobile phone or a tablet computer) used by a user or a vehicle driven by a user can perform navigation by using map software, because a location of the terminal device or the vehicle cannot be determined based on the GNSS signal, whether the vehicle is to travel into the parking lot may not be determined based on map information. In this case, based on the signal strength of the GNSS signal, for example, when the signal strength of the GNSS signal is less than or equal to -90 dBm, a sensor like a radar or a camera may be started to capture ambient environment data, to determine a scenario in which the vehicle is located. This can avoid entire-process turn-on of the sensor like the radar and the camera on the vehicle, so that overheads of the sensor can be reduced. For another example, only when a quantity of satellites above a field of view of an antenna of the vehicle is greater than or equal to a threshold (for example, 5), the GNSS satellites can provide an effective signal for the vehicle. Because the external environment blocks the GNSS signal, a quantity of satellites above the current antenna may be less than the threshold. In this case, the sensor like the radar or the camera may be started to capture the ambient environment data based on the quantity of satellites above the current field of view, to determine the scenario in which the vehicle is located.

For example, the first status parameter may include the vehicle speed. For example, in a process of entering an indoor building like a basement parking lot or a multistory garage, because a driving environment in this scenario is complex, the vehicle may travel at a low vehicle speed. In this case, when it is determined that the vehicle travels at the low speed, the sensor may be started to capture data.

For example, the first status parameter may include the distance between the vehicle and the entrance of the parking lot. For example, the distance between the vehicle and the entrance of the parking lot may be determined based on map information and a location of the vehicle. For example, in a process in which the user navigates to the parking lot by using the map software, the distance between the vehicle and the entrance of the parking lot may be determined based on the map information and the location of the vehicle. When the distance between the vehicle and the entrance of the parking lot is less than or equal to a preset distance, the sensor may be controlled to be started to capture ambient environment data.

For example, the first status parameter may be a combination of the signal quality of the GNSS signal, the vehicle speed, and the distance between the vehicle and the entrance of the parking lot. For example, an occasion for triggering the sensor to capture data may be determined based on the signal quality of the GNSS signal and the distance between the vehicle and the entrance of the parking lot. For example, in a process in which the vehicle travels into the basement parking lot, it may be determined, at a moment 1 based on a map, that the distance between the vehicle and the entrance of the parking lot is less than or equal to a preset distance (for example, 30 meters), and that the signal strength of the obtained GNSS signal is greater than a preset threshold. The signal strength of the obtained GNSS signal changes as the vehicle travels. At a moment 2, the distance between the vehicle and the entrance of the parking lot is still less than or equal to the preset distance, but the signal strength of the GNSS signal is less than or equal to the preset threshold. The moment 2 is later than the moment 1. In this case, the sensor may be triggered at the moment 2 to capture data. For another example, in a process in which the vehicle travels into the basement parking lot, the vehicle may need to pass through a barrier gate to enter the parking lot. For example, as shown in FIG. 3, the vehicle speed of the vehicle is less than or equal to a preset threshold at a moment 3. In this case, the sensor is triggered based on the signal strength of the GNSS signal, the vehicle speed, and a first distance to capture data. This can prevent the sensor from being started too early, so that overheads of the sensor can be reduced. It should be understood that the foregoing description of triggering, based on the first status parameter, the sensor to capture ambient environment information is merely an example for ease of description. This is not limited in embodiments of this application.

S1720: Perform parking lot marker detection when the first status parameter meets a preset condition.

For example, the preset condition may correspond to the first status parameter. For example, when the first status parameter includes the signal quality of the GNSS signal, the preset threshold may include a threshold related to the signal strength of the GNSS signal. For example, the signal strength of the GNSS signal needs to be greater than or equal to a signal strength threshold (for example, -124 dBm).

For example, parking lot marker detection may be performed based on data captured by a sensing sensor. The sensing sensor may include a radar sensor and/or a camera sensor. Correspondingly, the ambient environment information may include data captured by the radar sensor and/or an image captured by a camera. For example, the sensing sensor may include a radar, for example, a lidar. When the signal quality of the GNSS signal of the vehicle meets the preset condition, the radar may be started to capture data, and then whether the vehicle is in a scenario of entering the parking lot may be determined based on the data captured by the lidar. The sensing sensor may be a camera sensor, for example, a fisheye camera, a front-view camera, or a side-view camera. When the signal quality of the GNSS signal is less than a signal quality threshold, and the distance between the vehicle and the entrance of the parking lot is less than or equal to the preset distance, the camera sensor may be triggered to capture data, and then whether the vehicle is in a scenario of entering the parking lot may be determined based on the data captured by the camera. When it is determined that the first status parameter meets the preset condition, if the sensing sensor is already in an on state, data captured by the sensing sensor after the moment may be obtained, and then parking lot marker detection is performed. After processing (for example, filtering or feature extraction) is performed on the data captured by the sensing sensor, parking lot marker detection may be performed. It should be understood that the foregoing description of the sensing sensor is merely an example for ease of description. This is not limited in embodiments of this application.

For example, when the first status parameter meets the preset condition, the sensing sensor may be started, and the data captured by the sensing sensor is obtained. Starting the sensing sensor may be controlling the sensing sensor to be started and capture the ambient environment information, or may be sending a message to another control apparatus or sensing sensor. The message may indicate the sensing sensor to start. When the sensing sensor is already in an on state, the message may indicate to keep the sensor in the on state. For example, when the vehicle performs the method, and determines that the first status parameter meets the preset condition, the vehicle may control the sensing sensor on the vehicle to be started, for example, start the front-view camera shown in FIG. 2, to obtain the ambient environment information captured by the sensing sensor. For another example, when an apparatus like a chip, an in-vehicle infotainment, or an on-board computer performs the method, the chip may send a message to a sensor or a sensor control apparatus, where the message may indicate to start one or more sensing sensors.

For example, parking lot marker detection may be performed based on the data captured by the sensing sensor. For example, a parking lot marker may be a parking lot barrier gate, a parking space, a column with a parking area sign, or a parking lot guidance sign. For example, whether there is a parking lot marker may be detected by performing feature extraction or the like on the obtained ambient environment information. It should be understood that a parking lot marker detection manner is not limited in embodiments of this application.

S1730: When the parking lot marker is detected, determine that a vehicle is located in a parking lot area.

For example, when the ambient environment information includes the parking lot marker, it may be determined that the vehicle is located in the parking lot area. For example, the parking lot marker may be an object, a sign, or the like that does not move in the parking lot, for example, a parking lot barrier gate, a parking space, a parking lot guidance sign, or a parking lot indication sign. For another example, a sensor like a radar or a camera of a vehicle sensing system may be triggered based on the first status parameter. The sensor may capture the ambient environment information. Based on the data captured by the sensor, for example, based on the parking lot barrier gate, the parking space, the parking lot guidance sign, or the like that may be included in the image captured by the camera and based on point cloud data captured by the lidar for barrier gate recognition, corresponding detection may be performed, for example, feature extraction may be performed on the image and the point cloud data, and the marker such as the barrier gate or the parking space may be recognized by using a deep learning network, to determine that the vehicle is located in the parking lot area. For another example, that the vehicle is located in the parking lot area may mean that the vehicle is already located inside the parking lot, or that the vehicle is located at the entrance of the parking lot, and the vehicle may enter the parking lot from the entrance. In other words, the parking lot area may include an area in which the entrance of the parking lot is located. It should be understood that the foregoing description of the parking lot marker and the parking lot area is merely an example for ease of description. This is not limited in embodiments of this application.

For example, after it is determined that the vehicle is located in the parking lot area, one or more sensing sensors may be started, the sensors are controlled to capture the ambient environment information, and a marker in a parking area is detected based on the ambient environment information. For example, after the sensing sensor captures the data, the sensor may be turned off. After the parking lot marker is detected based on the data captured by the sensing sensor, one or more sensors in the sensing system may be started to obtain the ambient environment information. For example, the ambient environment information may be used to detect the marker in the parking area. In this way, sensors in a parking lot environment are automatically started, and the one or more sensors may be controlled to capture data, to provide required data for a corresponding function.

For example, after it is determined that the vehicle is located in the parking lot area, a first function may be controlled to be enabled.

For example, the first function may be applied to a parking scenario. For example, after it is determined, based on data of the camera, that the vehicle travels into a parking lot, a functional module related to the parking scenario may be woken up and triggered, for example, a function of recognizing a parking space may be triggered, to determine an idle parking space in the environment based on the data captured by the sensing sensor, and display the idle parking space on a terminal like a screen in a vehicle cockpit or a mobile phone of a user. For another example, a function of recognizing a parking area and a parking floor may be triggered, to determine the parking area and the parking floor in which the vehicle is parked. For another example, a function of implementing automated parking by enabling an automated parking system may be triggered, to trigger a related function and jump a scenario mode without a need for a user to deliver an instruction. This can improve user experience. For another example, a vehicle location inference function may be enabled, for example, a real-time location of the vehicle may be inferred. For another example, synchronous localization and mapping (simultaneous localization and mapping, SLAM) may be triggered, so that a map of the parking lot may be created, and the created map may be stored in a database. In this way, when the user subsequently parks in the parking lot, automated parking is implemented by invoking the map in the database; or the user may remotely control the vehicle based on the map. For example, the user can remotely control, by recording a traveling track of the vehicle and based on the map, the vehicle outside the parking lot to travel to a vicinity of the user. This can avoid a process of searching for the vehicle by the user, and improve user experience.

For example, controlling enabling of the first function may be directly controlling enabling of the first function. For example, after determining that the vehicle enters the parking lot, a vehicle control apparatus that performs the method may invoke a function related to the parking scenario of the vehicle. Alternatively, controlling enabling of the first function may be controlling enabling of the first function by sending a message to another apparatus. For example, after determining that the vehicle enters the parking lot, an apparatus like a chip or an in-vehicle infotainment that performs the method may send a message to another chip, another apparatus, or the like. The message may indicate to enable the first function.

It should be understood that the foregoing description of the first function is merely an example for ease of description. This is not limited in embodiments of this application.

In this embodiment of this application, when the first status parameter meets the preset condition, the ambient environment information is obtained. This can reduce dependence on the sensor to capture the ambient environment information, and reduce working time of the sensor, to reduce power consumption of the sensor. Whether the vehicle is located in the parking lot area may be determined through parking lot marker detection. This helps the vehicle enable a parkingrelated function without a user operation, to help improve user experience.

As described above, because terrain and environments of some parking lots are complex, in an actual parking scenario, the parking lot may have no idle parking space, a small quantity of idle parking spaces, or the like. In a process in which the vehicle is parked in the parking lot, before the vehicle travels into a parking space, it may take long time to search for the parking space. If some functions, processors, sensors, and the like related to the parking scenario, for example, functions such as recognizing a parking space and recognizing a parking area and a related sensor, may be started immediately after the vehicle enters the parking lot, a large amount of invalid data may be obtained. Capturing and processing of the invalid data may cause high resource overheads, and an invalid result obtained by processing the data may affect normal running of the functions. An embodiment of this application provides a method for obtaining data of a sensor. When it is determined that a user has a parking intention, a sensor related to a parking scenario is started. This can reduce corresponding resource overheads of the sensor, and avoid interference in a related function from invalid data captured by the sensor.

For example, FIG. 18 is a schematic flowchart of a sensor startup method according to an embodiment of this application. The method 1800 may include some or all of the following steps.

S1810: Obtain a voice instruction or user operation information.

For example, a user may perform voice interaction with a vehicle, a terminal device, or the like. For example, the user may perform voice interaction with the vehicle, a mobile phone, or the like by using a voice wakeup word, by pressing a physical button, by pressing a virtual button, or the like. After the voice interaction starts, the vehicle or the like may obtain the voice instruction delivered by the user in the voice interaction.

For example, the user may perform an operation on the vehicle, and may obtain the user operation information based on the user operation. For example, when the user rotates a steering wheel, a steering wheel angle may be obtained. When the user steps on a brake pedal, a brake pedal stroke may be obtained. When the user adjusts a gear, gear information may be obtained. When the user performs interaction by using an interaction device like a central display screen, an operation performed by the user by using the interaction device may be obtained. It should be understood that the foregoing manners of obtaining the voice instruction and the user operation information are merely examples. This is not limited in embodiments of this application.

S1820: Detect a parking voice instruction based on the voice instruction, and start one or more sensing sensors when the parking voice instruction is detected; or detect a first operation based on the user operation information, and start one or more sensors when the first operation is detected.

For example, the parking voice instruction may be a voice instruction indicating that the user has a parking intention. For example, in the voice interaction, the user may deliver a voice instruction that may indicate that the user has the parking intention, for example, "I want to park", "Enable automated parking", or "Search for a parking space". Correspondingly, the voice instruction of the user may be captured by a microphone or the like, and then the voice instruction with the parking intention may be recognized by obtaining the voice instruction of the user.

It should be understood that the foregoing description of the parking voice instruction is merely an example. This is not limited in embodiments of this application.

For example, the first operation is detected, and the first operation may indicate that the user has the parking intention. For example, the first operation may be that the user taps a physical or virtual button, a button, or the like that triggers the parking intention. For example, the user may tap an "Automated parking" virtual button on an interaction apparatus like a central display screen, or may press a physical button with an "Automated parking" function in the vehicle cockpit. When the foregoing operation of the user is detected, it may be determined that there is the parking intention. For another example, the user may perform remote parking on a terminal device like a mobile phone, and send a remote parking instruction to the vehicle. Correspondingly, the vehicle may obtain the instruction, and may determine, by using the instruction, that the user has the parking intention. For another example, the user may indicate, on an interaction apparatus like a central display screen, a parking space expected to be parked, and it may be determined, by detecting the information, that the user has the parking intention.

For example, it may be determined, based on an area in which the vehicle is located, that the user has the parking intention. In other words, detection performed on the first operation may be combined with a scenario in which the vehicle is located. For example, after it is determined that the vehicle is located in a parking lot area, the user may operate the vehicle to reversely travel into a parking space. In this case, when it is detected that a gear is adjusted to a reverse gear, it may be determined that the user has the parking intention. For another example, it may be determined, based on a vehicle speed of the vehicle and an operation of the user, that the user has the parking intention. For example, when it is determined that the vehicle travels into a parking lot, and the user controls an acceleration pedal, an acceleration manual tab, a brake pedal, and the like to control a vehicle speed to fall within a parking vehicle speed threshold (for example, 2 km/h), it may be determined, based on a scenario of the parking lot and status information of the vehicle, that the user has the parking intention by detecting an operation of the user.

It should be understood that the foregoing description of the first operation is merely an example for ease of description. This is not limited in embodiments of this application.

For example, after it is determined that the user has the parking intention, the one or more sensing sensors may be started, and the one or more sensing sensors are controlled to capture ambient environment data. The sensor may be a sensor like a camera or a radar, and the ambient environment information may be data captured by the camera and/or the radar.

For example, starting the sensing sensor may be controlling the sensing sensor to be started and capture the ambient environment information. For example, a message may be sent to another control apparatus (for example, a sensor control apparatus) or another sensor. The message may indicate to start the sensor. After the sensor is started, the sensor may capture the ambient environment information.

For example, when the sensor is controlled to be started, if the sensor is already started, controlling startup of the sensor may be controlling the sensor to be in an on state, to obtain data subsequently captured by the sensor.

For example, the sensing sensor may be controlled to capture data. For example, after the sensing sensor is started, the sensing sensor may automatically capture data. When the sensor is in a mode in which no data is captured, for example, a sleep mode or a low power consumption mode, after being started, the sensor may alternatively switch a working mode of the sensor, to control the sensor to capture the data.

It should be understood that the foregoing description of starting the sensor to capture the data is merely an example for ease of description. This is not limited in embodiments of this application.

When the vehicle is located in the parking lot area, there may be a case in which there is no idle parking space or the vehicle needs to search for an idle parking space. In this embodiment of this application, the sensor is started when it is determined that the user has the parking intention, so that working duration of the sensor can be reduced, and overheads of the sensor can be reduced.

Further, data captured by the one or more sensors may be obtained. When data captured by a plurality of sensors is obtained, the plurality of sensors may be sensors of a same type mounted at different locations, or may be sensors of different types mounted at different locations. For example, when it is detected that the gear is adjusted to the reverse gear, data captured by the rear-view camera shown in FIG. 2 may be obtained. When the first operation or a voice instruction like "I want to park" is detected, data captured by a plurality of lidars and/or a plurality of cameras shown in FIG. 2 may be obtained, or data obtained by performing fusion processing on the data captured by the plurality of radars or cameras may be obtained.

For example, information about an environment in which the vehicle is located in a parking process may be determined based on the data captured by the sensors. For example, a vehicle, an in-vehicle infotainment system, a processor, a chip, or the like may determine an occupied parking space, an idle parking space and a parking space number of the idle parking space, another vehicle, a parking lot column, a parking lot indication sign, an area sign, other obstacle information, and the like in the parking lot based on environment data captured by a sensor like a camera sensor or a radar. For another example, a vehicle control apparatus, a vehicle-mounted chip, or the like, for example, a cockpit domain controller, may obtain the data captured by the plurality of sensors, to determine the information about the environment in which the vehicle is located in the parking process. The cockpit domain controller may directly obtain, from the sensors, the data captured by the sensors, or may obtain the data captured by the sensors by using another apparatus, for example, may obtain the data captured by the sensors by using an automated parking assist (automated parking assist, APA) system. Further, the cockpit domain controller may obtain, from the automated parking assist system, the data captured by the sensors. When the APA system may process the data captured by the sensors, the cockpit domain controller correspondingly obtains the data captured by the sensors, or the cockpit domain controller obtains data obtained by processing the data captured by the sensors by the APA system.

It should be understood that the foregoing method for obtaining the data of the sensor is merely an example for ease of description. This is not limited in embodiments of this application.

In this embodiment of this application, when it is determined that the user has the parking intention, the ambient environment information captured by the sensor is obtained, so that overheads used for processing the ambient environment information can be reduced. Further, when it is determined that the user has the parking intention, the sensor is started, so that the sensor can be started without a need for the user to manually start the sensor. This can reduce overheads of the sensor, and can also improve user experience.

As described above, after the vehicle currently travels into the parking lot like a large parking lot, because terrain and an environment of the parking lot are complex, and GPS signal strength of some parking lots is weak, a location of the vehicle cannot be accurately located. In this case, the user usually needs to record the location of the vehicle by manually taking a photo. As a result, user experience is poor. An embodiment of this application provides a method for recognizing a sign of a parking space, to recognize the parking space in which a vehicle is located. This helps a user learn of the sign of the parking space without taking a photo of the parking space by using a terminal device like a mobile phone, so that the user learns of a location of the vehicle by using the sign, and then the user can search for the vehicle.

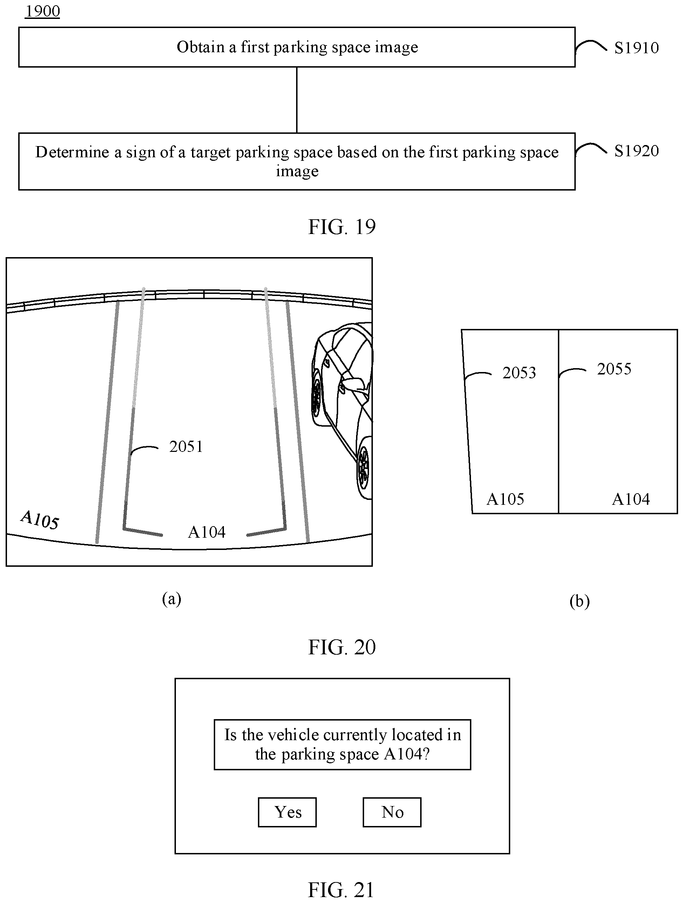

For example, FIG. 19 is a schematic flowchart of a method for recognizing a sign of a parking space according to an embodiment of this application. The method 1900 includes some or all of the following steps.

S1910: Obtain a first parking space image.

For example, the first parking space image may include at least one parking space including the target parking space. For example, as shown in FIG. 6, due to a limitation of a factor like a mounting location of a sensor, the vehicle 410 that has been parked in a parking space may fail to obtain, by using a camera on the vehicle 410, an image of the parking space 408 in which the vehicle 410 is located. Therefore, in a process of parking the vehicle 402, when the vehicle is partially or completely located outside a parking space, a camera captures an image of the parking space. For example, a camera sensor on the vehicle may capture an image of the parking space 404 of the vehicle and an image of the sign "A106" of the parking space. The image may further include a part or all of another parking space adjacent to the parking space 404. In other words, the first parking space image may include a part or all of the at least one parking space.

For example, the first parking space image may be images of the at least one parking space at a plurality of moments. For example, capturing of an image of an ambient environment by a camera on a vehicle depends on a location of the vehicle. As shown in FIG. 6, in a process in which the vehicle 402 travels from a current location to the parking space 404, the vehicle 402 may not obtain, through recognition based on an image captured by the camera at a moment in the middle, information related to a parking space. For example, an image that is of a number of a parking space and that is captured by the camera may be a character "A107" shown by the sign 412 in FIG. 6, or may be a part of a character "A106" shown by a sign 405 in FIG. 6 (for example, a character "106" or "A10"), or the like. Although the character "A107" is not the number "A106" of the target parking space 404 of the vehicle, because the number of the parking space obtained based on the character may still fuzzily indicate a parking location of the vehicle 402, the information may also indicate the parking space of the vehicle to some extent. For example, the user may learn of, based on the information and a parking space query system of the parking lot, an area in which the vehicle is located. The information may not cause excessive misleading to the user. However, for a character (for example, "106") including only partial content of the character "A106", the character may not indicate the parking space of the vehicle, but the number of the target parking space may be determined based on a plurality of images captured by the camera within first duration. For example, characters "A10" and "106" are characters of the number of the parking space in two consecutive images captured by the camera, and the number "A106" of the target parking space may be recognized according to a continuous optical character recognition (optical character recognition, OCR) fusion recognition method. That is, based on the plurality of images captured by the camera sensor within the first duration, information that cannot be obtained from a single image may be obtained by fusing the plurality of images. This can improve accuracy of recognizing parking space information. The first duration may be any duration. This is not limited in embodiments of this application. For another example, when the vehicle has a transparent chassis function, obtaining of an image of the target parking space may not be limited to a location of the vehicle. This facilitates obtaining of the image of the target parking space, and transparency of the vehicle chassis can be implemented by using the transparent chassis function. For example, in a traveling process of the vehicle, transparency of the vehicle chassis may be implemented in a manner like image stitching based on data captured by an around view monitor system.

For example, the target parking space may be determined based on parking space indication information, and the parking space indication information may indicate an area in which the target parking space is located. For example, as shown in FIG. 6, before the vehicle 402 travels into a parking space, the user may indicate a parking space of the vehicle. For example, the user may specify, by using an interaction apparatus in a cockpit like a vehicle-mounted display or a terminal device like a mobile phone, the parking space into which the vehicle is to travel, or the vehicle may recognize an ambient idle parking space, and determine the parking space of the vehicle according to a preset rule. For example, the vehicle may enable functions such as automated parking and assisted parking, and may select a parking space with a shortest traveling distance between a current location to the idle parking space as the target parking space, or select an idle parking space with highest parking probability as the target parking space based on an ambient obstacle, to obtain the parking space indication information. For another example, after determining, based on the parking space indication information, the area in which the target parking space is located, the vehicle may trigger, to work, only at least one camera responsible for capturing an image of the area in which the parking space is located (for example, trigger the rear-view camera in FIG. 2), to obtain the first parking space image. This can reduce overheads of the sensor required in a process of obtaining the image. For another example, when using functions such as automated parking and assisted parking, the vehicle may use, based on the parking space indication information, an image captured when a parking space is recognized, for example, may perform segmentation processing on the image, to obtain an image including only the parking space. This can prevent the image of the parking space from being captured again, to reduce sensor overheads. For another example, the vehicle may obtain an image captured by the around view monitor system, and determine a part of the target parking space in the image based on selection of the user for the parking space. For another example, the vehicle may estimate a traveling route of the vehicle based on an image, for example, a steering wheel angle, captured by the around view monitor system, to determine a part of the target parking space in the image. It should be understood that the foregoing description of the parking space indication information is merely an example for ease of description. This is not limited in embodiments of this application.

For ease of explanation and description, FIG. 20 is a diagram of an image of a parking space according to this embodiment of this application. (a) in FIG. 20 may be an image captured by a vehicle-mounted camera when the vehicle 402 in FIG. 6 travels into the parking space 404. The image may be displayed on a vehicle-mounted display (for example, a central display screen). A display interface may further include a mark 2051, where the mark may be used to highlight the target parking space 404 in the image. A user may learn, by using the mark, that the vehicle is to travel into the parking space. (b) in FIG. 20 may be a diagram of an idle parking space determined based on the image in (a) in FIG. 20. An area 2053 may indicate a part of the parking space 406, and an area 2055 may indicate an entire area of the parking space 404.

For example, the target parking space may be determined based on proportions of a plurality of parking spaces in the first parking space image. For example, when capturing an image of a parking space by using a rear-view camera, a front-view camera, or the like, the vehicle may determine proportions of the plurality of parking spaces in the image based on the captured image. For example, the vehicle may determine sizes or proportions of the area 2053 and the area 2055 in (b) in FIG. 20 in the captured image, to determine a parking space of the vehicle, and accordingly determine an image of the target parking space. For another example, when an image captured by a camera (for example, a fisheye camera) is greatly distorted, distortion correction may be performed on the image, and then proportions of the plurality of parking spaces in a corrected image are determined.

S1920: Determine a sign of the target parking space based on the first parking space image.

For example, the sign of the parking space may be determined based on the first parking space image. For example, a word included in the image may be recognized. For example, an OCR technology is used to recognize the word in the image, to obtain the sign of the parking space. The sign may be a combination of a digit and a letter, for example, the character "A106" shown by the sign 404 in FIG. 6; or may be only a digit, for example, "0247"; or may be only a letter; or may be a combination of a color, a digit, and a letter; or the like. For brevity, examples are not described one by one herein again.

For example, the first parking space image may be appropriately processed in a process of determining the sign of the parking space. For example, to reduce overheads used for data processing, data captured by a sensor may be processed. For example, word detection may be performed on the image. If a word is detected, an area in which the word is located may be cropped to obtain an image of the word area, and then image processing may be performed on the image with a small size. This helps reduce overheads used for data processing. For another example, when a plurality of images may be obtained, word parts in the plurality of images may be extracted, and corresponding matching is performed, to determine the sign of the parking space. This can improve accuracy of the determined sign.

For example, one or more texts may be determined based on the first parking space image. For ease of explanation and description, the text may also be referred to as the parking space information text. For example, as shown in FIG. 6, in a process in which the vehicle 402 travels from a current location to an expected parking space 404 of the vehicle 402, in addition to the sign of the parking space, data captured by the camera on the vehicle 402 may further include other word content, for example, may include "Dedicated parking space", "Fire parking space", "Do not occupy", a license plate number (for example, "Jing A 00001") of a vehicle in an occupied parking space, and the like. When a corresponding text is obtained by recognizing a parking space image captured by a camera sensor, a plurality of texts may be obtained, and the sign of the parking space may be determined from the plurality of texts.

For example, the sign of the target parking space may be determined based on confidence of the one or more parking space information texts.

For example, the confidence of the parking space information texts may be determined based on a traveling track of the vehicle. For example, as shown in FIG. 6, in a process in which the vehicle 402 travels from the current location to the target parking space 404, images captured by the camera on the vehicle 402 at a plurality of moments may include a plurality of texts (for example, "A106" and "A107"), and coordinates of the plurality of texts at the plurality of moments may be determined based on a preset coordinate system. In this way, tracks corresponding to the plurality of texts may be determined, and confidence of the texts may be determined based on the traveling track and/or a planned track of the vehicle. For example, a track corresponding to the text "A106" may match a traveling track of the vehicle 402, but a degree of matching between a track corresponding to the text "A107" and the traveling track of the vehicle 402 is low. In this case, it may be determined that confidence of the text "A106" is higher than that of the text "A107". In this way, the text "A106" may be determined as the sign of the target parking space. This can improve accuracy of determining the sign of the target parking space.

For example, the confidence of the parking space information texts may be determined according to a confidence rule. For example, it may be considered that a text including only a word (for example, "Fire hydrant" or "Safety exit") is an inappropriate text. In this case, screening may be performed on obtained words, so that accuracy of the obtained sign of the target parking space can be improved. For another example, according to an obtained confidence priority table, confidence analysis may be performed on words recognized from the parking space image. For example, Table 1 is an example table of a confidence priority of a sign of a parking space according to this embodiment of this application. Confidence sorting may be performed on the parking space information texts according to Table 1, and the sign of the target parking space is determined based on confidence. This improves accuracy of the determined sign of the target parking space. It should be understood that the foregoing confidence rule may be preconfigured, or may be obtained in another manner. This is not limited in embodiments of this application.

It should be understood that the foregoing description of the confidence is merely an example, and this is not limited in embodiments of this application. For example, confidence of a text may be determined based on a length, semantics, and the like of the text.

**Table 1**

| Text format | Example | Confidence priority |
|---|---|---|
| Letter+Digit | A136, B127 | 1 |
| Digital | 273, 0032 | 2 |
| Letter+Symbol+Digit | A-142, XG-6302 | 3 |
| Digit+Symbol+Digit | 7-173 | 4 |
| Word+Digit | Shared parking space 03 | 5 |
| Letter | AAAA | 6 |
| Word | Personal parking space, Fire passage | 7 |
| Symbol | →, -, ←,%, or the like | 8 |

For example, the vehicle-mounted display may be controlled to display an image of the target parking space. The vehicle-mounted display may be a physical display like a central display screen, or may be a virtual display like a heads-up display (heads-up display, HUD). For example, the user may indicate the target parking space on an apparatus like a central display screen. Correspondingly, the image of the target parking space may be displayed on the central display screen. The image may include a part or all of the target parking space, for example, include only a part of the sign of the target parking space. For another example, when the vehicle is parked in a manner like automated parking or assisted parking, the target parking space may be displayed on an apparatus like a central display screen. For example, a sign may be added to an interface to highlight the target parking space, as shown in (a) in FIG. 20. For another example, FIG. 21 is a diagram of an interaction interface according to this embodiment of this application. After the sign of the target parking space is determined, an apparatus like a chip or an in-vehicle infotainment that performs the method may send, to another apparatus, a message indicating the sign of the target parking space. In this way, an interface shown in FIG. 21 may be displayed on the vehicle-mounted display like a central display screen, and the user may further feed back the prompt, for example, close the message reminder (not shown in FIG. 21), or tap a "Yes" control. It should be understood that the foregoing manner of displaying the target parking space is merely an example for ease of description. This is not limited in embodiments of this application.

For example, after the sign of the target parking space is determined, a target parking space indication message may be sent. The target parking space indication message may indicate the target parking space. For example, after the target parking space indication message is sent, the user can learn of the target parking space on a terminal device like a mobile phone. For example, the target parking space indication message may be sent when it is detected that the user adjusts a gear to a parking gear, pulls up a handbrake, determines the sign of the parking space on the interaction interface, leaves the vehicle, turns off the vehicle, or the like. For example, the target parking space indication message may be directly sent to a terminal device connected to the vehicle through Bluetooth, or may be sent to a terminal device through a network device or the like. For another example, the target parking space indication message may be sent to a server through a network, and the server sends the message to a terminal device that logs in to/is associated with a same account as the vehicle, so that the user can learn of the target parking space by using a terminal device like a mobile phone, and then the user can learn of the target parking space without taking a photo of the parking space by using a terminal device like a mobile phone or a tablet computer. This improves user experience. For another example, after the target parking space indication message is received, a terminal device like a mobile phone may display information shown in FIG. 21, and the user may make a response to the information. For example, when the user gives a positive acknowledgement, the sign of the target parking space may be stored in the mobile phone or a corresponding server. Alternatively, when the user gives a negative acknowledgement, the terminal device like the mobile phone may obtain the image of the target parking space, and prompt the user of the target parking space by using the image of the target parking space. It should be understood that the foregoing description of the target parking space indication message is merely an example. This is not limited in embodiments of this application.

In this embodiment of this application, the sign of the target parking space may be determined based on the image of the target parking space. This helps the user learn of the sign of the parking space without taking a photo of the parking space by using the terminal device like the mobile phone, so that the user learns of the location of the vehicle based on the information, and then the user can search for the vehicle.

As described above, after a vehicle travels into a parking lot like a large parking lot, because terrain and an environment of the parking lot are complex, if a parking area is directly indicated and recognized based on an image captured by the vehicle in the parking lot, the image may include various movable objects such as another vehicle that is temporarily parked. Some objects and locations of the objects in the scenario may change over time. This is not conducive for the user to directly determine the parking area based on the image. In addition, in an actual scenario, a plurality of objects and locations in the parking lot may have various signs, after an environment image of the parking lot is captured, a plurality of types of texts related to the signs may be obtained by recognizing the image, for example, a text related to a floor sign, like "Basement level 1", and a sign irrelevant to the parking area, like "Safety exit", "No smoking", or "Exit". Although the plurality of signs may be obtained by obtaining the environment image of the parking lot, high operation overheads may be required to screen and obtain a sign of the parking area from the environment image of the parking lot. In addition, because there is much information or many signs irrelevant to the parking area, accuracy of recognizing the parking area may be reduced. An embodiment of this application provides a method for recognizing a parking area. Marker detection is performed in the parking area, and the parking area is determined based on an image of a marker when the marker in the parking area is detected. This can reduce overheads used for determining a sign of the parking area, and also improve accuracy of the determined sign of the parking area. In addition, when the sign of the parking area cannot be obtained, information about the parking area in which the vehicle is located may be prompted based on the marker. This also helps a user learn of the parking area in which the vehicle is located without taking a photo of the parking area by using a terminal device like a mobile phone, to help the user search for the vehicle.

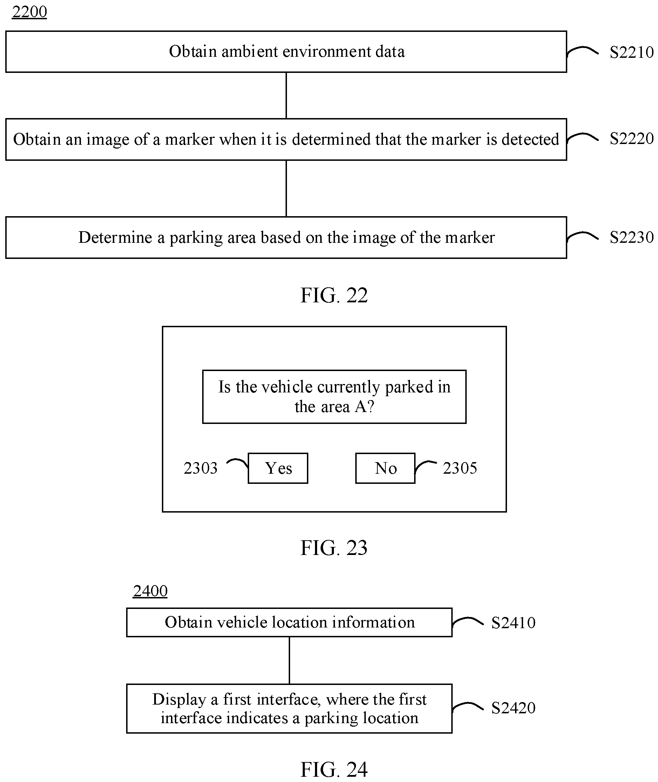

For example, FIG. 22 is a schematic flowchart of a method for recognizing a parking area according to an embodiment of this application. The method 1400 may include some or all of the following steps.

S2210: Obtain ambient environment information.

For example, the ambient environment information may include data captured by a sensing sensor like a radar and/or a camera, for example, may include point cloud data captured by the radar, and may include image data captured by the camera. The ambient environment information may also include data captured by a radar sensor and a camera sensor. For example, the data separately captured by the camera sensor and the radar sensor may be fused and then analyzed. The ambient environment information may be used to detect a marker in a parking area.

For example, the ambient environment information may be used to detect the marker in the parking area, and the marker in the parking area may include an object that does not move in the parking area. For example, as shown in FIG. 8, the vehicle 702 may detect, based on data captured by a sensor on the vehicle 702, whether there is a marker in the parking area around the vehicle 702, for example, the column 720, the column 722, the column 724, or an inner wall 728 of the parking lot shown in FIG. 8.

In some possible implementations, the marker in the parking area is a column. For example, as shown in FIG. 4, relatively speaking, distribution density of the column in the parking lot is higher than that of the inner wall. Parking areas may be more precisely distinguished based on the column, and a more accurate parking area may be determined based on the column.

S2220: Obtain an image of the marker when it is determined that the marker is detected.

For example, when it is determined that the marker is detected, the image of the marker that is captured by the sensing sensor may be obtained. For example, whether there is the marker in the parking area in an ambient environment may be detected based on the data captured by a radar sensor. When an apparatus like a chip or an in-vehicle infotainment or a vehicle detects that there is the marker, the camera sensor may be controlled to capture the image of the marker. For example, a plurality of cameras may be started in a parking process to capture images of the marker at a plurality of angles, so that more details of the marker can be obtained based on the plurality of images. The image may include another object. Alternatively, a camera sensor corresponding to an area in which the marker is located may be started, so that power consumption of the sensor used when the image of the marker is obtained can be reduced. For another example, an image of an ambient environment may be captured by using a camera, and the marker may be detected based on the image. When the marker is detected, a part that includes the marker in the image may be processed. For example, a column area in the image is cropped, to obtain an image of the column. Alternatively, the camera or another camera sensor may be controlled to capture the image of the marker. For example, the image of the marker may be captured again when image quality cannot meet a preset requirement. It should be understood that the foregoing methods for obtaining the image of the marker are merely examples. This is not limited in embodiments of this application.

In some possible implementations, when the marker is successfully detected, a vehicle-mounted display may be controlled to display the image of the marker. For example, when marker detection is performed in the parking area by using the image, and the marker is detected based on the image, the image of the marker may be displayed on the vehicle-mounted display. Further, the marker may be highlighted by using a line frame or the like on an interface displayed by the display.

S2230: Determine the parking area based on the image of the marker.

For example, different parking areas may be distinguished by using different signs.

For example, a sign of the parking area may be determined based on the image of the marker, and the sign of the parking area may indicate the parking area. For example, for the marker in the parking area shown in (b) in FIG. 9, after the image of the marker is obtained, a word in the image may be recognized, for example, the word in the image is recognized by using an OCR technology or another technology, to obtain the sign of the parking area. The sign may be a combination of a letter and a word, for example, an area B; or may be only a letter, for example, "B"; or may be represented in another manner, for example, a combination of a letter, a word, and a digit. It should be understood that the foregoing description of the sign of the parking area is merely an example. This is not limited in embodiments of this application.

For example, when a sign of a target parking space includes an area keyword, the sign of the parking area may be determined based on the sign of the target parking space. For example, as shown in FIG. 8, images of the column 720, the column 722, and the column 724 may be obtained. For example, the column 720 may include a sign of a parking area to which the area 716 belongs. For example, the column 720 may be shown in (a) in FIG. 8. The column 722 may include a sign of a parking area to which the area 718 belongs. For example, the column 722 may be shown in (b) in FIG. 8, the target parking space may be the parking space 704, and the sign of the target parking space may be "A106". Because the sign of the target parking space includes an area keyword "A", the sign "Area A" of the area 716 in which the vehicle is located may be determined based on the images of the plurality of columns and the area keyword. For another example, the area keyword may be a common letter, digit, or the like included in both the sign of the target parking space and the sign of the parking area. This is not limited in embodiments of this application.

For example, when there are a plurality of markers in the parking area, the marker in the parking area may be determined based on a distance between the target parking space and each of the plurality of markers, to determine the sign of the parking area. For example, as shown in FIG. 8, when the column 720 is shown in (a) in FIG. 9, and the column 722 is shown in (b) in FIG. 9, the distance between the target parking space and each of the plurality of markers may be determined based on data captured by a camera and/or a radar. For example, a distance between the column 720 and the parking space 704 is less than a distance between the column 722 and the parking space 704. In this case, it may be determined that the marker in the parking area in which the target parking space is located is the column 720, and then it may be determined that the sign of the parking area in which the vehicle is located is "Area A".

For example, one or more texts may be determined based on the image of the marker. For ease of explanation and description, the text may be referred to as an area information text. For example, the marker may be shown in (a) in FIG. 9. A plurality of texts such as "Area A", "Safety exit", and "←" may be obtained based on the image of the marker, and the sign of the parking area may be determined based on the plurality of texts, for example, rationality verification is performed on the plurality of texts. It should be understood that the foregoing description of the area information text is merely an example. This is not limited in embodiments of this application.

For example, the sign of the parking area may be determined based on confidence of the one or more area information texts.

For example, the confidence of the area information texts may be determined according to a confidence rule. For example, whether the text includes a preset keyword, for example, "Area" or "Region" may be recognized. For example, the marker in the parking area may be shown in (a) in FIG. 9, and a plurality of texts such as "Area A", "Safety exit", and "←" may be obtained based on the image of the marker, where "Area A" includes a keyword "Area", so that "Area A" may be determined as the sign of the parking area. For another example, according to an obtained confidence priority table, confidence analysis may be performed on words recognized from the image of the marker. For example, Table 2 is an example table of a confidence priority of a sign of a parking area according to this embodiment of this application. Confidence sorting may be performed on the area information texts according to Table 2, to determine the sign of the parking area. It should be understood that the foregoing description of the confidence is merely an example for ease of description. This is not limited in embodiments of this application.

It should be understood that the foregoing description of the confidence is merely an example. This is not limited in embodiments of this application.

For example, the sign of the parking area may be determined based on images of the marker in the parking area at a plurality of moments. For example, due to a limitation of a factor like a shooting angle of a camera, the obtained image of the marker may include only a partial area of the marker, and then a complete sign of the parking area may not be obtained. In this case, images of the column 720 at a plurality of moments may be obtained. For example, the sign of the parking area may be obtained according to a fusion recognition algorithm. This improves accuracy of determining the parking area. It should be understood that the foregoing description of determining the sign of the parking area is merely an example. This is not limited in embodiments of this application.

**Table 2**

| Text format | Example | Confidence priority |
|---|---|---|
| Letter+Word | Area A | 1 |
| Letter | A | 2 |
| Letter+Symbol+Digit | A-140 to A-169, P1-J-H3, or the like | 3 |
| Text+Digit | Area 1 | 4 |
| Word | Personal parking space, Fire passage | 5 |
| Symbol | →, -, ←,%, or the like | 6 |

For example, after the parking area is determined, a parking area indication message may be sent. The parking area indication message may indicate the parking area. For example, after the parking area is determined, for example, when a user adjusts a gear to a parking gear, pulls up a handbrake, determines the parking area on the interaction interface, leaves the vehicle, turns off the vehicle, or the like, the parking area indication message is sent. After the parking area indication message is sent, a network device or another device may prompt the user with the parking area, so that a terminal device like a mobile phone can learn of the parking area to remind the user. In this way, the user can learn of the parking area without taking a photo of the parking area by using the terminal device like the mobile phone. This can improve user experience. For another example, after the parking area is determined, the vehicle may send a message to a cloud server through a vehicle-mounted terminal (telematics box, T-BOX), to indicate the parking area, so that a terminal device like a mobile phone may learn of the parking area from the cloud server; or the vehicle may send, through Wi-Fi, Bluetooth, or the like, a message to a terminal device like a mobile phone associated with the vehicle, so that the terminal device can learn of the parking area. For another example, FIG. 23 is a diagram of another interaction interface according to this embodiment of this application. After receiving the parking area indication message, a terminal device like a mobile phone may display an interface shown in FIG. 23 on an interface of the terminal device, and the user may further feed back the message, for example, tap a negative acknowledgement control 2305, a positive acknowledgement control 2303, or the like. When obtaining a positive acknowledgement, the mobile phone may store the sign of the parking area locally or in a server. Alternatively, when obtaining a negative acknowledgement, the mobile phone may obtain an image of an ambient environment of the vehicle, an image of the marker in the parking area, and the like, to prompt the user in an image manner. It should be understood that the foregoing description of the parking area indication message is merely an example. This is not limited in embodiments of this application.

For example, the vehicle-mounted display may be controlled to display the sign of the parking area. For example, after the parking area is determined, the interface shown in FIG. 23 may be displayed on a central display screen of the vehicle, and feedback from the user may be further received by using an interaction device. For example, the user may disable a message reminder on the central display screen, or give a positive acknowledge to display information. For another example, after the sign of the parking area is determined, an image of the marker in the parking area may be displayed on the vehicle-mounted display like a central display screen. The image may include a sign of the marker. For example, an image of a partial area of a marker 810 in (a) in FIG. 9 may be displayed, and the area includes a sign 815.

**In** this embodiment of this application, when the marker in the parking area is detected, the parking area is determined by obtaining the image of the marker in the parking area. This can improve accuracy of determining the sign of the parking area, and reduce resource overheads used for determining the parking area. Alternatively, when the sign of the parking area cannot be recognized, the parking area may be determined by using the marker. This also helps the user learn of the parking area in which the vehicle is located without taking a photo of the parking area by using the terminal device like the mobile phone, to help the user search for the vehicle.

As described above, after the vehicle currently travels into the parking lot like a large parking lot, because terrain and an environment of the parking lot are complex, and GNSS signal strength of some parking lots is weak, a location of the vehicle cannot be accurately located. In this case, the user usually needs to record the location of the vehicle by manually taking a photo. As a result, user experience is poor. An embodiment of this application provides an interaction method and apparatus for indicating a parking location, and a terminal device. Vehicle location information is obtained, and then a parking location of a vehicle is indicated on an interface. This helps a user learn of a parking space and/or a parking area in which the vehicle is located without taking a photo of the parking space by using a terminal device like a mobile phone, so that user experience is improved.

For example, FIG. 24 is a schematic flowchart of an interaction method for indicating a parking location according to an embodiment of this application. The method includes the following steps.

S2410: Obtain vehicle location information.

For example, the vehicle location information may indicate at least one of a target parking space, a parking area, a parking floor, and a first location, where the first location may include a parking location determined based on a GNSS signal. For example, a terminal device like a mobile phone may obtain, from a vehicle, a network device, or the like, vehicle location information indicating only the target parking space, which is also referred to as a target parking space indication message. For another example, a terminal device like a mobile phone may obtain, from a vehicle, a network device, or the like, vehicle location information indicating only the parking area, which is also referred to as a parking area indication message. For another example, a terminal device like a mobile phone may obtain, from a vehicle, a network device, or the like, vehicle location information indicating only the parking floor, which is also referred to as a parking floor indication message. For another example, the obtained vehicle location information may indicate the target parking space, may indicate the parking area, and may indicate the parking floor. In other words, the target parking space indication message, the parking area indication message, and the parking floor indication message may be a same message. For another example, a terminal device like a mobile phone may obtain an image of an ambient environment of a vehicle, and present the image of the ambient environment, so that a user may learn of an area in which the vehicle is located. For another example, the vehicle location information may be a first message. For another example, the vehicle location information may indicate the first location by indicating first latitude and longitude information and first altitude information or the like. It should be understood that the foregoing description of the vehicle location information is merely an example. This is not limited in embodiments of this application.

For example, the terminal device may be associated with the vehicle. For example, the terminal device like the mobile phone may be directly connected to the vehicle in a wired or wireless manner. For example, the mobile phone may be connected to the vehicle through Bluetooth, Wi-Fi, or in another manner. For another example, the mobile phone may be a terminal device that logs in to and is associated with a same account as the vehicle. It should be understood that the foregoing manner is merely an example for ease of description. This is not limited in embodiments of this application.

S2420: Display a first interface, where the first interface may indicate at least one of the parking area, the target parking space, and the parking floor, or the first interface may indicate the first location.

For example, after the vehicle location information is obtained, the first interface may be correspondingly displayed on a display associated with the terminal device. The first interface may indicate the at least one of the parking area, the target parking space, and the parking floor.

For example, when the obtained vehicle location information indicates the first longitude and latitude information, the first interface may indicate, in a form of a text, a map, or the like, a location indicated by the first longitude and latitude information.

For example, a sign of the parking area may indicate the parking area, a sign of the target parking space may indicate the target parking space, and a sign of the parking floor may indicate the parking floor.

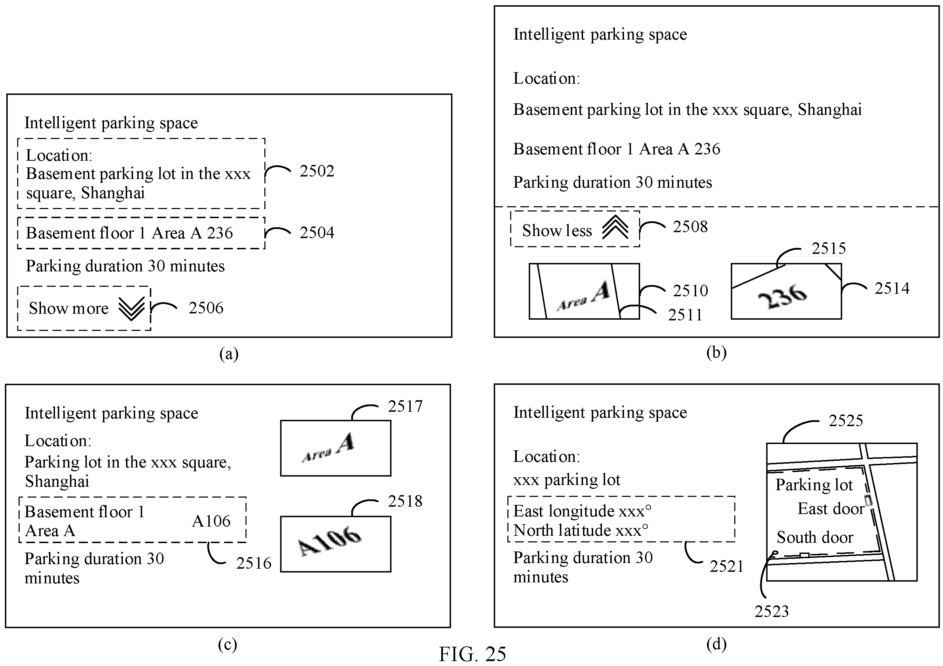

For ease of explanation and description, for example, FIG. 25 is a diagram of an interaction interface according to this embodiment of this application. The interface may be an interface displayed by a terminal device like a mobile phone or a tablet computer on a display associated with the terminal device.

Refer to an interface shown in (a) in FIG. 25, after the mobile phone obtains the vehicle location information, for example, the parking area in which the vehicle is located is "Area A", and the target parking space is "236", the mobile phone may display the interface shown in (a) in FIG. 25. An area 2504 on the interface may include the sign "Area A" of the parking area, the sign "236" of the target parking space, and the sign "Basement level 1" of the parking floor. The interface may further include location information of a parking lot in which the vehicle is located. For example, an address of the parking lot is displayed in an area 2502 on the interface. The interface may further include another control, for example, a control 2506. The user may tap the control to obtain other information related to the parking area and/or the target parking space. For example, when detecting that the user taps the control 2506, the mobile phone displays an interface shown in (b) in FIG. 25.

Refer to the interface shown in (b) in FIG. 25. In response to detecting that the user taps the control 2506 in (a) in FIG. 25, the mobile phone may display an image 2510 of a marker in the parking area on the interface, and the marker 2511 in the image 2510 may be a column in (a) in FIG. 9. In other words, the image may display at least a partial area of the marker in the parking area, for example, an area indicating the sign of the parking area. An image 2514 of the target parking space may be further displayed on the interface. A parking space 2515 in the image 2514 may be the parking space 704 in FIG. 8. In other words, the image may display at least a partial area of the target parking space, for example, an area indicating the sign of the target parking space. The interface may further include another control, for example, a control 2508. When detecting that the user taps the control 2508, the mobile phone may display the interface shown in (a) in FIG. 25.

Refer to an interface shown in (c) in FIG. 25. The interface may display both the sign of the target parking space and the sign of the parking area, for example, content shown in an area 2516, and may also display an image of the target parking space and an image of a marker in the parking area, for example, an image 2517 and an image 2518.

Refer to an interface shown in (d) in FIG. 25. The interface may display first latitude and longitude information 2521. Further, the interface may further include a map 2525 of a parking lot area, where a range indicated by a dashed line is the parking lot area. In this way, a parking location 2523 indicated by a first longitude and latitude may be indicated on the map. For example, the vehicle is located near a south gate of the parking lot. In this case, the user can select an optimal vehicle search route by using the map, and further, a navigation route (not shown in FIG. 25) and the like may be recommended based on a real-time location of the user. This further improves user experience.

It should be understood that the foregoing description of the first interface is merely an example for ease of description. This is not limited in embodiments of this application.

For example, when a distance between the terminal device and the vehicle is less than or equal to a preset threshold, the vehicle may prompt the user of a location of the vehicle through tooting a horn, lighting a light, or the like.

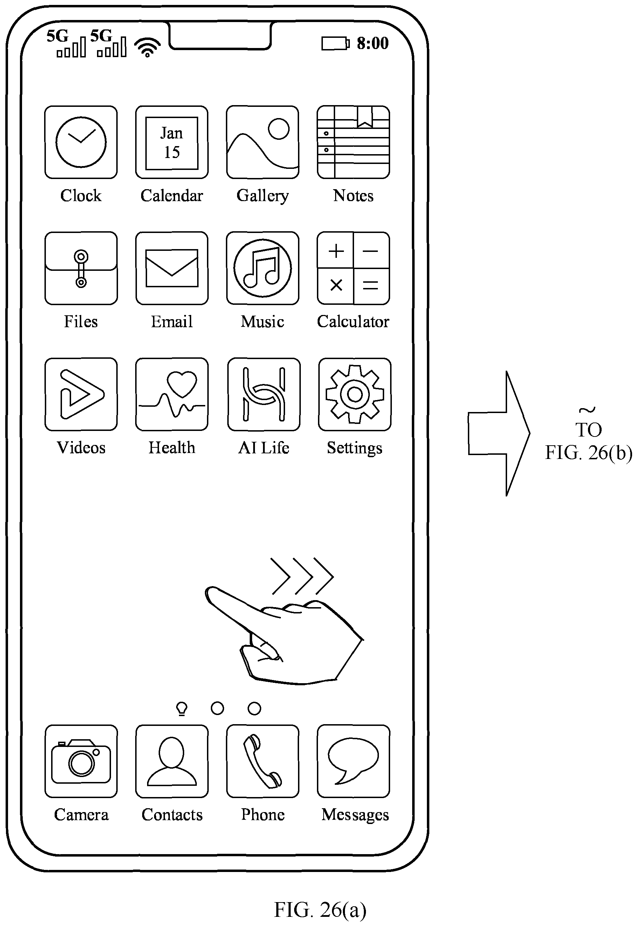

For example, FIG. 26(a) to FIG. 26(c) show a group of graphical user interfaces (graphical user interfaces, GUIs) according to an embodiment of this application.

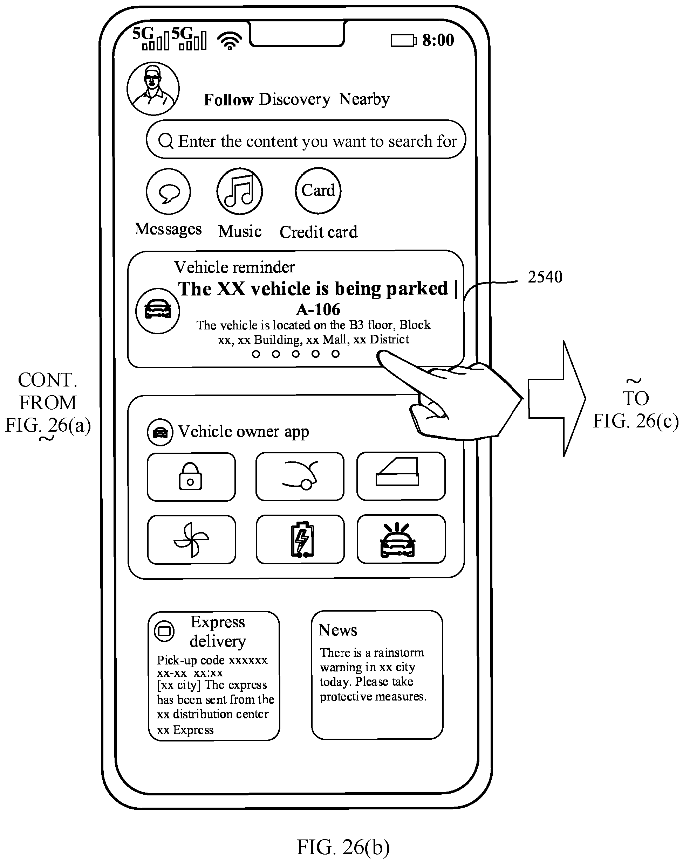

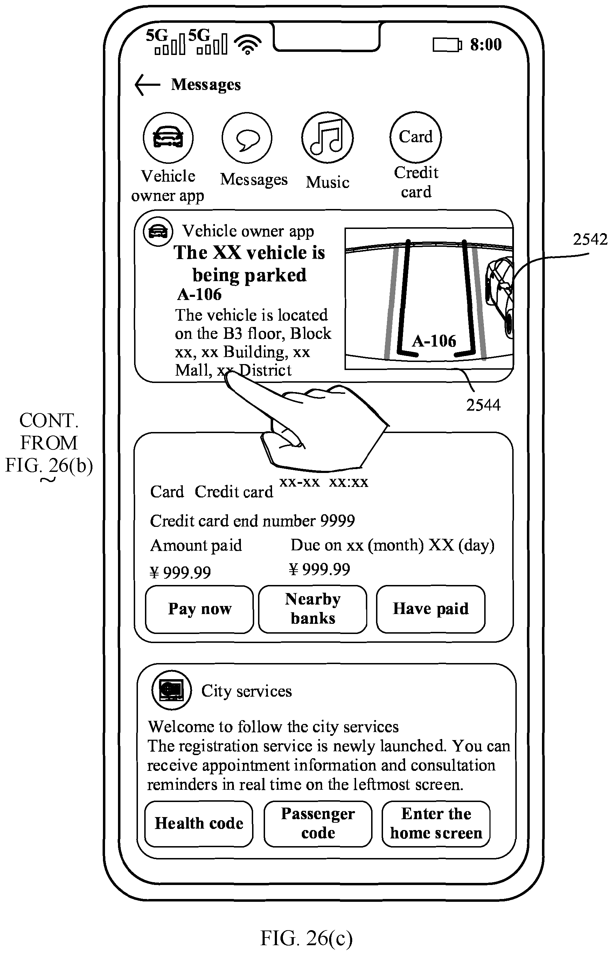

When a user searches for a vehicle by using an electronic device, the user may slide leftward on a home screen page of the electronic device shown in FIG. 26(a), and the electronic device displays a leftmost screen shown in FIG. 26(b) in response to a leftward sliding operation of the user. The electronic device may display a service account 2540 on the leftmost screen interface. The service account 2540 displays a geographical location for parking the vehicle, for example, "The vehicle is located on the B3 floor, Block xx, xx Building, xx Mall, xx District", and a parking space number of the parking space for parking the vehicle, for example, "A-106". "A" may indicate a parking zone, and "106" may indicate a specific number of the parking space. Alternatively, the service account 2540 may display a type or a name of the parked vehicle, for example, "The XX vehicle is being parked". Further, in response to an operation of tapping the service account 2540 by the user, the electronic device may display, on a service widget 2542 shown in FIG. 26(c), the geographical location for parking the vehicle, the parking space number of the parking space for parking the vehicle, and a parking space image 2544 including the parking space number. In this way, the user can more intuitively learn of related information of the parking space number at the parking location of the vehicle.

In some possible implementations, when detecting an operation of viewing leftmost screen information by the user, the electronic device queries a vehicle owner app about whether the parking location information is stored. If the parking location information is stored, the electronic device determines a parking location of the vehicle based on the parking location information, and displays the parking location on the leftmost screen, for example, one or more of the geographical location for parking the vehicle, the parking space number at the parking location of the vehicle, and the parking space image.

It should be understood that, in this embodiment of this application, the leftmost screen is an interface displayed after a rightward sliding operation of the user on a home screen (for example, a home screen of the mobile phone shown in FIG. 26(a)) of the mobile phone is detected. The home screen of the mobile phone shown in FIG. 26(a) may be the second home screen page on the home screen of the mobile phone, and the leftmost screen may be the first home screen page on the home screen of the mobile phone, as shown in FIG. 26(b). The leftmost screen may provide the user with services such as search, application suggestions, a quick service, a missed call notification widget, and AI Tips. The leftmost screen may display some applications (applications, APPs) frequently used by the user.

For example, when selecting the vehicle by using an electronic device like a mobile phone, the user may alternatively display a notification widget on a drop-down notification panel interface of the electronic device like the mobile phone. For example, the notification widget may display the geographical location for parking the vehicle, for example, "The vehicle is located on the B3 floor, Block xx, xx Building, xx Mall, xx District", and information about the parking space for parking the vehicle, for example, "A-106". For another example, the notification widget may display the geographical location for parking the vehicle, a sign of the parking space for parking the vehicle, and the parking space image including the sign of the parking space. In this way, the user can more intuitively learn of the parking location information of the vehicle.

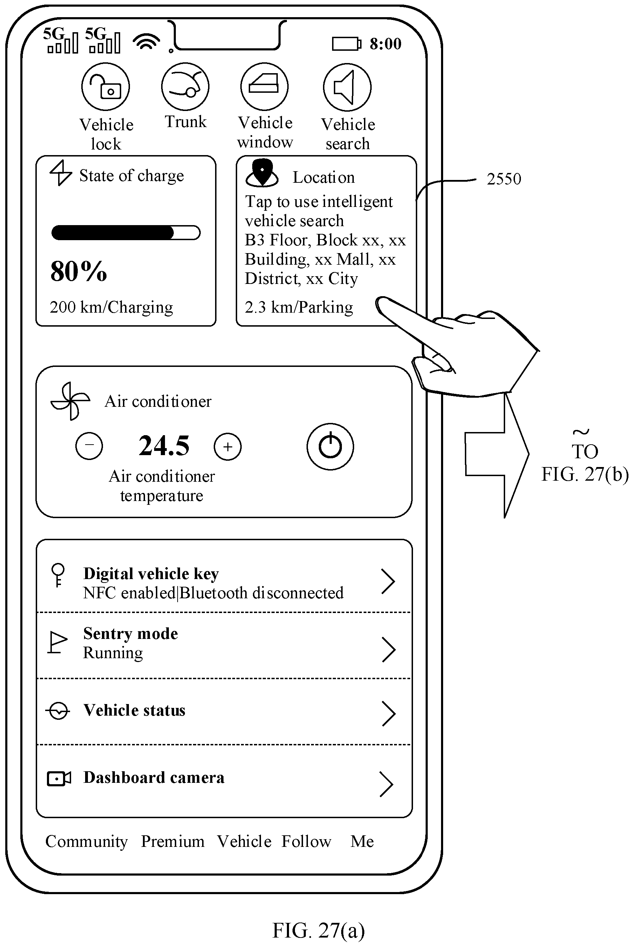

In some possible implementations, the user may enter a home screen of the vehicle owner app by tapping the service widget 2540, sliding down the notification widget on the notification panel interface, or tapping an icon of the vehicle owner app. In response to an operation of the user, the electronic device like the mobile phone may display the home screen page of the vehicle owner app shown in FIG. 27(a). The home screen page of the vehicle owner app may include a location information box 2550. The location information box 2550 may include the address of the parking location of the vehicle, for example, "B3 Floor, Block xx, xx Building, xx Mall, xx District, xx City..."; information about a distance between the vehicle and the electronic device, for example, "2.3 km"; information about a current status of the vehicle, for example, "Parking"; and prompt information "Tap to use intelligent vehicle search".

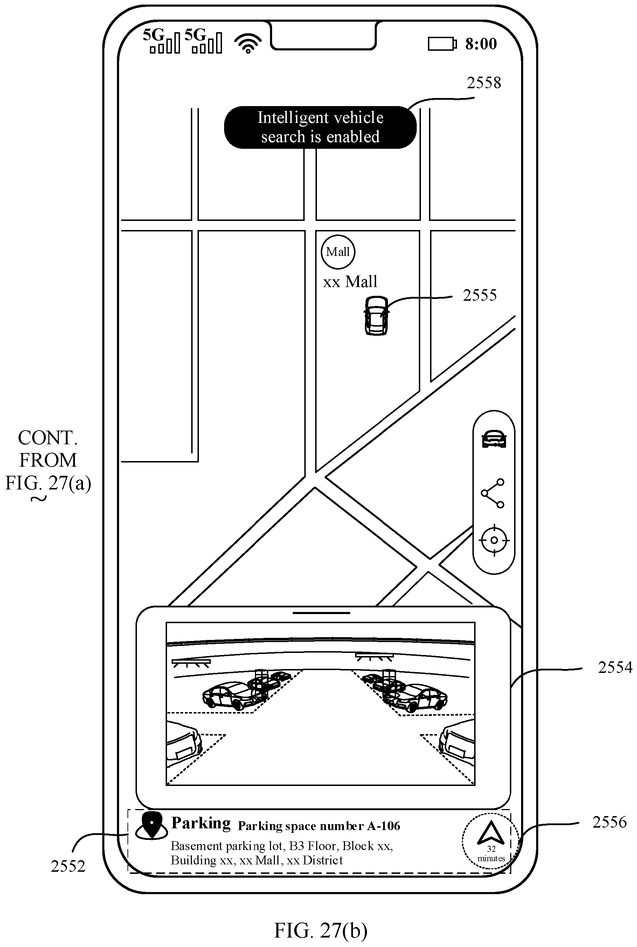

Further, after the user taps the location information box 2550, the electronic device displays, in response to the tap operation of the user, an intelligent vehicle search interface shown in FIG. 27(b). The intelligent vehicle search interface may display a navigation information box 2552, and the navigation information box 2552 includes information 2556 about time required for the electronic device to navigate to a location of the vehicle. The intelligent vehicle search interface may further display a vehicle parking location image box 2554, a map including the geographical location for parking the vehicle, and a location 2555 of the vehicle on the map. In some possible implementations, in response to the operation of tapping the location information box 2550 by the user, when displaying the intelligent vehicle search interface, the electronic device may further display a vehicle search animation effect of "Intelligent vehicle search is enabled" shown in 2558 in FIG. 27(b).

In this embodiment of this application, after obtaining the vehicle location information, the terminal device displays the parking location of the vehicle on the first interface, so that the user can learn of the parking location of the vehicle, and the user can find the vehicle. This can improve user experience.

In this embodiment of this application, after obtaining the vehicle location information, the terminal device displays, on the first interface, content related to the parking location of the vehicle, so that the user can learn of the parking location of the vehicle, and the user can find the vehicle. This can improve user experience.

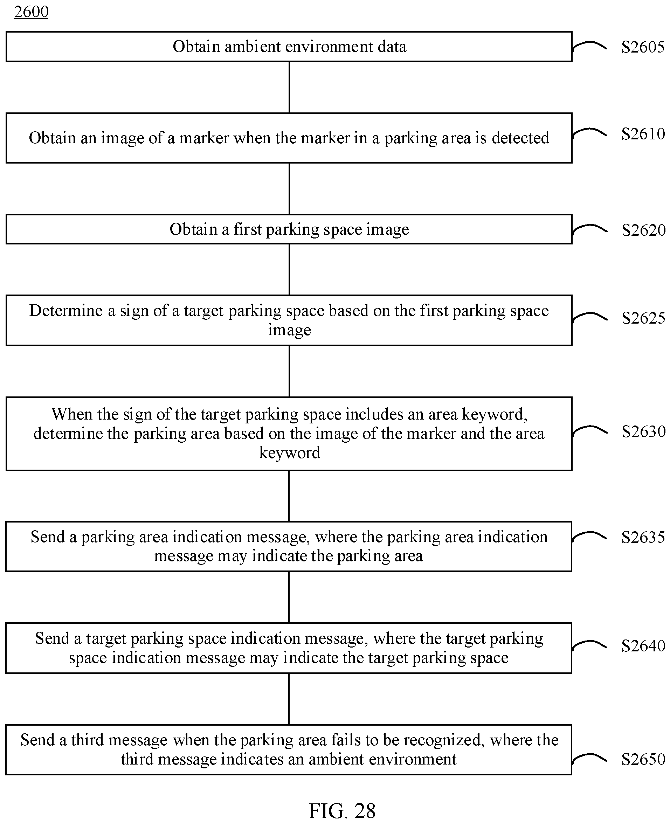

It should be understood that the methods 1100, 1200, 1400, and 1500 to 2400 may be combined with each other. This is not limited in embodiments of this application. For example, refer to FIG. 28 to FIG. 29. FIG. 28 is a schematic flowchart of a method for recognizing a parking area according to an embodiment of this application. A method 2600 may include some or all of the following steps.

S2605: Obtain ambient environment information.

For example, the ambient environment information may be used to detect a marker in a parking area. The ambient environment information may be data captured by one or more sensors. For example, the ambient environment information may be data captured by one or more cameras and/or one or more radar sensors. This is not limited in embodiments of this application.

S2610: Obtain an image of the marker when the marker in the parking area is detected.

For example, the marker in the parking area may be a column or the like. For description of the marker in the parking area, refer to step S2210 and the like.

S2620: Obtain a first parking space image.

For example, images of one or more parking spaces including a target parking space may be obtained, and the target parking space may be determined based on a parking space indication message. It should be understood that, for description of obtaining the first parking space image, reference may be made to step S1910 and the like.

For example, step of obtaining the ambient environment information and step of obtaining the first parking space image may be performed simultaneously. In other words, step S2620 and some or all of step S2605 and step S2610 may be performed simultaneously. Alternatively, step S2620 may be performed first. Alternatively, some or all of step S2605 and step S2610 may be performed first. This is not limited in embodiments of this application.

S2625: Determine a sign of the target parking space based on the first parking space image.

For example, the sign of the target parking space may be determined based on the first parking space image. It should be understood that for description of determining the sign of the target parking space, refer to step S1130.

For example, whether the sign includes an area keyword may be determined based on the sign of the target parking space. For example, it may be considered that a sign "013" does not include an area keyword, and it may be considered that an area keyword of a sign "A106" is "A". For another example, a sign of a parking area in which a parking space whose sign is "H-0367" is located is "P1-H", and it may be considered that an area keyword is "H". For another example, the sign of the target parking space is, for example, "C0237", and when there are a plurality of area information texts (for example, area information texts "C17", "D17", and "C18"), the sign of the target parking space may be matched with the area information texts. For example, "C0237" may be matched with "C17" and "C18", and it may be determined that an area keyword is "C". Further, a sign of the parking area may be determined. For example, the sign of the parking area may be determined based on a distance between the vehicle in a parking pose and the marker in which the sign is located.

S2630: When the sign of the target parking space includes the area keyword, determine the parking area based on the image of the marker and the area keyword.

For example, a plurality of parking areas may be distinguished based on signs of the parking areas. For example, when a plurality of markers are detected, images of the plurality of markers may be obtained, and the plurality of markers may indicate the plurality of parking areas. A first marker may be determined based on a distance between the target parking space and each of the plurality of markers, and the first marker may be a marker with a shortest distance from the target parking space in the plurality of markers. The sign of the parking area may be determined based on an image of the marker.

For example, the sign of the parking area may be determined based on the image of the marker, and then the parking area is determined based on the sign of the parking area. It should be understood that, for a manner of determining the parking area, reference may be made to step S2230 and the like.

For example, when the sign of the target parking space includes the area keyword, the parking area may be determined based on the area keyword. For example, when a plurality of texts, such as "P1", "P1-H", "P1-G", and "Safety exit", are determined based on images of a plurality of markers, although the parking area may be determined by performing screening on the plurality of texts based on confidence of the plurality of texts, because a confidence evaluation rule may not be applicable to all parking lots, or confidence levels of the plurality of texts may be the same, for example, "P1-H" and "P1-G", the sign of the accurate parking area may not be determined. In this case, the parking area may be determined based on the area keyword. For example, the sign of the target parking space is "H-013". Because the sign of the target parking space and the text "P1-H" have a same area keyword "H", it may be determined that the parking area is "P1-H". It should be understood that the foregoing description of determining the parking area is merely an example for ease of description. This is not limited in embodiments of this application.

In this embodiment of this application, the area keyword is determined by using the sign of the target parking space, the sign of the parking area is determined based on the area keyword and the image of the marker in the parking area, and then the parking area is recognized based on the sign of the parking area, so that accuracy of recognizing the parking area can be improved.

It should be understood that the foregoing method for determining the parking area is merely an example for ease of description. This is not limited in embodiments of this application.

Optionally, in S2635, a parking area indication message is sent, where the parking area indication message may indicate the parking area.

For example, the parking area indication message may indicate the parking area by using a sign indicating the parking area, or may indicate the parking area by using the marker indicating the parking area, for example, by sending the image of the marker in the parking area.

Correspondingly, the terminal device may obtain the parking area indication message, and may display a first interface based on the parking area indication message, so that the user can learn of, based on the interface, the parking area in which the vehicle is located.

Optionally, in S2640, a target parking space indication message is sent, where the target parking space indication message may indicate the target parking space.

For example, the target parking space indication message may indicate the target parking space by using the sign indicating the target parking space, or may indicate the target parking space by using the image indicating the target parking space.

Correspondingly, the terminal device may obtain the target parking space indication message, and may display a first interface based on the target parking space indication message, so that the user can learn of, based on the interface, the parking space in which the vehicle is located.

It should be understood that step S2635 may be performed first, or step S2640 may be performed first, or step S2635 and step S2640 may be performed simultaneously. This is not limited in embodiments of this application.

Optionally, in S2650, a third message may be sent when the parking area fails to be recognized, where the third message indicates an ambient environment.

For example, when the parking area fails to be recognized, the third message indicating the ambient environment may be sent. For example, for some parking lots, there may be no division of a plurality of parking areas, and only a sign of a parking space may be marked in an area in which the parking space is located. Therefore, the vehicle may not learn of, based on an image of a marker captured by a sensor on the vehicle, the parking area in which the vehicle is located. In this case, the third message may be sent to indicate the ambient environment information of the vehicle. For example, an image captured by an around view monitor (around view monitor, AVM) system, a digital video recorder (digital video recorder, DVR), or the like may be sent to the terminal device like a mobile phone. This helps the user search for the vehicle.

In this embodiment of this application, the parking area is determined based on the area keyword and the image of the marker in the parking area, so that accuracy of the determined parking area can be improved. Further, the target parking space indication message may be sent to indicate the target parking space, and the parking area indication message may be sent to indicate the parking area, so that the user can learn of the parking area and/or a target area in which the vehicle is located without taking a photo of the parking area and/or the target area. This improves user experience.

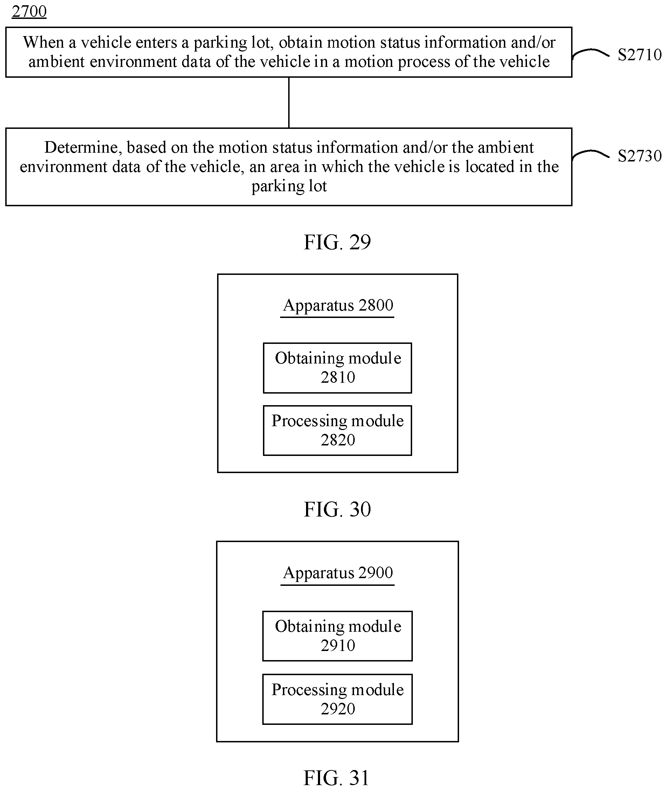

For example, FIG. 29 is a schematic flowchart of a method for determining a parking location according to an embodiment of this application. The method 2700 may include some or all of the following steps.

S2710: When a vehicle enters a parking lot, obtain motion status information and/or ambient environment information of the vehicle in a motion process of the vehicle.

For example, after the vehicle enters the parking lot until the vehicle completes parking in a parking space, in other words, in a process from entering the parking lot to search for the parking space by the vehicle to completing parking (also referred to as parking) by the vehicle, the vehicle may pass through one or more parking floors and/or one or more parking zones. In the process, the motion status information and/or the ambient environment information of the vehicle may be obtained based on a location of the vehicle, and then an area in which the vehicle is located in the parking lot is determined.

For example, the motion status information of the vehicle may include pose information of the vehicle, for example, pitch angle information of the vehicle and location information of the vehicle. For another example, the location information of the vehicle may be a location of the vehicle determined based on a global navigation satellite system signal.

S2730: Determine, based on the motion status information and/or the ambient environment information of the vehicle, the area in which the vehicle is located in the parking lot.

For example, in the process from entering the parking lot by the vehicle to completing parking by the vehicle, the motion status information and/or the ambient environment information of the vehicle may be obtained based on the location of the vehicle. For example, the vehicle may obtain a vehicle pose change by using a vehicle-mounted sensor, for example, a pitch angle of the vehicle or a location change of the vehicle, and then determine, based on a pitch angle change of the vehicle, a relative change of a floor on which the vehicle is located (for example, may determine, based on the pitch angle of the vehicle, a quantity of inter-floor passages through which the vehicle passes in an uphill phase and a downhill phase, and determine the relative change of the floor on which the vehicle is located, to determine a floor location at which the vehicle is currently located; or may determine the relative change of the floor based on the pitch angle of the vehicle, a traveling route of the vehicle, and an uphill height of the vehicle, to determine a floor location at which the vehicle is currently located). For another example, the vehicle may determine, based on sign information of an inter-floor passage through which the vehicle passes, a floor on which the vehicle is located (for example, the vehicle may obtain, by using an image sensor, image information around the vehicle in a traveling process, for example, the vehicle may obtain image information of the inter-floor passage through which the vehicle passes, and determine, by recognizing a floor sign hung or posted in the passage, the floor onto which the vehicle is to travel, to determine a floor location at which the vehicle is located; or may determine a relative change of a floor on which the vehicle is located based on a quantity of intersections between floors and the inter-floor passage through which the vehicle passes). When the vehicle travels onto a new floor, information about the floor (for example, "You are currently on the basement level 2") may be displayed on an interaction apparatus like a central display screen of the vehicle. After traveling into a parking space, the vehicle may determine information about a latest recognized floor as the floor on which a parking location is located. For another example, in the process from entering the parking lot by the vehicle to completing parking by the vehicle, the vehicle may pass through a plurality of parking zones. When passing through a parking zone, the vehicle may display, on an interaction apparatus like a central display screen, information about the parking zone (for example, "You are currently in the area A" or "You have entered the area B") in which the vehicle is currently located. After traveling into a parking space, the vehicle may determine information about a latest recognized zone as a parking zone at a parking location. Alternatively, when the vehicle travels into a parking space, or determines that the vehicle is to travel into a parking space, the vehicle obtains information about a zone in which the parking space is located. For another example, when there is no sign for a parking space for parking the vehicle (which may also be referred to as a parking space), a parking location of the vehicle may be determined based on information about a parking floor and information about a parking zone of the vehicle. Similarly, the information displayed on the interaction apparatus may alternatively be broadcast by a vehicle-mounted speaker in a voice manner. For brevity, examples are not listed one by one herein again.

In some possible manners, the method may further include: obtaining a GNSS signal; and determining a parking location positioning mode based on signal quality of the GNSS signal.

For example, for a method for determining the signal quality of the GNSS signal, refer to step S1120 and the like.

For example, the parking location positioning mode may include a first positioning mode or a second positioning mode. During working in the first positioning mode, the parking location of the vehicle may be determined based on the GNSS signal. When it is determined that the parking location positioning mode is the second positioning mode, the area in which the vehicle is located in the parking lot may be determined based on the motion status information and/or the ambient environment information of the vehicle.

For example, during working in the first positioning mode, the area in which the vehicle is located in the parking lot may be determined based on longitude and latitude information included in the GNSS signal. When it is determined that the parking location positioning mode is the second positioning mode, at least one of a parking floor, a parking zone, and a first parking space of the vehicle may be determined based on the motion status information and/or the ambient environment information of the vehicle.

In some possible implementations, the parking location positioning mode is the second positioning mode, and the determining, based on the motion status information and/or the ambient environment information of the vehicle, the area in which the vehicle is located in the parking lot may include: determining, based on the ambient environment information, a first intersection through which the vehicle passes, where the first intersection may include an intersection between the inter-floor passage and a floor connected to the inter-floor passage; and determining, based on the first intersection through which the vehicle passes, a parking floor on which the vehicle is located in the parking lot, where the parking floor is a floor on which the vehicle is located when the vehicle is in a parking pose.

For example, the first intersection may include the intersection between the inter-floor passage and the floor connected to the inter-floor passage. In other words, the first intersection may be an entrance/exit of the inter-floor passage. For example, for description of the first intersection, refer to step S1510 and the like.

For example, for a method for determining the parking floor based on the first intersection through which the vehicle passes, refer to the method 1500 and the like.

In some possible implementations, the ambient environment information may include an image of a first passage, the first passage may be the inter-floor passage through which the vehicle passes, and the determining, based on the motion status information and/or the ambient environment information of the vehicle, the area in which the vehicle is located in the parking lot may include: determining a passage guidance sign based on the image of the first passage; and determining the parking floor based on the passage guidance sign.

For example, for description of the first passage and the passage guidance sign, refer to the method 1400 and the like.

For example, the image of the first passage may be one or more images captured by one or more camera sensors; or the image of the first passage may be obtained by performing image processing like stitching on images captured by a plurality of camera sensors; or the image of the first passage may be image information of the first passage at a plurality of moments.

In some possible implementations, the method may further include: starting a second sensor when it is determined that the vehicle is located in the inter-floor passage; and controlling the second sensor to capture the ambient environment information.

For example, whether the vehicle is located in the inter-floor passage may be determined based on a pitch angle of the vehicle, data obtained by a ramp sensor, and the like. When it is determined that the vehicle is located in the inter-floor passage, one or more sensing sensors may be started to capture the ambient environment information. This can reduce resource consumption of the sensors such as a radar and a camera, and increase an endurance mileage of the vehicle like an electric vehicle.

In some possible implementations, the motion status information of the vehicle may include pitch angle information of the vehicle within first duration, and the determining, based on the motion status information and/or the ambient environment information of the vehicle, the area in which the vehicle is located in the parking lot may include: determining, based on the pitch angle information of the vehicle within the first duration, a quantity of inter-floor passages through which the vehicle passes; and determining the parking floor based on the quantity of inter-floor passages through which the vehicle passes.

For example, for description of the first duration, refer to step S1210 and the like.

For example, for description of determining the parking floor, refer to the methods 1200, 1400, 1500, and the like.

In some possible implementations, the determining, based on the motion status information and/or the ambient environment information of the vehicle, the area in which the vehicle is located in the parking lot may include: detecting a marker in a parking zone based on the ambient environment information; and determining the parking zone based on an image of the marker.

For example, the parking zone may be a parking area in the parking lot, like "Area A", "H-17", "B-17", "H-10-2", or "Area xx". The marker in the parking area may be a parking lot column, an inner wall of the parking lot, a sign, a hung or posted sign, or the like.

For example, for description of the marker in the parking zone and the method for determining the parking zone, refer to the method 2200 and the like.

In some possible implementations, the ambient environment information includes a first parking space image, the first parking space image includes a first parking space, and the determining, based on the motion status information and/or the ambient environment information of the vehicle, the area in which the vehicle is located in the parking lot may include: determining a sign of the first parking space based on the first parking space image.

For example, for description of determining the sign of the first parking space, refer to the method 1900 and the like.

In some possible implementations, the sign of a target parking space includes an area keyword, and the method may further include: determining the parking area based on the image of the marker and the area keyword.

For example, for description of the area keyword and the like, refer to the method 2200 and the like.

In some possible implementations, the method may further include: obtaining a first instruction, where the first instruction indicates that a user of the vehicle has a parking intention; and obtaining the motion status information and/or the ambient environment information of the vehicle based on the first instruction.

For example, the first instruction may be one or more of instructions such as a voice instruction, a touch instruction, a button instruction, and a gesture instruction. For example, the first instruction may be the parking voice instruction in the method 1800. For another example, the motion status information and/or the ambient environment information of the vehicle may be obtained, for example, image information of an ambient idle parking space is obtained, based on an indication of the user for a parking space (for example, a parking space indicated by the user by using a physical or virtual button, or a gesture instruction, or a parking space indicated by the user by using a voice instruction is detected).

For example, the obtaining the motion status information and/or the ambient environment information of the vehicle based on the first instruction may include: controlling, based on the first instruction, a camera and a radar sensor to adjust a posture, to obtain ambient environment data. For example, the camera and the radar sensor may have or be mounted with a movable support. The support may be controlled, based on the first instruction, to move, to adjust a posture of the sensor. In this way, the ambient environment data can be obtained. This can reduce impact of a vehicle posture on obtaining the ambient environment data, and the like.

In some possible implementations, the obtaining motion status information and/or ambient environment information of the vehicle may include: obtaining the motion status information and/or the ambient environment information of the vehicle when it is detected that the vehicle enters a parking state.

For example, the obtaining the motion status information and/or the ambient environment information of the vehicle when it is detected that the vehicle enters a parking state may include: when it is detected that the vehicle enters the parking state, controlling a camera and a radar sensor to adjust a posture, to obtain ambient environment information.

For example, the obtaining the motion status information and/or the ambient environment information of the vehicle when it is detected that the vehicle enters a parking state may include: when it is detected that the vehicle enters the parking state, controlling a first sensor to be started, and controlling the first sensor to capture the ambient environment information. For example, when a first operation of the user is detected, it may be considered that the vehicle enters the parking state. For description of the first operation, refer to the method 1800 and the like.

The method may further include: sending a first message, where the first message indicates at least one of the parking area, the first parking space, and the parking floor.

In some possible implementations, the method may further include: sending a first message, where the first message may indicate at least one of the parking area, the target parking space, and the parking floor. Correspondingly, an electronic device, for example, a terminal device like a mobile phone, or a cloud server may receive the first message.

For example, the first message may be sent after the parking location is determined. For example, during working in the first positioning mode, the first message may indicate the parking location determined based on the GNSS signal. For another example, during working in the second positioning mode, the first message may indicate at least one of the parking area, the target parking space, and the parking floor. For another example, the first message may indicate, by indicating first longitude and latitude information and first altitude information or in another manner, the parking location determined based on the GNSS signal.

In some possible implementations, the first message may be an encrypted message.

For example, to protect communication security, the message indicating the parking location may be encrypted based on a first key. For example, when there is an association relationship between the vehicle and the terminal device like the mobile phone, for example, the terminal device is connected to the vehicle through Bluetooth or the like, or the mobile phone and the vehicle log in to a same user account, the terminal device and/or the cloud server and the vehicle may exchange private keys in an asymmetric encryption manner or the like, so that the terminal device/cloud server may decrypt the first message.

In some possible implementations, the sending a first message may include: sending the first message when no user is detected in a cockpit of the vehicle. For example, whether there is a user in the cockpit may be determined based on information captured by a vehicle-mounted sensor like a seat pressure sensor or a camera sensor in the cockpit.

In this embodiment of this application, the first message is sent when no user is detected in the cockpit of the vehicle, so that a frequency of sending the first message can be reduced, and traffic consumption of the vehicle can be reduced.

For example, the first message may be sent after it is determined that the vehicle completes parking.

For example, the terminal device like the mobile phone may send parking location request information. Correspondingly, the vehicle may receive the parking location request information, and further, may send the first message based on the parking location request information. For example, the parking location request information may include identity information of a requester. In this case, a permission of the requester may be determined based on the identity information of the requester, and the first message may be determined based on the permission of the requester. For example, when it is determined that the requester is an unauthorized user, the first message may not be sent. For another example, when it is determined that the requester is a vehicle owner, the first message may include an image and a sign of the parking space, an image and a sign of the parking zone, information about the parking floor, and the like. For another example, when it is determined that the requester has only some permissions, the first message may be determined based on the permissions of the requester. For another example, the first message may be determined based on request content of the requester. For another example, when it is determined that the parking location request information is triggered by the cloud server, the first message may include an image and a sign of the parking space, an image and a sign of the parking zone, information about the parking floor, and the like.

In some possible implementations, the determining a parking location positioning mode based on signal quality of the GNSS signal may include: when the signal quality of the GNSS signal is greater than or equal to a first threshold, determining that the parking location positioning mode is the first positioning mode; or when the signal quality of the GNSS signal is less than or equal to the first threshold, determining that the parking location positioning mode is the second positioning mode.

For example, for description of the signal quality of the GNSS signal, the first threshold, and the like, refer to the method 1100 and the like.

In some possible implementations, the method may further include: obtaining a first status parameter, where the first status parameter may include at least one of a distance between the vehicle and an entrance of the parking lot, a vehicle speed of the vehicle, and the signal quality of the GNSS signal; performing parking lot marker detection when the first status parameter meets a preset condition; and when a parking lot marker is detected, determining that the vehicle is located in the parking lot.

In this embodiment of this application, when the first status parameter is less than or equal to the first threshold, the environment data is obtained to perform parking lot marker detection. In this way, in a process of determining whether the vehicle is located in the parking lot area, dependence on the sensor to capture the environment data can be reduced, and working time of the sensor can be reduced. This reduces power consumption of the sensor, and also helps the vehicle enable a corresponding functional module after it is determined that the vehicle is located in the parking lot area.

It should be understood that the methods described in FIG. 28 and FIG. 29 are merely examples for describing a manner of combining the methods 1100, 1200, 1400, 1500, 1700, 1800, 1900, 2200 and 2400. The foregoing methods may alternatively be combined in another manner. This is not limited in embodiments of this application.

An embodiment of this application further provides an apparatus configured to implement any one of the foregoing methods. For example, the apparatus is provided and includes units configured to implement steps performed by a chip, a vehicle, an in-vehicle infotainment system, and the like in any one of the foregoing methods. An embodiment of this application also provides an apparatus configured to implement any one of the foregoing methods 1100 to 2700 and a method combining the foregoing methods 1100 to 2700. For brevity, the following describes only apparatuses for implementing some of the foregoing methods. For example, FIG. 30 is a diagram of a structure of an apparatus for determining that a vehicle is located in a parking lot area according to an embodiment of this application. The apparatus 2800 may include an obtaining module 2810 and a processing module 2820.

The obtaining module 2810 is configured to obtain a first status parameter.

For example, the first status parameter may include at least one of signal quality of a GNSS signal, a vehicle speed, and a distance between the vehicle and an entrance of a parking lot, and may also include another parameter, for example, longitude and latitude information.

For example, for description of the first status parameter, refer to the method 1700 and the like.

For example, the obtaining module 2810 may be further configured to obtain data captured by a sensing sensor, where the data may be used for parking lot marker detection. For example, the data captured by the sensing sensor may be obtained from the sensing sensor or another apparatus, or may be data captured by a plurality of sensors by performing filtering, fusion, feature extraction, or the like.

The processing module 2820 is configured to perform parking lot marker detection when the first status parameter is less than or equal to a first threshold; and is further configured to: when a parking lot marker is detected, determine that the vehicle is located in the parking lot area.

For example, the corresponding first threshold may be determined based on the first status parameter. For example, when the first status parameter includes signal quality of a GNSS signal, the first threshold may include a threshold related to the signal quality of the GNSS signal.

For example, the processing module 2820 may perform parking lot marker detection based on the data captured by the sensing sensor. For example, the parking lot marker may be an object that does not move in the parking lot area. For example, the parking lot marker is a parking lot barrier gate, a parking space, and a guidance sign of a parking lot.

For example, for description of detecting the parking lot marker, refer to step S1720 and step S1730, and the like.

It should be understood that the apparatus shown in FIG. 30 may be configured to implement the method 1700.

For example, FIG. 31 is a diagram of a structure of a sensor startup apparatus according to an embodiment of this application. The apparatus 2900 may include an obtaining module 2910 and a processing module 2920.

The obtaining module 2910 may be configured to obtain a voice instruction or user operation information.

The processing module 2920 may be configured to: detect a parking voice instruction based on the voice instruction, and start one or more sensing sensors when the parking voice instruction is detected; or detect a first operation based on the user operation information, where the first operation indicates that a user has a parking intention, and start one or more sensing sensors when the first operation is detected.

For example, for description of the parking voice instruction and the first operation, refer to step S1820 and the like.

The obtaining module 2910 may be further configured to obtain data captured by the one or more sensing sensors.

The processing module 2920 may be further configured to determine, based on the data captured by the sensing sensors, an environment in which a vehicle is located in a parking environment.

For example, when the data includes an image of at least one parking space including a target parking space, the processing module 2920 may determine a sign of the target parking space based on the image. When the data includes an image of a marker in a parking area, the processing module 2920 may determine the parking area based on the image, for example, determine a sign of the parking area.

It should be understood that the apparatus 2900 may be configured to implement the method 1800.

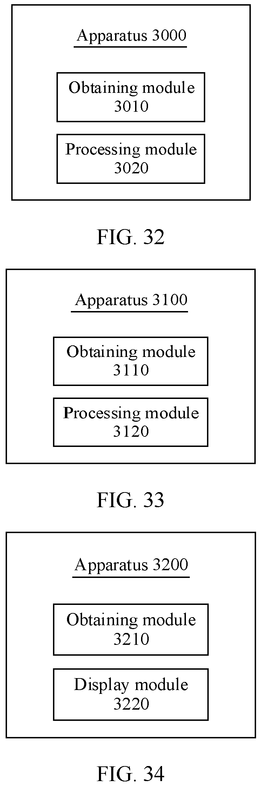

For example, FIG. 32 is a diagram of a structure of an apparatus for recognizing a sign of a parking space according to an embodiment of this application. The apparatus 3000 may include an obtaining module 3010 and a processing module 3020.

The obtaining module 3010 may be configured to obtain a first parking space image. The processing module 3020 may be configured to determine a sign of a target parking space based on the first parking space image.

For example, the first parking space image may include at least one parking space including the target parking space.

In some possible implementations, the obtaining module 3010 may be further configured to obtain parking space indication information, where the parking space indication information may indicate an area in which the target parking space is located. The processing module 3020 may be specifically configured to determine the sign of the target parking space based on the parking space indication information and the first parking space image. For example, when the image includes a plurality of parking spaces including the target parking space, the target parking space in the image may be determined based on the parking space indication information, and then the sign of the target parking space is determined.

In some possible implementations, the processing module 3020 may be further configured to determine a first proportion based on the first parking space image, where the first proportion may indicate a proportion of the target parking space in the first parking space image. The processing module 3020 may be specifically configured to determine the sign of the target parking space based on the first parking space image and the first proportion. For example, an image shown in (a) in FIG. 20 may be obtained. Proportions of a plurality of parking spaces in the image are determined, for example, as shown in (b) in FIG. 20, and then it is determined that the target parking space is an area indicated by the mark 2051 in (a) in FIG. 20. In this way, the sign of the target parking space may be determined. For another example, when the image including the plurality of parking spaces is captured by a fisheye camera, because distortion and the like may occur, the first proportion may be determined after distortion correction or another processing is performed on the image, and then the target parking space is determined accordingly. It should be understood that the foregoing method for determining an image of the target parking space is merely an example. This is not limited in embodiments of this application.

For example, the processing module 3020 may be specifically configured to: determine one or more parking space information texts based on the first parking space image; and determine the sign of the target parking space based on confidence of the parking space information text.

For example, the obtaining module 3010 may be configured to obtain images of the target parking space at a plurality of moments, and the processing module 3110 may be configured to determine the sign of the target parking space based on the images of the target parking space at the plurality of moments. For example, in a process of parking a vehicle, a camera sensor may capture a video of the target parking space within first duration. The video may include images at a plurality of moments, and the sign of the target parking space may be determined based on the plurality of images. This can avoid a recognition error caused by an incomplete sign in a single image, and can improve accuracy of the recognized sign. The first duration may be any duration, for example, 5 seconds or 13 seconds. This is not limited in embodiments of this application.

For example, the processing module 3020 may be further configured to control a vehicle-mounted display to display the image of the target parking space. For example, after the target parking space is determined, the interface shown in (a) in FIG. 20 may be displayed on a display like a central display screen, to indicate the target parking space. For another example, only a part in which the sign of the target parking space is located in the image of the target parking space may be displayed on the vehicle-mounted display. In other words, only an image of the sign of the target parking space may be displayed. For another example, after the sign of the target parking space is determined, the sign of the target parking space may be displayed on a display like a central display screen, for example, the interface shown in FIG. 21. It should be understood that the foregoing description of displaying the image and/or the sign of the target parking space is merely an example for ease of description. This is not limited in embodiments of this application.

For example, the apparatus 3000 may further include a sending module 3030. The sending module 3030 may be configured to send a first message, where the first message may indicate the target parking space.

It should be understood that the foregoing description of the apparatus for recognizing the sign of the target parking space is merely an example. This is not limited in embodiments of this application.

It should be understood that the apparatus 3000 may be configured to implement the method 1900. For description of the target parking space, the sign of the target parking space, and the like, refer to the method 1900 and the like.

For example, FIG. 33 is a diagram of a structure of an apparatus for recognizing a parking area according to an embodiment of this application. The apparatus 3100 may include an obtaining module 3110 and a processing module 3120.

The obtaining module 3110 may be configured to obtain ambient environment information, where the ambient environment information may be used to detect a marker in the parking area; and may be further configured to obtain an image of the marker when the marker is detected.

The processing module 3120 may be configured to determine the parking area based on the image of the marker.

For example, the processing module 3120 may further detect the marker in the parking area based on the ambient environment information.

In some possible implementations, the processing module 3120 may be configured to determine a sign of the parking area based on the image of the marker in the parking area.

For example, the processing module 3120 may be configured to: determine one or more texts based on the image of the marker, and determine the sign of the parking area based on confidence of the text.

It should be understood that, for description of determining the sign of the parking area based on the confidence of the text, reference may be made to step S1730 and the like.

In some possible implementations, the obtaining module 3110 may be further configured to obtain a sign of a target parking space, where the sign of the target parking space may include an area keyword. The processing module 3120 may be configured to determine the parking area based on the area keyword and the image of the marker.

For example, when a plurality of texts may be determined based on the image of the marker, the processing module 3120 may determine the sign of the parking area based on the plurality of texts and the area keyword. For example, for description of the area keyword, refer to step S1730 and the like.

In some possible implementations, after the target parking space is determined, when a plurality of markers in the parking area are detected, the processing module 3120 may determine, based on a distance between each of the plurality of markers and the target parking space, the marker in the parking area to which the target parking space belongs.

For example, the distance between each of the plurality of markers and the target parking space may be an actual distance, or may be a virtual length. For example, the distance between each of the plurality of markers in the parking area and the target parking space in the image may be determined based on an image of an AVM system. For another example, the actual distance between each of the plurality of markers and the target parking space may be determined based on data captured by a radar. It should be understood that the foregoing example is merely used for description, and this is not limited in embodiments of this application.

For example, the obtaining module 3110 may be configured to obtain images of the marker in the parking area at a plurality of moments, and the processing module 3120 may be configured to determine the sign of the parking area based on the images of the marker in the parking area at the plurality of moments. For example, in a process of parking a vehicle, a camera sensor may capture a video image of the marker in the parking area within a period of time, and may determine the sign of the parking area based on the images of the marker in the parking area at the plurality of moments in the video image. This can avoid a recognition error caused by an incomplete sign in a single image, and can improve accuracy of the recognized sign.

For example, the processing module 3120 may be further configured to control a vehicle-mounted display to display the sign of the parking area, and may also be configured to display the image of the marker in the parking area.

In some possible implementations, the apparatus 3100 may further include a sending module 3130. The sending module 3130 may be configured to send a second message, where the second message may indicate the parking area.

It should be understood that the apparatus 3100 may be configured to implement the method 1700. For the foregoing description of the marker in the parking area and the like, refer to the method 1700 and the like.

For example, FIG. 34 is a diagram of a structure of an interaction apparatus for indicating a parking location according to an embodiment of this application. The apparatus 3200 may include an obtaining module 3210 and a display module 3220.

The obtaining module 3210 may be configured to obtain vehicle location information. For example, the obtaining module may be configured to obtain a first message. The first message may include parking location information of a vehicle. For example, the parking location information may indicate at least one of information about a parking floor, information about a parking zone, and information about a parking space of the vehicle. For another example, the parking location information may indicate information about a parking floor and/or information about a parking zone of the vehicle, and information about a parking space.

The display module 3220 may be configured to display a first interface, where the first interface may indicate the parking location.

In some possible implementations, the display module 3220 may be configured to display information about a parking area.

In some possible implementations, the display module 3220 may be configured to display information about a target parking space.

In some possible implementations, the display module 3220 may be configured to display the information about the parking floor.

In some possible implementations, the display module 3220 may be configured to display the parking location indicated by first latitude and longitude information.

In some possible implementations, the display module 3220 may be configured to display an image of a marker in a parking area.

In some possible implementations, the display module 3220 may be configured to display an image of a target parking space.

In some possible implementations, the display module 3220 may display a vehicle search navigation route, and the route may indicate a navigation route from a current location of a user to the parking location of the vehicle.

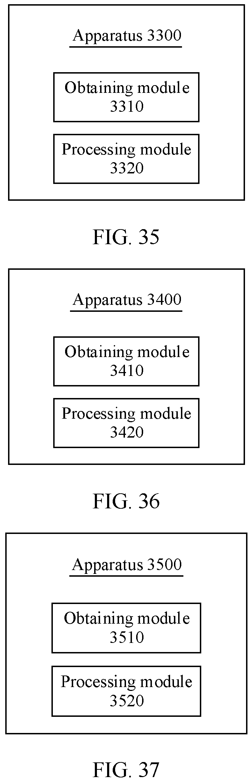

For example, FIG. 35 is a diagram of a structure of a vehicle location determining apparatus according to an embodiment of this application. The apparatus 3300 may include an obtaining module 3310 and a processing module 3320.

The obtaining module 3310 may be configured to: when a vehicle enters a parking lot, obtain motion status information and/or ambient environment information of the vehicle in a motion process of the vehicle. The processing module 3320 may be configured to determine, based on the motion status information and/or the ambient environment information of the vehicle, an area in which the vehicle is located in the parking lot.

For example, for description of the motion status information and the ambient environment information of the vehicle, refer to the method 2700 and the like.

For example, the obtaining module 3310 may be configured to obtain a GNSS signal. The processing module 3320 may be configured to determine a parking location positioning mode based on signal quality of the GNSS signal.

For example, during working in a first positioning mode, the processing module 3310 may be configured to determine, based on the GNSS signal, the area in which the vehicle is located in the parking lot; or when it is determined that the parking location positioning mode is a second positioning mode, the processing module 3310 may be configured to determine, based on the motion status information and/or the ambient environment information of the vehicle, the area in which the vehicle is located in the parking lot.

For example, a floor on which, a parking zone in which, a parking space in which, and the like in which the vehicle is located in the parking lot may be determined based on the motion status information and/or the ambient environment information of the vehicle.

In some possible implementations, the parking location positioning mode is the second positioning mode, and the processing module 3320 may be specifically configured to: determine, based on the ambient environment information, a first intersection through which the vehicle passes, where the first intersection may include an intersection between an inter-floor passage and a floor connected to the inter-floor passage; and determine, based on the first intersection through which the vehicle passes, a parking floor on which the vehicle is located in the parking lot, where the parking floor is a floor on which the vehicle is located when the vehicle is in a parking pose.

For example, for description of the first intersection, reference may be made to step S1510 and the like.

In some possible implementations, the obtaining module 3310 may be configured to obtain an image of a first passage, where the first passage may be the inter-floor passage through which the vehicle passes. The processing module 3320 may be specifically configured to: determine a passage guidance sign based on the image of the first passage; and determine the parking floor based on the passage guidance sign.

For example, for description of the first passage and the passage guidance sign, refer to the method 1400 and the like.

In some possible implementations, the processing module 3320 may be specifically configured to: start a second sensor when it is determined that the vehicle is located in the inter-floor passage; and control the second sensor to capture the ambient environment information.

For example, the obtaining module 3310 may directly obtain the ambient environment information captured by the second sensor, or may obtain, from another module, the ambient environment information captured by the second sensor, or may obtain, from another module, the ambient environment information obtained by performing data processing like filtering. This is not limited in this application.

For example, for description of determining that the vehicle is located in the inter-floor passage, refer to the method 1200 and the like.

In some possible implementations, the obtaining module 3310 may be configured to obtain pitch angle information of the vehicle within first duration. The processing module 3320 may be further configured to: determine, based on the pitch angle information of the vehicle within the first duration, a quantity of inter-floor passages through which the vehicle passes; and determine the parking floor based on the quantity of inter-floor passages through which the vehicle passes.

For example, for description of the first duration, refer to step S1210 and the like.

In some possible implementations, the processing module 3320 may be configured to: detect a marker in a parking zone based on the ambient environment information, where the marker may include a column; and determine the parking zone based on an image of the marker.

For example, for description of the marker in the parking zone and a method for determining the parking zone, refer to the method 2200 and the like.

In some possible implementations, the obtaining module 3310 may be configured to obtain a first parking space image, where the first parking space image includes a first parking space. The processing module 3320 may be specifically configured to determine a sign of the first parking space based on the first parking space image.

For example, for description of determining the sign of the first parking space, refer to step 1920 and the like.

For example, the processing module 3320 may be further configured to determine an area keyword based on the sign of the first parking space. For example, for description of the area keyword, refer to the method 2200.

In some possible implementations, the sign of the first parking space includes the area keyword, and the processing module 3320 may be specifically configured to determine a parking area based on the image of the marker and the area keyword.

In some possible implementations, the obtaining module 3310 may be further configured to obtain a first instruction, where the first instruction indicates that a user of the vehicle has a parking intention. The obtaining module 3310 may be specifically configured to obtain the motion status information and/or the ambient environment information of the vehicle based on the first instruction.

For example, for description of the first instruction, refer to the method 2700 and the like.

In some possible implementations, the obtaining module 3310 may be specifically configured to obtain the motion status information and/or the ambient environment information of the vehicle when it is detected that the vehicle enters a parking state.

For example, for description of entering the parking state by the vehicle, refer to the method 2700 and the like.

In some possible implementations, when it is determined that the user has the parking intention, for example, when the first instruction is detected, and it is detected that the vehicle enters the parking state, the processing module 3320 may control a first sensor to be started, and control the first sensor to capture ambient environment data. For example, after entering the parking lot, the vehicle may obtain coarse-grained ambient environment information by using fewer cameras and radar sensors. When it is determined that the user has the parking intention, more sensors may be started to obtain more detailed ambient environment information.

In some possible implementations, the apparatus 3300 may further include a sending module 3330. The sending module may be specifically configured to send a first message, where the first message may indicate at least one of the parking area, the first parking space, and the parking floor.

For example, for description of first information, refer to the method 1100 and the like.

In some possible implementations, the sending module 3330 may send the first message when it is detected that the vehicle completes parking. For example, the first message may be sent when it is detected that the vehicle is powered off, or it is detected that a parking brake of the vehicle is in a working state, or it is detected that a gear of the vehicle is a parking gear, or it is detected that the vehicle is turned off, or the like. For another example, the first message may be sent when no user is detected in a cockpit of the vehicle.

For example, the processing module 3320 may also be configured to detect whether the vehicle completes parking, for example, may determine, based on a control signal of the vehicle, whether the vehicle completes parking.

In some possible implementations, the first message may be an encrypted message. For example, the processing module 3320 may be configured to encrypt the first message.

For example, the first message may be encrypted through asymmetric encryption and symmetric encryption. It should be understood that for a method for encrypting the first message, refer to a related technology. This is not limited in embodiments of this application.

For example, the apparatus may further include a receiving module 3340. The receiving module 3340 may be configured to receive parking location request information, where the parking location request information may be used to request a parking location of the vehicle. The sending module 3330 may be configured to send the first message based on the parking location request information.

For example, the parking location request information carries identity information of a requester, and the sending module 3330 may be specifically configured to send the first message based on the identity information of the requester.

For example, the processing module 3320 may determine content included in the first message based on the identity information of the requester.

For example, for description of sending the first message based on the parking location request information, refer to the method 2700 and the like.

In some possible implementations, the processing module 3320 may be specifically configured to: when the signal quality of the GNSS signal is greater than or equal to a first threshold, determine that the parking location positioning mode is the first positioning mode; or when the signal quality of the GNSS signal is less than or equal to the first threshold, determine that the parking location positioning mode is the second positioning mode.

For example, for description of the first threshold and the like, refer to the method 1100 and the like.

In some possible implementations, the obtaining module 3310 may be further configured to obtain a first status parameter, where the first status parameter may include at least one of a distance between the vehicle and an entrance of the parking lot, a vehicle speed, and the signal quality of the GNSS signal. The processing module 3320 may be further configured to: perform parking lot marker detection when the first status parameter meets a preset condition; and when a parking lot marker is detected, determine that the vehicle is located in a parking lot area.

It should be understood that the apparatus 3300 may be configured to implement the method 2700.

For example, FIG. 36 is a diagram of a structure of an apparatus for determining a parking floor according to an embodiment of this application. The apparatus may include an obtaining module 3410 and a processing module 3420.

The obtaining module 3410 may be configured to obtain ambient environment information. The processing module 3420 may be configured to: determine, based on the ambient environment information, a first intersection through which a vehicle passes; and determine the parking floor based on the first intersection through which the vehicle passes.

For example, for description of the first intersection, refer to step S1510 and the like.

**In** some possible implementations, the obtaining module 3410 may be specifically configured to obtain an image of an inter-floor passage. The processing module 3420 may be specifically configured to: determine an entrance/exit of the inter-floor passage based on the image of the inter-floor passage; and determine the first intersection based on the entrance/exit of the inter-floor passage.

For example, when the vehicle is located in the inter-floor passage, the exit of the inter-floor passage may be determined based on the image of the inter-floor passage, and then the first intersection is determined. Alternatively, when the vehicle is located on a floor, the entrance of the inter-floor passage may be determined based on data captured by a sensing sensor, and then the first entrance is determined.

For example, the first intersection may be determined based on an image captured by the sensor, for example, by performing feature extraction and recognition.

In some possible implementations, the obtaining module 3410 may be further configured to obtain pitch angle information of the vehicle, and the processing module 3420 may be configured to determine, based on the pitch angle information of the vehicle, that the vehicle is located in the inter-floor passage. Further, the processing module 3420 may be further configured to: start a first sensor when it is determined that the vehicle is located in the inter-floor passage; and control the first sensor to capture the ambient environment information.

For example, the processing module 3420 may alternatively determine, based on acceleration information of the vehicle, data captured by a ramp sensor, and the like, whether the vehicle is located in the passage.

For example, a relative change of a floor may be determined based on the first intersection. It should be understood that, for a method for determining the relative change of the floor, reference may be made to step S1520 or the like.

In some possible implementations, the processing module 3420 may determine the first intersection based on the pitch angle information of the vehicle and a plurality of intersections through which the vehicle passes.

In some possible implementations, the apparatus may further include a sending module 3430. The sending module 3430 may be configured to send parking floor indication information after the parking floor is determined, where the parking floor indication information may indicate the parking floor. Correspondingly, a terminal device like a mobile phone and/or a cloud server may obtain the parking floor indication information from the vehicle, a network device, or another device.

It should be understood that the apparatus 3400 may be configured to implement the method 1500. According to the apparatus provided in this embodiment of this application, the first intersection is determined, so that interference in parking floor recognition from a building structure of a parking lot can be reduced, and accuracy of the determined parking floor can be improved.

For example, FIG. 37 is a diagram of another apparatus for determining a parking floor according to an embodiment of this application. The apparatus may include an obtaining module 3510 and a processing module 3520.

The obtaining module 3510 may be configured to obtain pitch angle information of a vehicle. The processing module 3520 may be configured to determine a parking floor based on the pitch angle information of the vehicle.

In some possible implementations, the obtaining module 3510 may be specifically configured to obtain pitch angle information within first duration, where a start moment of the first duration may be earlier than or equal to a moment at which the vehicle travels into the 1^{st} inter-floor passage, and an end moment of the first duration may be equal to or later than a moment at which the vehicle travels onto the parking floor. The processing module 3520 may be specifically configured to determine the parking floor based on the pitch angle information within the first duration.

For example, real-time pitch angle information of the vehicle may be determined based on data captured by an IMU. For example, based on the real-time pitch angle information of the vehicle, the moment at which the vehicle travels into the 1^{st} inter-floor passage may be determined, and a moment at which the vehicle travels out of the inter-floor passage for the last time before the vehicle is in a parking pose may be determined. Correspondingly, the obtaining module 3510 may obtain pitch angle information of the vehicle within the duration, and then the processing module 3520 may determine the parking floor accordingly. For another example, a moment at which the vehicle travels into a parking lot area may be determined through parking lot marker detection. In this case, the obtaining module 3510 may obtain pitch angle information of the vehicle after the moment. For another example, the apparatus 3500 may include the IMU. In this case, the pitch angle information of the vehicle may be obtained based on the data captured by the IMU. Alternatively, the apparatus 3500 may not include the IMU. In this case, the pitch angle information of the vehicle may be obtained through communication inside the vehicle. This is not limited in embodiments of this application. For example, the apparatus is a cockpit domain controller. The cockpit domain controller may include the IMU, or may not include the IMU. When the cockpit domain controller does not include the IMU, for example, when an autonomous driving domain controller includes the IMU, the pitch angle information of the vehicle may be obtained through communication inside the apparatus. It should be understood that the foregoing description of the first duration and the pitch angle information of the vehicle is merely an example for ease of description. This is not limited in embodiments of this application.

For example, for a manner of obtaining a pitch angle of the vehicle, refer to another related technology. This is not limited in embodiments of this application.

It should be understood that the apparatus 3500 may be configured to implement the method 1200. In this embodiment of this application, the parking floor is determined based on the pitch angle information of the vehicle. Because obtaining of the pitch angle information may not depend on a radar sensor or a camera sensor, the method is applicable to a vehicle with low configuration. In addition, resource consumption of the radar sensor, the camera sensor, and the like in a process of determining the parking location can be reduced. For an electric vehicle, a new energy vehicle, and the like, power consumption of the vehicle can be reduced, and an endurance mileage of the vehicle can be increased.

It should be understood that operations/behavior such as obtaining, storing, using, and processing user information in this application are compliant use in compliance with local laws and regulations. For example, operations such as obtaining, storing, using, and processing user information in this patent indicate operations performed when personal consent has been obtained.

It should be understood that division of the units in the apparatuses is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor, and the memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units in the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units in the apparatuses may be integrated, or may be implemented independently. In an implementation, the units are integrated together and implemented in a form of a system-on-a-chip (system-on-a-chip, SOC). The SOC may include at least one processor, configured to implement any one of the methods or implement functions of the units in the apparatuses. Types of the at least one processor may be different, for example, the at least one processor includes a CPU and an FPGA, a CPU and an artificial intelligence processor, or a CPU and a GPU.

For example, in a specific implementation process, the operations performed by the obtaining module 3610 and the processing module 3620 may be performed by a same processor, or may be performed by different processors, for example, separately performed by a plurality of processors. In an example, one or more processors may be connected to one or more sensors in the sensing system 120 in FIG. 1, and obtain ambient environment information from the one or more sensors. In another example, one or more processors may determine, based on processed ambient environment information, an area in which the vehicle is located in the parking lot. The processor for determining the area in which the vehicle is located in the parking lot and the processor for obtaining the ambient environment information may be a same processor, or may be different processors. The plurality of processors may be connected to each other through an internal circuit, and may transfer a message through the internal circuit. For example, in a specific implementation process, the one or more processors may be a processor disposed in an in-vehicle infotainment, or a processor disposed in another vehicle-mounted terminal. For example, in a specific implementation process, the apparatus 3300 may be a chip disposed in an in-vehicle infotainment or another vehicle-mounted terminal. For example, in a specific implementation process, the apparatus 3300 may be the computing platform 150 shown in FIG. 1 disposed in the vehicle.

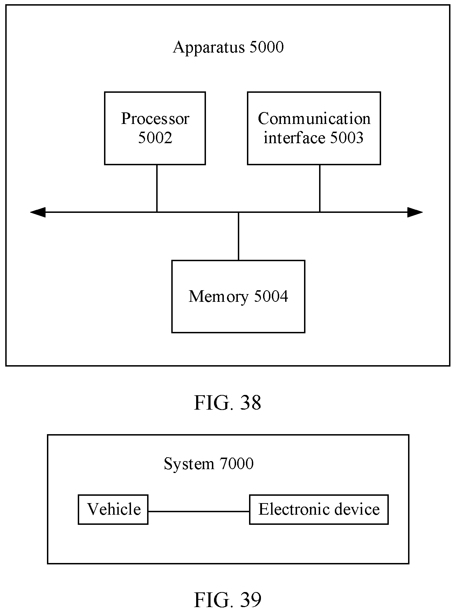

For example, FIG. 38 is a diagram of a structure of an apparatus 5000 according to an embodiment of this application. The apparatus 5000 includes a processor 5002, a communication interface 5003, and a memory 5004. An example of the apparatus 5000 is a chip. Another example of the apparatus 5000 is a computing device.

The processor 5002, the memory 5004, and the communication interface 5003 may communicate with each other through a bus. The memory 5004 stores executable code, and the processor 5002 reads the executable code in the memory 5004 to perform a corresponding method. The memory 5004 may further include a software module required for another running process, for example, an operating system.

For example, the executable code in the memory 5004 is used to implement one or more methods shown in FIG. 11 to FIG. 27(a) and FIG. 27(b). The processor 5002 reads the executable code in the memory 5004, to perform the one or more methods shown in FIG. 11 to FIG. 27(a) and FIG. 27(b).

The processor 5002 may be a CPU. The memory 5004 may include a volatile memory (volatile memory, VM), for example, a random access memory. The memory 5004 may further include a non-volatile memory (non-volatile memory, NVM), for example, a read-only memory, a flash memory, a hard disk drive (hard disk drive, HDD), or a solid-state disk (solid-state disk, SSD).

An embodiment of this application further provides a computer program product. The computer program product includes computer program code. When the computer program code is run on a computer, the computer is enabled to perform the method 2700 and any possible implementation of the method 2700.

An embodiment of this application further provides a computer-readable medium. The computer-readable medium stores program code. When the computer program code is run on a computer, the computer is enabled to perform the method 2700 and any possible implementation of the method 2700.

For example, the computer-readable medium may include any medium that can store program code, like a USB flash drive, a removable hard disk, a read-only memory, a random access memory, a magnetic disk, or an optical disc. This is not limited in embodiments of this application. The computer-readable medium may store instructions of the obtaining module 3310 and/or the processing module 3320. When the program code is run on the computer, the computer may be configured to perform an operation performed by the obtaining module 3310 and/or the processing module 3320.

For example, FIG. 39 is a diagram of a system 7000 according to an embodiment of this application. As shown in FIG. 39, the system 7000 may include a vehicle 7100 and an electronic device 7200. The vehicle 7100 may include the apparatus shown in any one of FIG. 30 to FIG. 33 or FIG. 35 to FIG. 38, and the electronic device 7200 may be the terminal device like the mobile phone in the foregoing method embodiments. The vehicle 7100 may be configured to send a first message, where the first message may include parking location information of the vehicle. The electronic device 7200 may be configured to: receive the first message, and control display of a parking location of the vehicle based on the first message.

For example, the parking location of the vehicle may be displayed on a display apparatus associated with the electronic device 7200. For example, when the electronic device is an electronic device having a display, like a mobile phone, a smartwatch, or a tablet computer, the parking location of the vehicle may be displayed on the display of the electronic device. For example, interfaces shown in FIG. 25, FIG. 26(a) to FIG. 26(c), and FIG. 27(a) and FIG. 27(b) may be displayed. For another example, when the electronic device is connected to an external display apparatus, the external display apparatus may be controlled to display the parking location of the vehicle.

For example, the electronic device 7200 may be further configured to send parking location request information. The vehicle 7100 may be configured to receive the parking location request information, and may be configured to send the first message based on the parking location request information.

The term "at least one" in this application means one or more, and the term "a plurality of" in this application means two or more.

Terms such as "first" and "second" in this application are used to distinguish between same or similar items with basically same roles and functions. It should be understood that there is no logical or timing dependency between "first", "second", and "n^{th}", and neither a quantity nor an execution sequence is limited. For example, the "first sensor" and the "second sensor" are merely used for differentiation, and do not mean that priorities of the "first sensor" and the "second sensor" are different.

It should be understood that sequence numbers of processes do not mean execution sequences in embodiments of this application. The execution sequences of the processes shall be determined based on functions and internal logic of the processes, and shall not be construed as any limitation on the implementation processes of embodiments of this application.

It should be understood that determining B based on A does not mean that B is determined based on only A, and B may alternatively be determined based on A and/or other information.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be understood that sequence numbers of the foregoing processes do not mean execution sequences in embodiments of this application. The execution sequences of the processes shall be determined based on functions and internal logic of the processes, and shall not be construed as any limitation on the implementation processes of embodiments of this application.

The terms "component", "module", and "system" and the like used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, in a distributed system, and/or across a network like the Internet interacting with another system by using a signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and parts displayed as units may or may not be physical units, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash disk, a removable hard disk, a read-only memory, a random access memory, a magnetic disk, or an optical disc.

The foregoing description is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A parking location determining method, comprising:
when a vehicle enters a parking lot, obtaining motion status information and/or ambient environment information of the vehicle in a motion process of the vehicle; and
determining, based on the motion status information and/or the ambient environment information of the vehicle, an area in which the vehicle is located in the parking lot.

2. The method according to claim 1, wherein the method further comprises:
obtaining a global navigation satellite system GNSS signal; and
determining a parking location positioning mode based on signal quality of the GNSS signal, wherein the parking location positioning mode comprises a first positioning mode or a second positioning mode; and during working in the first positioning mode, the area in which the vehicle is located in the parking lot is determined based on the GNSS signal; and
the determining, based on the motion status information and/or the ambient environment information of the vehicle, an area in which the vehicle is located in the parking lot comprises:
when it is determined that the parking location positioning mode is the second positioning mode, determining, based on the motion status information and/or the ambient environment information of the vehicle, the area in which the vehicle is located in the parking lot.

3. The method according to claim 1 or 2, wherein the parking lot comprises an inter-floor passage, and the determining, based on the motion status information and/or the ambient environment information of the vehicle, an area in which the vehicle is located in the parking lot comprises:
determining, based on the ambient environment information, a first intersection through which the vehicle passes, wherein the first intersection comprises an intersection between the inter-floor passage and a floor connected to the inter-floor passage; and
determining, based on the first intersection through which the vehicle passes, a parking floor on which the vehicle is located in the parking lot, wherein the parking floor is a floor on which the vehicle is located when the vehicle is in a parking pose.

4. The method according to any one of claims 1 to 3, wherein the ambient environment information comprises an image of a first passage, the first passage comprises the inter-floor passage through which the vehicle passes, and the determining, based on the motion status information and/or the ambient environment information of the vehicle, an area in which the vehicle is located in the parking lot comprises:
determining a passage guidance sign based on the image of the first passage; and
determining the parking floor based on the passage guidance sign.

5. The method according to any one of claims 1 to 4, wherein the motion status information of the vehicle comprises pitch angle information of the vehicle within first duration, and the determining, based on the motion status information and/or the ambient environment information of the vehicle, an area in which the vehicle is located in the parking lot comprises:
determining, based on the pitch angle information of the vehicle within the first duration, a quantity of inter-floor passages through which the vehicle passes, wherein a start moment of the first duration is earlier than or equal to a moment at which the vehicle travels into the 1^{st} inter-floor passage, and an end moment of the first duration is equal to or later than a moment at which the vehicle travels onto the parking floor; and
determining the parking floor based on the quantity of inter-floor passages through which the vehicle passes.

6. The method according to any one of claims 1 to 5, wherein the determining, based on the motion status information and/or the ambient environment information of the vehicle, an area in which the vehicle is located in the parking lot comprises:
detecting a marker in a parking zone based on the ambient environment information; and
determining the parking zone based on an image of the marker.

7. The method according to any one of claims 1 to 6, wherein the ambient environment information comprises a first parking space image, the first parking space image comprises a first parking space, and the first parking space comprises a parking space in which the vehicle is located when the vehicle is in the parking pose; and the determining, based on the motion status information and/or the ambient environment information of the vehicle, an area in which the vehicle is located in the parking lot comprises:
determining a sign of the first parking space based on the first parking space image.

8. The method according to claim 7, wherein the sign of the first parking space comprises an area keyword, and the method further comprises:
determining the parking zone based on the image of the marker and the area keyword.

9. The method according to any one of claims 1 to 8, wherein the obtaining motion status information and/or ambient environment information of the vehicle comprises:
obtaining a first instruction, wherein the first instruction indicates that a user of the vehicle has a parking intention; and
obtaining the motion status information and/or the ambient environment information of the vehicle based on the first instruction.

10. The method according to any one of claims 1 to 9, wherein the obtaining motion status information and/or ambient environment information of the vehicle comprises:
obtaining the motion status information and/or the ambient environment information of the vehicle when it is detected that the vehicle enters a parking state.

11. The method according to any one of claims 3 to 10, wherein the method further comprises:
sending a first message, wherein the first message indicates at least one of the parking zone, the first parking space, and the parking floor.

12. The method according to claim 11, wherein the sending a message comprises:
sending the first message when no user is detected in a cockpit of the vehicle.

13. The method according to any one of claims 2 to 12, wherein the determining a parking location positioning mode based on signal quality of the GNSS signal comprises:
when the signal quality of the GNSS signal is greater than or equal to a first threshold, determining that the parking location positioning mode is the first positioning mode; or
when the signal quality of the GNSS signal is less than or equal to the first threshold, determining that the parking location positioning mode is the second positioning mode.

14. The method according to any one of claims 1 to 13, wherein the method further comprises:
obtaining a first status parameter, wherein the first status parameter comprises at least one of a distance between the vehicle and an entrance of the parking lot, a vehicle speed of the vehicle, and the signal quality of the GNSS signal;
performing parking lot marker detection when the first status parameter meets a preset condition; and
when a parking lot marker is detected, determining that the vehicle is located in the parking lot.

15. A vehicle location determining apparatus, comprising:
an obtaining module, configured to: when a vehicle enters a parking lot, obtain motion status information and/or ambient environment information of the vehicle in a motion process of the vehicle; and
a processing module, configured to determine, based on the motion status information and/or the ambient environment information of the vehicle, an area in which the vehicle is located in the parking lot.

16. The apparatus according to claim 15, wherein the obtaining module is further configured to:
obtain a global navigation satellite system GNSS signal;
the processing module is further configured to:
determine a parking location positioning mode based on signal quality of the GNSS signal, wherein the parking location positioning mode comprises a first positioning mode or a second positioning mode; and during working in the first positioning mode, the area in which the vehicle is located in the parking lot is determined based on the GNSS signal; and
the processing module is specifically configured to:
when it is determined that the parking location positioning mode is the second positioning mode, determine, based on the motion status information and/or the ambient environment information of the vehicle, the area in which the vehicle is located in the parking lot.

17. The apparatus according to claim 15 or 16, wherein the parking lot comprises an inter-floor passage, and the processing module is specifically configured to:
determine, based on the ambient environment information, a first intersection through which the vehicle passes, wherein the first intersection comprises an intersection between the inter-floor passage and a floor connected to the inter-floor passage; and
determine, based on the first intersection through which the vehicle passes, a parking floor on which the vehicle is located in the parking lot, wherein the parking floor is a floor on which the vehicle is located when the vehicle is in a parking pose.

18. The apparatus according to any one of claims 15 to 17, wherein the obtaining module is specifically configured to:
obtain an image of a first passage, wherein the first passage comprises the inter-floor passage through which the vehicle passes; and
the processing module is specifically configured to:
determine a passage guidance sign based on the image of the first passage; and
determine the parking floor based on the passage guidance sign.

19. The apparatus according to any one of claims 15 to 18, wherein the obtaining module is specifically configured to:
obtain pitch angle information of the vehicle within first duration, wherein a start moment of the first duration is earlier than or equal to a moment at which the vehicle travels into the 1 ^{st} inter-floor passage, and an end moment of the first duration is equal to or later than a moment at which the vehicle travels onto the parking floor; and
the processing module is specifically configured to:
determine, based on the pitch angle information of the vehicle within the first duration, a quantity of inter-floor passages through which the vehicle passes; and
determine the parking floor based on the quantity of inter-floor passages through which the vehicle passes.

20. The apparatus according to any one of claims 15 to 19, wherein the processing module is specifically configured to:
detect a marker in a parking zone based on the ambient environment information; and
determine the parking zone based on an image of the marker.

21. The apparatus according to any one of claims 15 to 20, wherein the obtaining module is specifically configured to:
obtain a first parking space image, wherein the first parking space image comprises a first parking space, and the first parking space comprises a parking space in which the vehicle is located when the vehicle is in the parking pose; and
the processing module is specifically configured to:
determine a sign of the first parking space based on the first parking space image.

22. The apparatus according to claim 21, wherein the sign of the first parking space comprises an area keyword, and the processing module is specifically configured to:
determine the parking zone based on the image of the marker and the area keyword.

23. The apparatus according to any one of claims 15 to 22, wherein the obtaining module is further configured to:
obtain a first instruction, wherein the first instruction indicates that a user of the vehicle has a parking intention; and
the obtaining module is specifically configured to:
obtain the motion status information and/or the ambient environment information of the vehicle based on the first instruction.

24. The apparatus according to any one of claims 15 to 23, wherein the obtaining module is further configured to:
obtain the motion status information and/or the ambient environment information of the vehicle when it is detected that the vehicle enters a parking state.

25. The apparatus according to any one of claims 15 to 24, wherein the apparatus further comprises a sending module, configured to:
send a first message, wherein the first message indicates at least one of the parking zone, the first parking space, and the parking floor.

26. The apparatus according to claim 25, wherein the sending module is specifically configured to:
send the first message when no user is detected in a cockpit of the vehicle.

27. The apparatus according to any one of claims 16 to 26, wherein the processing module is specifically configured to:
when the signal quality of the GNSS signal is greater than or equal to a first threshold, determine that the parking location positioning mode is the first positioning mode; or
when the signal quality of the GNSS signal is less than or equal to the first threshold, determine that the parking location positioning mode is the second positioning mode.

28. The apparatus according to any one of claims 15 to 27, wherein the obtaining module is further configured to:
obtain a first status parameter, wherein the first status parameter comprises at least one of a distance between the vehicle and an entrance of the parking lot, a vehicle speed of the vehicle, and the signal quality of the GNSS signal; and
the processing module is further configured to:
perform parking lot marker detection when the first status parameter meets a preset condition; and
when a parking lot marker is detected, determine that the vehicle is located in the parking lot.

29. An apparatus, comprising a processor and a memory, wherein the memory is configured to store program instructions, and the processor is configured to invoke the program instructions to perform the method according to any one of claims 1 to 14.

30. A computer program product, comprising computer program code, wherein when the computer program code is run on a computer, the computer is enabled to perform the method according to any one of claims 1 to 14.

31. A computer-readable storage medium, wherein the computer-readable medium stores program code, and when the program code is run on a computer, the computer is enabled to perform the method according to any one of claims 1 to 14.

32. A system, comprising a vehicle and an electronic device, wherein the vehicle comprises the apparatus according to any one of claims 15 to 29;
the vehicle is configured to:
send a first message, wherein the first message indicates parking location information of the vehicle; and
the electronic device is configured to:
receive the first message; and
control, based on the first message, display of a parking location of the vehicle.

33. The system according to claim 32, wherein the electronic device is further configured to:
send parking location request information, wherein the parking location request information is used to request the parking location information of the vehicle;
the vehicle is further configured to receive the parking location request information; and
the vehicle is specifically configured to:
send the first message based on the parking location request information.
